(19) Europäisches Patentamt
European Patent Office
Office européen des brevets

(11) **EP 2 200 323 A1**

(12) # EUROPEAN PATENT APPLICATION
published in accordance with Art. 153(4) EPC


(43) Date of publication:
**23.06.2010 Bulletin 2010/25**

(21) Application number: **08832839.8**

(22) Date of filing: **01.09.2008**

(51) Int Cl.:
***H04N 7/32*** *(2006.01)*

(86) International application number:
**PCT/JP2008/065639**

(87) International publication number:
**WO 2009/041215 (02.04.2009 Gazette 2009/14)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **25.09.2007 JP 2007246852**
**29.10.2007 JP 2007280402**



(71) Applicant: **Sharp Kabushiki Kaisha**
**Osaka-shi, Osaka 545-8522 (JP)**

(72) Inventors:
- **IKAI, Tomohiro**
**Osaka 545-8522 (JP)**
- **AONO, Tomoko**
**Osaka 545-8522 (JP)**

(74) Representative: **Müller - Hoffmann & Partner**
**Patentanwälte**
**Innere Wiener Strasse 17**
**81667 München (DE)**


(54) ## MOVING IMAGE ENCODER AND MOVING IMAGE DECODER


(57) The encoding efficiency when a plurality of reference blocks are used to generate prediction blocks for encoding is improved. A moving image encoder performs inter-picture predictive encoding to encode a difference value from a block to be encoded by generating a prediction image of the block to be encoded by using a plurality of reference images extracted from an encoded frame. The moving image encoder comprises a prediction method candidate generating portion 120, a prediction image generating portion and a variable-length encoding portion 108. The prediction method candidate generating portion 120 generates candidates of a prediction method based on predetermined information related to the block to be encoded, and the prediction image generating portion generates the prediction image of the block to be encoded based on the generated candidates of the prediction method. The variable-length encoding portion 108 encodes the prediction method used for generating the prediction image when the inter-picture predictive encoding is performed by using the generated prediction image if the number of the candidates of the prediction method generated by the prediction method candidate generating portion 120 is two or more.


FIG. 1

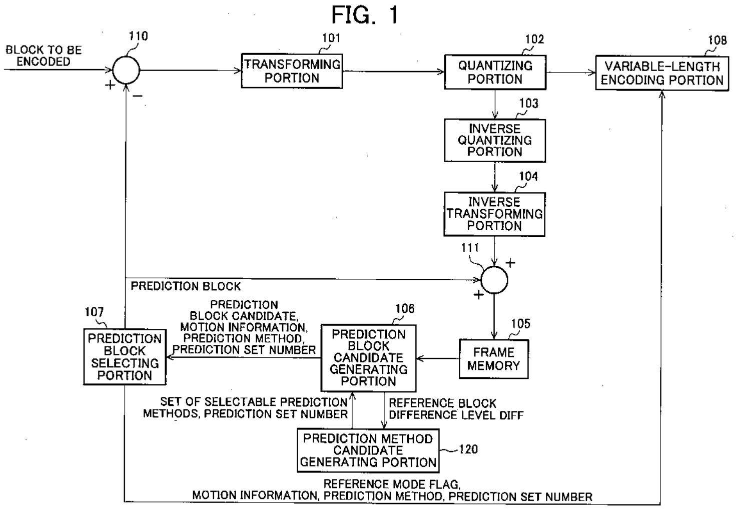


EP 2 200 323 A1

## Description

TECHNICAL FIELD

The present invention relates to a moving image encoder and a moving image decoder and to a moving image encoder and a moving image decoder that perform motion prediction from a plurality of reference images such as bi-prediction.

BACKGROUND OF THE INVENTION

Encoding of a moving image includes compression of information amount performed by reducing redundancies in the time direction and the space direction. Inter-picture predictive encoding aimed at reduction of temporal redundancy includes performing detection of motion and generation of a prediction image (prediction block) for each block by referencing to already encoded frames and performing encoding for a differential value between the acquired prediction block and a block from division of an input image (a block to be encoded).

The inter-picture predictive encoding methods include forward prediction, backward prediction, and multi-reference image prediction. The forward prediction is to generate a prediction block from temporally preceding frames and the backward prediction is to generate a prediction block from temporally subsequent frames. The multi-reference image prediction is to generate a plurality of motion-compensated images (reference images, reference blocks) from already encoded frames regardless of whether temporally preceding or subsequent and to further generate a prediction block by using a plurality of generated reference blocks. When two reference blocks are used for generating a prediction block, this is referred to as bi-prediction. A predictive encoding method using more than two reference blocks is also known.

A conventional encoding technique related to the multi-reference image prediction includes one that is disclosed in patent document 1. Fig. 36 is a block diagram of a configuration of an encoder disclosed in patent document 1. The encoder of the patent document 1 comprises a transforming portion 3601, a quantizing portion 3602, an inverse quantizing portion 3603, an inverse transforming portion 3604, a frame memory 3605, a prediction block candidate generating portion 3606, a prediction block selecting portion 3607, a variable-length encoding portion 3608, a subtracting portion 3610, and an adding portion 3611.

When an image is input to the encoder, the prediction block candidate generating portion 3606 generates prediction block candidates using encoded frames stored in the frame memory 3605. The prediction block selecting portion 3607 selects the optimum prediction block from the prediction block candidates generated by the prediction block candidate generating portion 3606.

The selected prediction block is input to the subtracting portion 3610 to calculate a difference (prediction error) between a block to be encoded and the prediction block. The calculated prediction error is subjected to the transform such as DCT transform by the transforming portion 3601 and the acquired transform coefficient is quantized by the quantizing portion 3602 to generate a quantized transform coefficient. The quantized transform coefficient is branched into two and is encoded by the variable-length encoding portion 3608 on one hand.

The quantized transform coefficient goes through the inverse quantizing portion 3603 and the inverse transforming portion 3604 for reproducing the prediction error on the other hand. The reproduced prediction error is added to the prediction block by the adding portion 3611 to generate a locally decoded block. The locally decoded block is output to and stored in the frame memory 3605. The stored locally decoded block is used as a reference when a subsequent frame, etc., are encoded.

The prediction block candidate generating portion 3606 includes a motion searching portion not depicted therein. The motion searching portion extracts an image (a reference block) similar to the block to be encoded from the frames stored in the frame memory 3605. In the case of the bi-prediction, two reference blocks (referred to as a reference block 1 and a reference block 2) are extracted. The case of using the bi-prediction will hereinafter be described.

The prediction block candidate generating portion 3606 generates four types of blocks as prediction block candidates, i.e., the reference block 1; the reference block 2; a block generated by averaging the pixel values of the reference block 1 and the reference block 2; and a block generated by subtracting the pixel value of the reference block 2 from the block having double the pixel value of the reference block 1. The reference blocks themselves and the images generated from the product-sum operations of the reference blocks and the linear prediction coefficients are used as the prediction block candidates (so-called weighted prediction is performed) as follows:

a prediction block candidate 1 = (reference block 1);

a prediction block candidate 2 = (reference block 2);

a prediction block candidate 3 = (reference block 1)/2+(reference block 2)/2;

and

a prediction block candidate 4 = (reference block 1)×2-(reference block 2).

The four prediction block candidates and information necessary for generating the prediction blocks (motion information and the linear prediction coefficients) are output to the prediction block selecting portion 3607. The motion information is the information indicative of a position of the extracted reference block (the position is represented by a position relative to the block to be encoded), namely a motion vector.

The prediction block selecting portion 3607 selects the block most similar to the block to be encoded as the prediction block from a plurality of the prediction block candidates generated by the prediction block candidate generating portion 3606. The prediction block selecting portion 3607 outputs information for generating the selected prediction block (the motion information and the linear prediction coefficients) to the variable-length encoding portion 3608.
The variable-length encoding portion 3608 encodes the quantized transform coefficient input from the quantizing portion 3602 and the information related to the motion information and the linear prediction coefficients input from the prediction block selecting portion 3607.

Fig. 37 is a diagram for explaining a relationship between the linear prediction coefficients (W1, W2) and an index indicative of the linear prediction coefficients. The variable-length encoding portion 3608 encodes the index indicative of the linear prediction coefficients rather than the linear prediction coefficients themselves. In Fig. 37, for example, if the linear prediction coefficients (W1, W2)=(0.5, 0.5), the index is 0, which is encoded. A set of the linear prediction coefficients selectable at the time of generation of the prediction block candidates is encoded in a slice header or frame header and may be changed slice by slice or frame by frame.
Patent Document 1: Japanese Laid-Open Patent Publication No. 2004-007379

DISCLOSURE OF THE INVENTION

PROBLEMS TO BE SOLVED BY THE INVENTION

However, in a conventional technique of selecting, block by block, a prediction method (the linear prediction coefficients of the above example) used when a plurality of reference blocks are used to generate a prediction block, a set of selectable prediction methods is fixed on the basis of a slice or frame. The number of selectable prediction methods (the number of selectable prediction methods included in the set of selectable prediction methods) and contents of the set of selectable prediction methods are fixed.

As the number of selectable prediction methods increases, a code amount necessary for encoding the prediction methods accordingly increases and, since the number of selectable prediction methods is fixed in the conventional technique, a code amount corresponding to the fixed number is necessitated by the encoding of the prediction methods even if a set of fewer prediction methods is sufficient for a block, which deteriorates the encoding efficiency. Since the contents of the set of selectable prediction methods are fixed, if a preferred prediction method is different because of a nature of the block to be encoded/decoded and the prediction method is not included in the set of selectable prediction methods for a relevant slice/frame, the prediction method is unavailable, which deteriorates the encoding efficiency.

The present invention was conceived in view of the above situations and the object of the present invention is to improve the encoding efficiency when a plurality of reference blocks are used to generate prediction blocks for encoding.

MEANS FOR SOLVING THE PROBLEMS

To solve the above problems, a first technical means of the present invention provides a moving image decoder that decodes a block to be decoded by adding a difference value of the block to be decoded to a prediction image of the block to be decoded generated by using a plurality of reference images, and that comprises a prediction method candidate generating portion, a prediction image generating portion and a variable-length code decoding portion, wherein the prediction method candidate generating portion generates candidates of a prediction method defining a method of generating the prediction image by using a plurality of reference images based on predetermined information related to the block to be decoded, the variable-length code decoding portion decodes the encoded data to identify the prediction method from the candidates of the prediction method generated by the prediction method candidate generating portion if the number of the candidates of the prediction method is two or more, and the prediction image generating portion generates the prediction image based on the prediction method decoded by the variable-length code decoding portion.

A second technical means provides the first technical means wherein the predetermined information includes any one of a difference level between a plurality of reference images, a quantization coefficient, and a motion compensation mode or a combination of a difference level between a plurality of reference images, a quantization coefficient, and a motion compensation mode.

A third technical means provides the second technical means wherein if the difference level between the plurality of reference images is smaller than a predetermined value, the number of the candidates of the prediction method is reduced and/or a spread of the prediction of the candidates of the prediction method is increased as compared to the case that the difference level between the reference images is greater than the predetermined value.

A fourth technical means provides the second technical means wherein if the quantization coefficient is greater than a predetermined value, the number of the candidates of the prediction method is reduced and/or a spread of the prediction of the candidates of the prediction method is increased as compared to the case that the quantization coefficient is smaller than the predetermined value.

A fifth technical means provides the second technical means wherein the motion compensation mode includes a plurality of modes and wherein the number of the candidates of the prediction method and/or a spread of the prediction of the candidates of the prediction method for the modes is different depending on the nature of the modes.

A sixth technical means provides the third technical means wherein the predetermined value for judging the difference level between the reference images is made larger as the quantization coefficient becomes larger.

A seventh technical means provides the first technical means comprising a prediction method predicting portion that predicts a prediction method of the block to be decoded, wherein the prediction method predicting portion calculates a prediction value of the prediction method of the block to be decoded by using a prediction method determined based on a temporal distance between a frame to which the block to be decoded belongs to and a frame to which a reference block belongs to.

An eighth technical means provides a moving image encoder that performs inter-picture predictive encoding to encode a difference value from a block to be encoded by generating a prediction image of the block to be encoded by using a plurality of reference images extracted from an encoded frame, and that comprises a prediction method candidate generating portion, a prediction image generating portion and a variable-length encoding portion, wherein the prediction method candidate generating portion generates candidates of a prediction method defining a method of generating the prediction image by using a plurality of reference images based on predetermined information related to the block to be encoded, the prediction image generating portion generates the prediction image of the block to be encoded based on the candidates of the prediction method generated by the prediction method candidate generating portion by using the plurality of the reference images, and the variable-length encoding portion encodes the prediction method used for generating the prediction image when the inter-picture predictive encoding is performed by using the prediction image generated by the prediction image generating portion if the number of the candidates of the prediction method generated by the prediction method candidate generating portion is two or more.

## EFFECTS OF THE INVENTION

In the technique of selecting, block by block, a prediction method used when a prediction block is generated by using a plurality of reference blocks, a set of selectable prediction methods is changed based on predetermined information related to a block to be encoded/decoded (e.g., a motion compensation mode, a quantization coefficient, and a reference block difference level). This enables the number of selectable prediction methods and the contents of the selectable prediction methods to be changed block by block.

Since the number of selectable prediction methods may be changed, it is possible to reduce a code amount necessary for encoding the prediction methods and improve the encoding efficiency for a block requiring a fewer number of selectable prediction methods by reducing the number of selectable prediction methods. Especially, when the number of selectable prediction methods for a certain block to be encoded/decoded is set to one, a code amount may considerably be reduced since it is unnecessary to encode the prediction method for the block. Since the cost for the selection must be calculated for each selectable prediction method in the encoding processing, a calculation amount becomes greater when the number of selectable prediction methods is larger. Since the present invention may reduce the number of selectable prediction methods, the calculation amount may also be reduced.

Since the contents of the set of selectable prediction methods may be changed, a preferred prediction method for a nature of a block to be encoded/decoded may be included in a set of selectable prediction methods and, since the preferred prediction method becomes selectable for the block, the encoding efficiency may be improved.

BRIEF DESCRIPTION OF DRAWINGS

[Fig. 1] Fig. 1 is a block diagram of a configuration of a moving image encoder of a first embodiment of the present invention.
[Fig. 2] Fig. 2 is a diagram for explaining a relationship between a prediction method and an index indicative of the prediction method.
[Fig. 3] Fig. 3 is a diagram of an example of a method for determining a set of selectable prediction methods and a prediction set number from a motion-compensated image difference level according to the first and second embodiments of the present invention.
[Fig. 4] Fig. 4 is a diagram of an example of a method for transforming prediction methods into code numbers.
[Fig. 5] Fig. 5 is a diagram of an example of another method for transforming prediction methods into code numbers.
[Fig. 6] Fig. 6 is a diagram of an example of a method for encoding code numbers.
[Fig. 7] Fig. 7 is a diagram of an example of an internal configuration of a variable-length encoding portion 108 related to an encoding method A.
[Fig. 8] Fig. 8 is a diagram of an example of an internal configuration of the variable-length encoding portion 108 related to an encoding method B.
[Fig. 9] Fig. 9 is a diagram for explaining a temporal distance between a frame to which a block to be encoded belongs and a frame to which a reference block belongs.
[Fig. 10] Fig. 10 is a diagram for explaining operations of a prediction method predicting portion 883 and a prediction method predicting portion 2083 in the case of utilizing a temporal distance.
[Fig. 11] Fig. 11 is a diagram for explaining operation of a prediction method prediction-value determining portion 1034.
[Fig. 12] Fig. 12 is a diagram of an example of a method for determining a set of selectable prediction methods and a prediction set number from a motion-compensated image difference level according to the first and second embodiments of the present invention.
[Fig. 13] Fig. 13 is a flowchart of procedures of the moving image encoding according to the present invention.
[Fig. 14] Fig. 14 is an explanatory diagram of a frame number and a relative index.
[Fig. 15] Fig. 15 is a diagram for explaining an example of encoding information for identifying a reference frame by using the relative indexes.
[Fig. 16] Fig. 16 is a block diagram of a configuration of a moving image decoder of a second embodiment of the present invention.
[Fig. 17] Fig. 17 is a diagram of an example of a method for transforming a code number into a prediction method.
[Fig. 18] Fig. 18 is a diagram of another example of a method for transforming a code number into a prediction method.
[Fig. 19] Fig. 19 is a diagram of an example of an internal configuration of a variable-length code decoding portion 1600 related to a decoding method A.
[Fig. 20] Fig. 20 is a diagram of an example of an internal configuration of the variable-length code decoding portion 1600 related to a decoding method B.
[Fig. 21] Fig. 21 is a flowchart of procedures of the moving image decoding according to the present invention.
[Fig. 22] Fig. 22 is a block diagram of a configuration of a moving image encoder of a third embodiment of the present invention.
[Fig. 23] Fig. 23 is a diagram of an example of a method for determining a set of selectable prediction methods and a prediction set number from a quantization coefficient according to the third and fourth embodiments of the present invention.
[Fig. 24] Fig. 24 is a block diagram of a configuration of a moving image decoder of a fourth embodiment of the present invention.
[Fig. 25] Fig. 25 is a block diagram of a configuration of a moving image encoder of a fifth embodiment of the present invention.
[Fig. 26] Fig. 26 is a diagram of an example of a method for determining a set of selectable prediction methods and a prediction set number from a motion compensation mode according to the fifth and sixth embodiments of the present invention.
[Fig. 27] Fig. 27 is a diagram of an example of a method for determining a set of selectable prediction methods and a prediction set number from a motion compensation mode according to the fifth and sixth embodiments of the present invention.

[Fig. 28] Fig. 28 is a block diagram of a configuration of a moving image decoder of a sixth embodiment of the present invention.

[Fig. 29] Fig. 29 is a block diagram of a configuration of a moving image encoder of a seventh embodiment of the present invention.

[Fig. 30] Fig. 30 is a diagram of an example of a method for determining a set of selectable prediction methods and a prediction set number from a motion-compensated image difference level, a quantization coefficient, and a motion compensation mode according to the seventh and eighth embodiments of the present invention.

[Fig. 31] Fig. 31 is a diagram of another example of a method for determining a set of selectable prediction methods and a prediction set number from a motion-compensated image difference level, a quantization coefficient, and a motion compensation mode according to the seventh and eighth embodiments of the present invention.

[Fig. 32] Fig. 32 is a diagram of yet another example of a method for determining a set of selectable prediction methods and a prediction set number from a motion-compensated image difference level, a quantization coefficient, and a motion compensation mode according to the seventh and eighth embodiments of the present invention.

[Fig. 33] Fig. 33 is a diagram of a further example of a method for determining a set of selectable prediction methods and a prediction set number from a motion-compensated image difference level, a quantization coefficient, and a motion compensation mode according to the seventh and eighth embodiments of the present invention.

[Fig. 34] Fig. 34 is a diagram of a yet further example of a method for determining a set of selectable prediction methods and a prediction set number from a motion-compensated image difference level, a quantization coefficient, and a motion compensation mode according to the seventh and eighth embodiments of the present invention.

[Fig. 35] Fig. 35 is a block diagram of a configuration of a moving image decoder of an eighth embodiment of the present invention.

[Fig. 36] Fig. 36 is a block diagram of a configuration of a conventional moving image encoder using bi-prediction.

[Fig. 37] Fig. 37 is a diagram for explaining a relationship between linear prediction coefficients (W1, W2) and an index indicative of the linear prediction coefficients of the conventional moving image encoder.

## EXPLANATIONS OF REFERENCE NUMERALS

101, 2201, 2501, 2901, 3601...transforming portion; 102, 2202, 2502, 2902, 3602...quantizing portion; 103, 1603, 2203, 2403, 2503, 2803, 2903, 3503, 3603...inverse quantizing portion; 104, 1604, 2204, 2404, 2504, 2804, 2904, 3504, 3604...inverse transforming portion; 105, 1605, 2205, 2405, 2505, 2805, 2905, 3505, 3605...frame memory; 106, 2206, 2506, 2906, 3606...prediction block candidate generating portion, 107, 2207, 2507, 2907, 3607...prediction block selecting portion; 108, 2208, 2508, 2908, 3608...variable-length encoding portion; 110, 2210, 2510, 2910, 3610...subtracting portion; 111, 1611, 2211, 2411, 2511, 2811, 2911, 3511, 3611...adding portion; 120, 1620, 2220, 2420, 2520, 2820, 2920, 3520...prediction method candidate generating portion; 781, 881, 2081...prediction method/code number transforming portion; 782, 882...code number encoding portion; 883, 2083...prediction method predicting portion; 884, 2084...prediction method storing portion; 885...switch; 1031...temporal distance calculating portion; 1032...temporal weight calculating portion; 1033...temporal prediction method calculating portion; 1034...prediction method prediction value determining portion; 1600, 2400, 2800, 3500...variable-length code decoding portion; 1606, 2406, 2806, 3506...prediction block generating portion; 1661, 2461, 2861, 3561...motion compensating portion; 1662, 2462, 2862, 3562...prediction block predicting portion; 1980, 2080...code number decoding portion; 1986, 2086...code number/prediction method transforming portion; 1987...default value retaining portion; 1988, 2088...switch; and 2230, 2930...quantization coefficient setting portion.

## PREFERRED EMBODIMENTS OF THE INVENTION

### «First Embodiment»

Fig. 1 is a block diagram of a configuration of a moving image encoder according to a first embodiment of the present invention. The encoder includes a transforming portion 101, a quantizing portion 102, an inverse quantizing portion 103, an inverse transforming portion 104, a frame memory 105, a prediction block candidate generating portion 106, a prediction block selecting portion 107, a variable-length encoding portion 108, a subtracting portion 110, an adding portion 111, and a prediction method candidate generating portion 120.

A frame input to the encoder (a frame to be encoded) is divided into blocks (blocks to be encoded) and encoding is performed for each block to be encoded. When a block to be encoded is input to the encoder, the prediction block candidate generating portion 106 uses encoded frames stored in the frame memory 105 to generate a plurality of blocks (prediction block candidates) for the block to be encoded. The prediction block selecting portion 107 selects the optimum block (prediction block) from the prediction block candidates generated by the prediction block candidate generating portion 106.

The selected prediction block is input to the subtracting portion 110 to calculate a difference (prediction error) between a block to be encoded and the prediction block. The calculated prediction error is subjected to the transform such as DCT transform by the transforming portion 101 and the acquired transform coefficient is quantized by the quantizing portion 102 to generate a quantized transform coefficient. The quantized transform coefficient is branched into two and is encoded by the variable-length encoding portion 108 on one hand.
The quantized transform coefficient goes through the inverse quantizing portion 103 and the inverse transforming portion 104 for reproducing the prediction error on the other hand. The reproduced prediction error is added to the prediction block by the adding portion 111 to generate a locally decoded block. The locally decoded block is output to and stored as an encoded frame in the frame memory 105. The stored encoded frame is used as a reference when a subsequent frame or subsequent block to be encoded of the current frame is encoded.

<Prediction Block Candidate Generating Portion 106 (1)>

The prediction block candidate generating portion 106 includes a motion searching portion not depicted therein. The motion searching portion extracts blocks (reference blocks) similar to the block to be encoded from the frames stored in the frame memory 105. In this embodiment, N reference blocks (referred to as a reference block 1, a reference block 2,..., a reference block N) are extracted.
The reference blocks are used for generating a prediction block candidate. A method of generating the prediction block candidate from the reference blocks will hereinafter be described.

<Method of Generating Prediction Block Candidate>

One method of generating the prediction block candidate from a plurality of the reference blocks is to generate the prediction block candidate from the product-sum operation of the reference blocks and the linear prediction coefficients (linear prediction). In this case, the prediction block candidate is generated as follows:

$$\text{prediction block candidate} = (\text{reference block } 1) \times W1 + (\text{reference block } 2) \times W2 + \ldots + (\text{reference block } N) \times WN + D,$$

where W1, W2,..., WN denote the prediction block candidate and D denotes an offset. D may be set to zero.
In this description, the case of using two reference blocks for generating the prediction block candidate will be described particularly in detail (in the case of N=2 or bi-prediction in the above description).
In this case, the prediction block candidate is generated as follows (assuming D=0):

$$\text{prediction block candidate} = (\text{reference block } 1) \times W1 + (\text{reference block } 2) \times W2 \quad \ldots (\text{Eq. } 1).$$

In embodiments of the present invention, when the prediction block candidate is generated in multi-reference image prediction, the prediction block candidate may be generated from a plurality of reference blocks in a method other than the linear prediction. Although, for example, second-or higher-order prediction or those using image processing such as edge extraction or histogram extraction and various transforms may be considered, prediction methods other than the linear prediction will not be described in this embodiment.
In this description, the prediction method means a method for generating a prediction block candidate from a plurality of reference blocks. The prediction method may be expressed with a parameter used for generating the prediction block candidate (e.g., linear prediction coefficients (W1, W2)) or may be expressed by using an index identifying the parameter. The linear prediction coefficients (W1, W2) may include a value of zero as (0, 1) or (1, 0) does. They may include a negative value as (2, -1) or (1, -2) does. If a negative value is included, it is better to include a clip processing in a function of generating the prediction block candidate. It is better to generate the prediction block candidate by using a function CLIP (MIN, MAX, X) for clipping X between MIN and MAX as follows:

prediction block candidate = CLIP (0, 255, (reference block 1)×W1+(reference block 2)×W2+...+(reference block N)×WN+D),

where values of 0 and 255 in the equation are examples when assuming the bit depth of eight bits and these are not limitations.

Fig. 2 is a diagram for explaining a relationship between a prediction method and an index indicative of the prediction method related to the present invention. As depicted in Fig. 2, the prediction methods used for the following description are generation parameters (linear prediction coefficients in this case) for the prediction block candidate and are five parameters of (4/8, 4/8), (5/8, 3/8), (3/8, 5/8), (6/8, 2/8), and (2/8, 6/8), which may be indicated by four indexes of 0, 1, 2, 3, and 4, respectively.

When all the reference blocks are generated, the prediction block candidate generating portion 106 outputs a reference block difference level DIFF to the prediction method candidate generating portion 120. The reference block difference level DIFF indicates how the reference blocks are different from each other when a plurality of the reference blocks are given.

Although the reference block difference level DIFF may be calculated in various methods, two methods will be described herein. A difference $DIFF_{kl}$ of two blocks (a block k and a block 1) will be used in the description, and the difference $DIFF_{kl}$ of two blocks is defined by a sum of absolute differences SAD of respective pixels or sum of squared differences SSD of respective pixels as below.

The block difference $DIFF_{kl}$ is expressed by formula 1 and formula 2 in the SAD case and the SSD case, respectively, as follows.

[Formula 1]

$$DIFF_{kl} = \sum_{x,y} |\text{block k}(x,y) - \text{block l}(x,y)|$$

[Formula 2]

$$DIFF_{kl} = \sum_{x,y} (\text{block k}(x,y) - \text{block l}(x,y))^2$$

A calculating method of the reference block difference level DIFF may be defined by the following equation from differences of DC values of the blocks.

[Formula 3]

$$DIFF_{kl} = \left|\sum_{x,y} \text{block k}(x,y) - \sum_{x,y} \text{block l}(x,y)\right|$$

One method of calculating the reference block difference level DIFF (a first calculating method) is to take out two reference blocks from a plurality of reference blocks to set a sum (or an average) of differences of the two reference blocks as the reference block difference level DIFF. For example, in the case of two reference blocks of a reference block 1 and a reference block 2,

$$DIFF = DIFF_{12},$$

and
in the case of three reference blocks of a reference block 1, a reference block 2, and a reference block 3,

$$DIFF=DIFF_{12}+DIFF_{23}+DIFF_{31}.$$

In the case of N reference blocks, DIFF is as follows.
[Formula 4]

$$DIFF = \sum_{k=1}^{N} \sum_{l=1}^{N} DIFF_{kl}$$

Another method (a second calculating method) is to calculate an average block AVE as below to set a sum (or an average) of differences between the average block and the reference blocks as DIFF. In this case, the average block AVE is given as follows.
[Formula 5]

$$\text{average block } AVE(x,y) = \frac{\sum_{k=1}^{N} \text{reference block } k(x,y)}{N}$$

The reference block difference level DIFF in this case is given as follows.
[Formula 6]

$$DIFF = \sum_{k=1}^{N} DIFF_{k,AVE}$$

Unlike the first calculating method, the second calculating method has an advantage that a calculation amount remains small even if the number of reference blocks increases. Of course, the calculating methods of the reference block difference level DIFF are not limited to these two methods.

If the number of reference blocks is three or more, the reference block difference level DIFF may be handled as a vector. If the number of reference blocks is three, the reference block difference level DIFF may be expressed as follows:

$$DIFF=(DIFF_{12},\ DIFF_{23},\ DIFF_{31}).$$

If the number of reference blocks is N, the vector has N (N-1) /2 elements.

<Prediction Method Candidate Generating Portion 120>

The prediction method candidate generating portion 120 determines and outputs to the prediction block candidate generating portion 106 a set of prediction methods selectable for a block to be encoded among the prediction methods used for generating the prediction block candidate based on predetermined information related to the block to be encoded (the reference block difference level DIFF in this embodiment). The prediction method candidate generating portion 120 determines a number of a set of selectable prediction methods (prediction set number).

Fig. 3 is a diagram of an example of a method for determining a set of selectable prediction methods and a prediction set number from the reference block difference level DIFF. A set of selectable prediction methods and the number (prediction set number) thereof are determined such that the relationship of Fig. 3 is satisfied. Fig. 3 indicates that one of the following three sets of prediction methods (a prediction set 0, a prediction set 1, and a prediction set 2) is selected depending on the reference block difference level DIFF:

the prediction set 0: the selectable prediction method (index) is 0;
the prediction set 1: the selectable prediction methods (indexes) are 0, 3, and 4; and
the prediction set 2: the selectable prediction methods (indexes) are 0, 1, 2, 3, and 4.

The number M of selectable prediction methods may be changed depending on a set of prediction methods and is 1, 3, or 5 in Fig. 3.

For example, if the reference block difference level DIFF is equal to or greater than 300 and less than 1000, the set of selectable prediction methods corresponds to the indexes 0, 3, and 4, and the prediction set number in this case is the prediction set 1. The set of these selectable prediction methods and the prediction set number are output to the prediction block candidate generating portion 106.

If the reference block difference level DIFF is smaller, fewer changes occur in the prediction block candidate due to switch-over of prediction methods. For example, if the reference block difference level DIFF is zero, i.e., if all the values of the reference blocks are the same, the prediction block candidate is not changed even when the linear prediction coefficient is changed. Therefore, it is preferred to reduce the number of the prediction methods candidates when the reference block difference level DIFF becomes smaller as in the example of Fig. 3. Particularly, if the reference block difference level DIFF is smaller than a certain predetermined value TH, the number M of the prediction methods candidates may be set to one. It is more preferred to set the predetermined value TH as a value that increases when a value of quantization coefficient QP increases (quantization becomes rougher). This is because when the quantization coefficient QP is large, the code amount reduction effect of increasing the number of selectable prediction methods (adaptively switching many prediction block candidates) is relatively small and, therefore, it is more preferable to increase the predetermined value TH such that the number M of the prediction method candidates is set to one in more cases to reduce the code amount necessary for encoding the prediction method.

Since fewer changes occur in the prediction block candidate due to switch-over of prediction methods if the reference block difference level DIFF is small, it is better that respective prediction results are different when a plurality of prediction methods are included. If the reference block difference level DIFF is small, a set of selectable prediction methods of
(4/8, 4/8), (6/8, 2/8), (2/8, 6/8) (i.e., indexes 0, 3, and 4) is better than
(4/8, 4/8), (5/8, 3/8), (3/8, 5/8) (i.e., indexes 0, 1, and 2).

For example, it is preferred to change the set of selectable prediction methods depending on the reference block difference level DIFF, for example, in ascending order of the condition of the reference block difference level DIFF as follows:

the prediction set 0: the selectable prediction method (index) is 0;
the prediction set 1: the selectable prediction methods (indexes) are 0, 3, and 4;
the prediction set 3: the selectable prediction methods (indexes) are 0, 1, and 2; and
the prediction set 2: the selectable prediction methods (indexes) are 0, 1, 2, 3, and 4.

A definition will then be made for a size of the spread of a set of prediction methods (the spread of prediction of the prediction method candidate). A size of the spread of a set of prediction methods (the spread of prediction of the prediction method candidate) is not determined by an absolute value and is relative such as determining whether one set has a spread greater than the other set when two sets are compared. In the case of five sets of linear prediction coefficients, when comparing a set A of (W1, W2) made up of
(1/10, 9/10), (3/10, 7/10), (5/10, 5/10), (7/10, 3/10), and (9/10, 1/10)
with a set B made up of
(3/10, 7/10), (4/10, 6/10), (5/10, 5/10), (6/10, 4/10), and (7/10, 3/10),
the set A has a grater spread than the set B. This means that the prediction result varies greater in the set A than in the set B when the respective prediction methods included in the sets of the prediction methods are switched. When the reference block difference level DIFF is smaller, it is preferred to use a prediction set having a spread greater than that used when the reference block difference level DIFF is larger.

<Prediction Block Candidate Generating Portion 106 (2)>

When the selectable prediction methods and the number M are determined, the prediction block candidate generating portion 106 generates, as prediction block candidates, the N reference blocks (the reference block 1, the reference block 2,..., the reference block N) and M types of blocks calculated using weighted sums of the reference block 1 through the reference block N.

For example, in the case of N=2, if the linear prediction coefficients (W1, W2) are set to (4/8, 4/8), (6/8, 2/8), and (2/8, 6/8), or the indexes 0, 3, and 4 as a set of selectable prediction methods, the prediction block candidate generating portion 106 generates the following five (N=2, M=3, N+M=5) prediction block candidates:

prediction block candidate 1 = (reference block 1);

prediction block candidate 2 = (reference block 2);

prediction block candidate 3 = (reference block 1)×4/8+(reference block 2)×4/8;

prediction block candidate 4 = (reference block 1)×6/8+(reference block 2)×2/8; and

prediction block candidate 5 = (reference block 1)×2/8+(reference block 2)×6/8.

The generated prediction block candidates, the information necessary for generating the prediction block candidates (motion information and prediction methods), and the information necessary for encoding the prediction methods (prediction set number) are output to the prediction block selecting portion 107. The motion information is the information necessary for generating the reference blocks. Although if the reference frame used in the case of generating reference blocks is determined in advance, the motion information is motion vectors, if the reference frame used in the case of generating reference blocks is made selectable, information for identifying the reference frame (see <Description of Relative Index>) is also used as the motion information.

Without making an exception of the prediction block candidates predicted from only one reference block (the prediction block candidate 1 and the reference block candidate 2 in this case), by preparing a prediction method of making a prediction from only one reference block such as the linear prediction coefficients (W1, W2) of (8/8, 0/8) and (0/8, 8/8), the prediction block candidates may be generated as follows:

prediction block candidate 1 = (reference block 1)×8/8+(reference block 2)×0/8;

prediction block candidate 2 = (reference block 1)×0/8+(reference block 2)×8/8;

prediction block candidate 3 = (reference block 1)×4/8+(reference block 2)×4/8;

prediction block candidate 4 = (reference block 1)×6/8+(reference block 2)×2/8; and

prediction block candidate 5 = (reference block 1)×2/8+(reference block 2)×6/8.

<Prediction Block Selecting Portion 107>

The prediction block selecting portion 107 selects the prediction block having the smallest cost from a plurality of the prediction block candidates generated by the prediction block candidate generating portion 106. At the time of selection, a reference mode flag is determined as a flag indicative of what reference block is used in the following manner. The reference mode flag is set to 1 for the case when only the reference block 1 is used (the reference block candidate 1), 2 for the case when only the reference block 2 is used (the reference block candidate 2), and 3 for the case when the reference block 1 and the reference block 2 are used (the reference block candidate 3, the reference block candidate 4, and the reference block candidate 5). It is possible to indicate whether the multi-reference image prediction is used by means of the reference mode flag. In this embodiment, the multi-reference image prediction is used when the reference mode flag is 3. The definition of the reference mode flag is not limited to the above description.

The prediction block selecting portion 107 outputs to the variable-length encoding portion 108 the information necessary for generating the selected prediction block (the reference mode flag, the motion information, and the prediction method added when the reference mode flag indicates the use of the multi-reference image prediction), and the prediction set number as information for encoding the prediction method. The prediction set number is output only in the case of the multi-reference image prediction and is not output in other cases.

The cost used for the selection of the prediction block is SAD or SSD of the prediction block candidate and the block to be encoded or RD cost, M cost, etc., described below.

The RD cost is a cost for comprehensively determining a degree of distortion of the locally decoded block and a code amount of the block to be encoded when the block to be encoded is encoded with the encoding parameter and is calculated as follows:

RD cost = SSD of locally decoded block and block to be encoded +λ×(code amount of prediction error + code amount of encoding parameter),

where λ is a predetermined constant. The code amount of prediction error is a code amount necessary for encoding the quantized transform coefficient of a difference between the prediction block candidate and the block to be encoded (a prediction error), and the code amount of encoding parameter is a code amount of the reference mode flag, the motion information, the prediction method, the motion compensation mode (see <Description of Motion Compensation Mode >), etc. Since the calculation of the locally decoded block and the calculation of a code amount of prediction error are necessary for calculating the RD cost, a configuration requirement corresponding to the quantizing portion 102, the inverse quantizing portion 103, the inverse transforming portion 104, and the variable-length encoding portion 108 is necessary within the prediction block selecting portion 107.

The M cost is a cost acquired by simplifying the RD cost as follows:

$$\text{M cost} = \text{SATD of prediction block candidate and block to be encoded} + \lambda \times \text{code amount of encoding parameter},$$

where λ is a predetermined constant. SATD is acquired by transforming a difference on the basis of pixels (e.g., a difference (a prediction error) between the prediction block candidate and the block to be encoded) with DCT or Hadamard transform and calculating the square sum of the transform coefficient. The code amount of the encoding parameter is the same as that described in the calculation of the RD cost.

<Variable-Length Encoding Portion 108>

The variable-length encoding portion 108 encodes the reference mode flag selected by the prediction block selecting portion 107, the motion information, and the prediction method (if the reference mode flag indicates the use of the multi-reference image prediction) in addition to the quantized transform coefficient. As the motion information, a motion vector and, if any, a relative index are encoded, respectively. In the case of the multi-reference image prediction, the prediction method is encoded in accordance with the prediction set number. The reference mode flag may be encoded as a block type along with another piece of information of the block to be encoded (e.g., a flag for switching from the intra-picture prediction to the inter-picture prediction or vice versa, or a flag indicative of whether prediction error information is included). If the block to be encoded has a plurality of motion compensation modes, the reference mode flag may be encoded along with the motion compensation modes.

The encoding method for the prediction methods in the variable-length encoding portion 108 will be described. The variable-length encoding portion 108 performs the encoding differently depending on the number of selectable prediction methods. If no selectable prediction method exists (meaning that the multi-reference image prediction is not performed), the encoding of the prediction method is not performed. If one selectable prediction method exists, the encoding of the prediction method is not performed. If two or more selectable prediction methods exist, the prediction methods are transformed into code numbers and the acquired code numbers are encoded.

Fig. 4 is a diagram of an example of a method for transforming prediction methods into code numbers. As depicted in Fig. 4, the transform of the prediction method into the code number is performed in a different manner for each prediction set number. For example, if the prediction set number is the prediction set 1, a set of the selectable prediction methods includes indexes 0, 3, and 4, and the code numbers in this case are 0, 1, and 2, respectively. If the number of selectable prediction methods is M, code numbers from 0 to M-1 are allocated to the M prediction methods. Asterisk * of Fig. 4 will be described later.

Fig. 5 is a diagram of an example of another method for transforming prediction methods into code numbers. Instead of transforming the indexes indicative of the prediction methods into the code numbers as depicted in Fig. 4, the parameters (linear prediction coefficients in this case) indicative of the prediction methods may be transformed into the code numbers as depicted in Fig. 5.

An encoding method A and an encoding method B will be described as examples of the encoding method for the prediction methods.

<Encoding Method A>

The encoding method A is a method of encoding the prediction methods themselves. Fig. 6 is a diagram of an example of a method for transforming the code numbers into codes. Fig. 7 is a diagram of an example of an internal configuration of the variable-length encoding portion 108. The variable-length encoding portion 108 of the encoding method A includes a prediction method/code number transforming portion 781 and a code number encoding portion 782. The variable-length encoding portion 108 encodes the code number in different encoding methods depending on the number of selectable prediction methods determined by the prediction method candidate generating portion 120. If no or one selectable prediction method exists (if the prediction set number of Fig. 3 is the prediction set 0), the encoding of the prediction method is not performed. If two or more selectable prediction methods exist (if the prediction set number of Fig. 3 is other than the prediction set 0), the prediction method/code number transforming portion 781 transforms the prediction methods into the code numbers based on the prediction set number, for example, in accordance with Fig. 4, and the code number encoding portion 782 encodes the code numbers in accordance with Fig. 6.

<Encoding Method B>

The encoding method B is a method of predicting a prediction method from surrounding blocks to more efficiently perform the encoding. In the encoding method B, a prediction method is predicted to encode a code indicative of whether the prediction is right or wrong (a prediction right/wrong code). If the prediction is right, the encoding is completed. If the prediction is not right, a remaining code for identifying the prediction method (a residual code) is further encoded. The encoding is performed as follows:

prediction right/wrong code (if the prediction is right); and
prediction right/wrong code + residual code (if the prediction is not right).

Fig. 8 is a diagram of an example of an internal configuration of the variable-length encoding portion 108. The variable-length encoding portion 108 of the encoding method B includes a prediction method/code number transforming portion 881, a code number encoding portion 882, a prediction method predicting portion 883, a prediction method storing portion 884, and a switch 885.

The prediction method predicting portion 883 predicts a prediction method (index) by referencing to prediction methods of the surrounding blocks stored in the prediction method storing portion 884. The predicted prediction method is referred to as a prediction method prediction value. One method of calculating the prediction method prediction value is to define the prediction method of the block immediately before as the prediction method prediction value. One of other methods is to define the medium value (median) of the indexes indicative of the prediction methods of the left block, the upper block, and the upper right block as the prediction method prediction value. In another method, it is conceivable to define the minimum value (or the maximum value) of the indexes indicative of the prediction methods of the left block and the upper block as the prediction method prediction value. The prediction method prediction value may be determined in other methods.

The prediction method prediction value acquired by the prediction method predicting portion 883 is output to the prediction method/code number transforming portion 881, and the prediction method/code number transforming portion 881 transforms the prediction method prediction value (described in the index field) into the code number prediction value (described in the code number field) depending on the prediction set number, for example, in accordance with Fig. 4. For example, if the prediction set number is the prediction set 1, the prediction method prediction values are transformed into the respective code number prediction values as follows:

index 0 into code number 0;
index 1 into code number 1;
index 2 into code number 2;
index 3 into code number 1; and
index 4 into code number 2.

Although when the prediction set number is the prediction set 1, a set of selectable prediction methods includes the indexes 0, 3, and 4, the code numbers corresponding to indexes are indicated for the prediction methods (indexes 1 and 2) not selectable in the prediction set 1 as described above. The asterisks in Fig. 4 indicate such code numbers. This is for the purpose of enabling the transform of the prediction method prediction value into the code number prediction value when the acquired prediction method prediction value is not selectable in the block to be encoded.

For the code number (the code number prediction value) for the prediction method (the prediction method prediction value) not selectable, the code number of the selectable prediction method closest thereto is used. For example, the prediction methods of the index 1 are (5/8, 3/8) and the selectable prediction methods closest thereto are (4/8, 4/8) and (6/8, 2/8). In this embodiment, it is determined in advance that the prediction method having W1:W2 that is away from the weight of 1:1, i.e., (6/8, 2/8) is used between encoder and decoder, and the code number 1 corresponding to (6/8, 2/8) is defined as the code number (code number prediction value) corresponding to the index 1.

If a plurality of the closest selectable prediction methods (prediction method prediction values) exist, an arrangement of what prediction method is used may be encoded slice by slice or frame by frame. One method of encoding the arrangement is a method for encoding which case is to be used, to encode whether W1:W2 farther away from or closer to 1:1, using a one-bit flag.

The prediction method of the block to be encoded is also transformed into the code number by the prediction method/code number transforming portion 881 in accordance with Fig. 4. If the code number of the block to be encoded is equal to the code number prediction value, the code number encoding portion 882 encodes 1 as the prediction right/wrong code. Conversely, if the code number of the block to be encoded is equal to the code number prediction value, the code number encoding portion 882 encodes 0 as the prediction right/wrong code and transforms the code number into a residual code number using the following equation and encodes the residual code number:

residual code number = code number (code number ≤ code number prediction value)

code number -1 (code number > code number prediction value).

In this case, it is possible to encode the residual code number in K bits by using the number M of selectable prediction methods, where K satisfies the formula of $2^k \leq M-1 < 2^{k-1}$. For example, if the number M of selectable prediction methods is three (the prediction set 1), K=1 is obtained, and if the number M of selectable prediction methods is five (the prediction set 2), K=2 is obtained.

The prediction method storing portion 884 stores the prediction method if the block to be encoded has the prediction method and stores a tentative prediction method if the block to be encoded does not perform the multi-reference image prediction. The switch-over is performed by the switch 885. If the reference mode flag of the block to be encoded indicates the use of the multi-reference image prediction, the switch 885 is switched such that the prediction method storing portion 884 stores the prediction method of the block to be encoded input to the variable-length encoding portion 108. If the block to be encoded does not use the multi-reference image prediction, the switch 885 is switched such that the prediction method storing portion 884 stores a tentative prediction method, i.e., the prediction method prediction value of the block to be encoded acquired by the prediction method predicting portion 883.

Another method of predicting the prediction method in the prediction method predicting portion 883 will be described. The method of the following description utilizes a temporal distance between a frame to which a block to be encoded belongs and a frame to which a reference block belongs (referred to as a temporal distance between a block to be encoded and a reference block).

Fig. 9 is a diagram for explaining a temporal distance between a frame to which a block to be encoded belongs and a frame to which a reference block belongs. Fig. 9 depicts that D1 denotes a temporal distance between a frame to which the block to be encoded belongs and a frame to which the reference block 1 belongs and D2 denotes a temporal distance between a frame to which the block to be encoded belongs and a frame to which the reference block 2 belongs. The encoder of the embodiment stores time information POC (Picture Of Count) for encoded frames in the frame memory 105 and calculates a difference in POC to obtain a temporal distance. A POC addition method is achieved by procedures of setting POC of a first frame to zero and defining POCs of subsequent frames as values acquired by adding one to each frame in the order of display. If a frame 0, a frame 1,..., a frame N are arranged in the order of display, POCs added to the respective frames are 0, 1, ... N.

Fig. 10 is a diagram for explaining the operation of the prediction method predicting portion 883 in the case of utilizing a temporal distance. As depicted in Fig. 10, if a temporal distance is utilized, the prediction method predicting portion 883 includes a temporal distance calculating portion 1031, a temporal weight calculating portion 1032, a temporal prediction method calculating portion 1033, and a prediction method prediction value determining portion 1034.

The temporal distance calculating portion 1031 calculates a temporal distance between the block to be encoded and the reference block from POCs of frames to which the block to be encoded and the reference block belong. For example, when POC0 denotes POC of the frame to which the block to be encoded belongs and POCN denotes POC of the frame to which the reference block N belongs, a temporal distance DN between the block to be encoded and the reference block is obtained as follows:

$$D1 = |POC1 - POC0|;$$

$$D2 = |POC2 - POC0|;$$

...

$$DN = |POCN - POC0|.$$

The temporal weight calculating portion 1032 obtains linear prediction coefficients WT (W1, W2,..., WN) depending on the temporal distance between the block to be encoded and the reference block. The linear prediction coefficients WT are obtained such that a reference block having a smaller temporal distance from the block to be encoded has a heavier weight than the weight that a reference block having a larger temporal distance from the block to be encoded has. The embodiment uses a weight proportional to the reciprocal of the temporal distance. The linear prediction coefficients WT (W1, W2,..., WN) satisfying the following two equations are used:

$$W1:W2:\ldots:WN=1/D1:1/D2:\ldots:1/DN;$$

and

$$W1+W2+\ldots+WN=1.$$

In the case of N=2,

$$W1:W2=1/D1:1/D2$$

$$W1+W2=1,$$

and therefore the linear prediction coefficients WT may be obtained as follows:

$$W1=D2/(D1+D2);$$

and

$$W2=D1/(D1+D2).$$

The temporal prediction method calculating portion 1033 obtains the prediction method closest to the linear prediction coefficients WT from usable prediction methods. Since the usable prediction methods are those depicted in Fig. 2 for the example of N=2 in the embodiment, the closest method is obtained from the prediction methods of Fig. 2. For example, because of (W1, W2)=(2/3, 1/3) in the case of D1=1 and D2=2, the closest prediction method is obtained as (5/8, 3/8) in Fig. 2. The obtained prediction method is referred to as a temporal prediction method.
The prediction method prediction value determining portion 1034 uses the temporal prediction method (and prediction methods of surrounding blocks as needed) to determine a prediction method prediction value.

Fig. 11 is a diagram for explaining the operation of the prediction method prediction-value determining portion 1034. Fig. 11(E) depicts an example of a situation of surrounding blocks when a certain block to be encoded is encoded. It is assumed that a left block of the block to be encoded is a block not subjected to the multi-reference image prediction and an upper left block and an upper block are blocks subjected to the multi-reference image prediction. It is assumed that an upper right block is a block located outside a picture. Figs. 11(A) to 11(D) depict methods of determining the prediction method prediction value in the situation depicted in Fig. 11(E).

The four methods depicted as the determining methods of the prediction method prediction value in Figs. 11 (A) to 11(D) will hereinafter be described.
In the method of Fig. 11(A), the prediction method prediction value is determined as the temporal prediction method regardless of the situation of the surrounding blocks. In Fig. 11(A), the surrounding blocks of the block to be encoded are not used for the determination of the prediction method prediction value and therefore depicted as white blocks.
In the method of Fig. 11(B), the prediction method prediction value is determined as the medium value (median) of a total of five indexes, which are the index of the temporal prediction method and the indexes indicative of the prediction methods of the surrounding blocks (the upper block, the upper left block, and the upper right block). In Fig. 11(B), the four blocks, i.e., left, upper, upper left, and upper right blocks having the indexes of the prediction methods used for the calculation of the medium value are depicted with shaded region.

In the method of Fig. 11(C), if the prediction method of a surrounding block (left, upper, or upper right block) is the multi-reference image prediction, the index of the prediction method of the block is used and if the prediction method is not the multi-reference image prediction, the index of the temporal prediction method is used instead of the prediction method of the block to determine the prediction method prediction value as the medium value (median) of a total of three indexes. In Fig. 11(C), the upper block is depicted with shaded region since the index of the prediction method of the block is used for the calculation of the medium value, and the left and upper right blocks are depicted with wavy region since the indexes of the temporal prediction methods are used for the calculation of the medium value instead of the indexes of the prediction methods of the block. It has been described above that if the block to be encoded has a prediction method, the prediction method is stored and if the block to be encoded is not subjected to the multi-reference image prediction, a tentative prediction method is stored. However, in the case of Fig. 11(C), since the temporal prediction method is used if a block not subjected to the multi-reference image prediction is used for the calculation of the medium value, it is not necessary to store a tentative prediction method in the case of not performing the multi-reference image prediction.

In the method of Fig. 11(D), for the left, upper, and upper right blocks, if the block is located within the picture, the index of the prediction method of the block is used and if the block is located outside the picture, the index of the temporal prediction method is used instead of that of the prediction method of the block, and the prediction method prediction value is determined as the medium value (median) of a total of three indexes. In Fig. 11(D), the left and upper blocks are depicted with shaded region since the indexes of the prediction methods of the blocks are used for the calculation of the medium value, and the upper right block is depicted with wavy region since the index of the temporal prediction method is used.

In each case of Figs. 11 (A) to 11(D), since the temporal distance must be used for the determination of the prediction method prediction value in the prediction method predicting portion 883, POC of the frame to which the block to be encoded belongs and POC of the frame to which the reference block belongs (not depicted) is input to the prediction method predicting portion 883 from the frame memory 105. The frame memory 105 stores POC of the encoded frames. In the case of Fig. 11(C), information is necessary that indicates whether the prediction method of a surrounding block is the multi-reference image prediction. Therefore, if this information is necessary, the prediction method storing portion 884 inputs to the prediction method predicting portion 883 the information indicative of whether the prediction method of a surrounding block is the multi-reference image prediction. If this information is input, the prediction method storing portion 884 stores the information indicative of whether the multi-reference image prediction is used for encoded blocks in addition to the prediction methods of the encoded blocks.

As above, if the temporal distance is utilized, the prediction method predicting portion 883 determined the prediction method prediction value based on the temporal distance between the frame to which the block to be encoded belongs and the frame to which the reference block belongs. A reference block having a smaller temporal distance from the block to be encoded is often closer to the block to be encoded than a reference block having a larger temporal distance from the block to be encoded. Therefore, the prediction accuracy of the prediction method is improved and the encoding is performed efficiently by predicting the prediction method in the case of performing the multi-reference image prediction using the information of the temporal distance.

The tentative prediction method(s) is/are given to the blocks not subjected to the multi-reference image prediction in this way and the prediction methods are stored. In the case of the large quantization coefficient QP, since a code amount of the motion information of the multi-reference image prediction is relatively increased, the rate of blocks subjected to the multi-reference image prediction is reduced and many blocks have no prediction method. In this case, it is difficult to perform the prediction efficiently in the method of storing only the prediction methods of the blocks having the prediction methods. Therefore, setting the tentative prediction methods to increase the predictable blocks to be encoded contributes to the improvement of the prediction accuracy of the prediction method and the efficient encoding in the encoding method B.

The efficiency may further be improved by using the prediction method prediction value predicted by the prediction method predicting portion 883 also in the prediction method candidate generating portion 120. In the case of this method, the prediction method candidate generating portion 120 determines a set of selectable prediction methods and the prediction set number from the reference block difference level DIFF in accordance with Fig. 12 instead of Fig. 3 described earlier.

A difference between Fig. 12 and Fig. 3 is the prediction method used when the number of selectable prediction methods is one (when the reference block difference level DIFF is less than 300 in Figs. 12 and 3). In the method depicted in Fig. 3, when the number of selectable prediction methods is one, the one prediction method is the index 0. On the other hand, in the method depicted in Fig. 12, when the number of selectable prediction methods is one, the one prediction method is the prediction method prediction value calculated by the prediction method predicting portion 883. Since a more appropriate prediction block is likely to be generated in general by using the prediction method prediction value calculated depending on the surrounding situations rather than using a fixed prediction method, the encoding efficiency is improved. It is effective to store the prediction method prediction value storing the nature of the surrounding blocks to be encoded as a tentative prediction value in this way.

A set of selectable prediction methods depicted in Figs. 3 and 12 may be made variable on the basis of a slice or frame by encoding in a slice header or frame header.

<Description of Procedures of Moving Image Encoding>

Fig. 13 is a flowchart of procedures of the moving image encoding according to the present invention. Fig. 13 depicts procedures of encoding one block to be encoded and, if a frame to be encoded is made up of a plurality of blocks, the procedures are repeated by the number of the blocks.

First, a plurality of reference blocks are extracted from already encoded frames (step S10).
In the method of generating the prediction block candidates from the plurality of the extracted reference blocks, candidates of selectable prediction methods are generated based on predetermined information related to the block to be encoded (the reference block difference level DIFF in this embodiment) (step S11). The number M of the prediction method candidates may be changed or the contents of the prediction methods included in the prediction method candidates (linear prediction coefficients in the case of the linear prediction in this embodiment) may be changed based on the predetermined information. It is preferred to reduce the number of prediction method candidates as the reference block difference level DIFF becomes smaller. Particularly, when the reference block difference level DIFF is smaller than a predetermined value, the number of prediction method candidates may be set to one.

The prediction block candidate is then generated from the reference blocks in accordance with the prediction method candidates (step S12).
The most appropriate prediction block for the case of encoding the block to be encoded is selected from the generated prediction block candidates (step S13).
The motion information (motion vector and relative index, if any) necessary for generating the selected prediction block is encoded (step S14). The motion information is not encoded if the motion compensation mode that uses the motion information of the surrounding blocks to calculate the motion information of the block to be encoded (direct mode, see <Description of Motion Compensation Mode>) is used.

It is determined whether the number of the prediction method candidates is two or more (step S15).
If the number of the prediction method candidates is two or more (in the case of YES), the prediction methods are encoded (step S16) and the procedure goes to step S17. The encoding of the prediction methods is performed by transforming the prediction methods into the code numbers and by encoding the acquired code numbers as already described in the encoding method A and the encoding method B.
If the number of the prediction method candidates is one or less (in the case of NO at step S15), the prediction method is not encoded and the procedure goes to step S17.

At step S17, the prediction error is encoded. The encoding of the prediction error is preferably performed by transforming the prediction error with the DCT transform, etc. , to calculate the transform coefficient and by performing the variable-length encoding of a quantized transform coefficient acquired by quantizing the transform coefficient. The prediction error is not encoded if the motion compensation mode not encoding the prediction error is used (skip mode, see <Description of Motion Compensation Mode>).

It is possible to encode one block to be encoded by means of the above procedures. The order of the encoding of the motion information of the prediction block described in step S14, the encoding of the prediction methods described in step S16, and the encoding of the prediction error described in step S17 may be different from Fig. 13. However, if the information generated from the reference blocks (the reference block difference level DIFF) is used as the predetermined information used for generating the prediction method candidates as in this embodiment, the encoding of the motion information of the prediction blocks must be performed before the encoding of the prediction methods. Similarly, if the information generated from the prediction error (e.g., a sum of absolute values of prediction error) is used as the predetermined information, the encoding of the prediction error must be performed before the encoding of the prediction methods.

When the encoder of the first embodiment is used, a set of selectable prediction methods related to the generation of the prediction block candidates of the block may be changed depending on the reference block difference level DIFF of the block to be encoded. Therefore, if the reference block difference level DIFF is small, the number of selectable prediction methods may be reduced and a code amount for encoding the prediction methods may be reduced (especially when the number of selectable prediction methods is set to one or less, the code amount of the prediction methods may be set to zero for the block). If the number of selectable prediction methods is reduced, the number of costs to be calculated is reduced when the optimum prediction block is selected and, therefore, the calculation amount related to the encoding may be lessened.

If the reference block difference level DIFF is small, the linear prediction coefficients W1:W2 included in a set of selectable prediction methods are relatively differentiated to each other. For example, if a set of selectable prediction methods includes a linear prediction coefficient having W1:W2 of 1:1, a linear prediction coefficient away from 1:1 is also included in the set of selectable prediction methods (to use a set of prediction methods having a larger spread as a whole) . As a result, the spread of the prediction is enlarged for the prediction method candidates.

If the reference block difference level DIFF is large, the linear prediction coefficients W1:W2 included in a set of selectable prediction methods are relatively approximated to each other. For example, if a set of selectable prediction methods includes a linear prediction coefficient having W1:W2 of 1:1, a linear prediction coefficient having W1:W2 closer to 1:1 is also included in the set of selectable prediction methods (to use a set of prediction methods having a smaller spread as a whole). As a result, the spread of the prediction is narrowed for the prediction method candidates.

By setting W1 and W2 as above, even if the same number of candidates of the linear prediction coefficient is used, the linear prediction coefficient may be changed in accordance with the reference block difference level DIFF to improve the encoding efficiency. When a set of selectable prediction methods is defined as above, the same encoding efficiency is achievable with fewer selectable prediction methods and, therefore, the calculation amount related to the encoding may be reduced.

<Description of Relative Index>

A relative index is known as a method of identifying reference frames. To distinguish between two reference frames used for bi-prediction, the reference frames will be referred to as a first reference frame (REF1) and a second reference frame (REF2).

Fig. 14 is an explanatory diagram of a frame number and a relative index. The frame number and the relative index are the numbers for uniquely identifying a reference frame stored in the frame memory and the frame number is allocated as a value increased by one for each frame accumulated as a reference frame into the frame memory. The fixed values are allocated to the reference frames such as 0 for the firstly accumulated frame, 1 for the next accumulated frame, 2 for the next frame, and so on.

The relative index is also a number for uniquely identifying a reference frame and this value is allocated as a relative value from the view point of the frame to be encoded, instead of the fixed values allocated to the reference frames.

In one allocation method of the relative index, when there are FN frames that are reproduced before the frame to be encoded (from the viewpoint of the reproduction time) and BN frames that are reproduced after the frame to be encoded, numbers are allocated to the frames in the way that 0 is allocated to the frame that comes before the frame to be encoded by one frame, 1 is allocated to the frame that comes before the frame to be encoded by two frames,..., and FN-1 is allocated to the frame that comes before the frame to be encoded by FN frames, and also, FN is allocated to the frame that comes after the frame to be encoded by one frame, FN+1 is allocated to the frame that comes after the frame to be encoded by two frames,..., and FN+BN-2 is allocated to the frame that comes after the frame to be encoded by BN frames. This allocating method is an allocating method giving priority to the temporally preceding frames and is used for the relative index of the first reference frame.

In another allocating method of the relative index, numbers are allocated to the frames in the way that 0 is allocated to the frame that comes after the frame to be encoded by one frame, 1 is allocated to the frame that comes after the frame to be encoded by two frames, ..., and BN-1 is allocated to the frame that comes after the frame to be encoded by BN frames, and also,
BN is allocated to the frame that comes before the frame to be encoded by one frame, BN+1 is allocated to the frame that comes before the frame to be encoded by two frames, ..., and BN+FN-2 is allocated to the frame that comes before the frame to be encoded by FN frames. This allocating method is an allocating method giving priority to the temporally subsequent frames and is used for the relative index of the second reference frame.

The relative index of the first reference frame is referred to as a first relative index (RIDX1) and the relative index of the second reference frame is referred to as a second relative index (RIDX2). For example, referring to Fig. 14, a frame P12 immediately before a frame B to be subjected to the inter-picture prediction encoding through bi-prediction has the frame number of 12, the first relative index of 0, and the second relative index of 1.

Fig. 15 is a diagram for explaining an example of identifying a reference frame by using the relative indexes. In the example of Fig. 15, two frames (frames with the frame numbers of 11 and 12) come before the frame to be encoded (from the viewpoint of the reproduction time) and one frame (frame with the frame number of 13) comes after the frame to be encoded. Since a block 1 of Fig. 15 has RIDX1=0 and RIDX2=0, it is indicated that the reference frame with the frame number of 12 is used as the first reference frame and that the reference frame with the frame number of 13 is used as the second reference frame. Since a block 2 has RIDX1=1 and RIDX2=1, it is indicated that the reference frame with the frame number of 11 is used as the first reference frame and that the reference frame with the frame number of 12 is used as the second reference frame. By using the relative indexes as above, the reference frames may be identified with a code amount smaller than the case of encoding the frame number itself.

«Description of Motion Compensation Mode»

The motion compensation mode is the information for distinguishing the selected generation method from other generation methods when the generation method of the reference block is selectable from a plurality of methods. For example, the motion compensation mode includes a direct mode and a non-direct mode in one classification approach. In the direct mode, a motion information prediction value acquired from motion information of the surrounding blocks is directly used as the motion information of the block to be encoded, and the motion information of the block to be encoded is not explicitly encoded. The direct mode may be used when the motion of the block to be encoded is predictable from the surrounding blocks and improves the encoding efficiency since a code amount of the motion information may be eliminated. The non-direct mode is a collective name of the modes of explicitly encoding the motion information of the block to be encoded.

In another classification approach, the motion compensation mode includes a skip mode, which is a motion compensation mode not encoding the prediction error (this is considered as a kind of the direct mode in some cases), and a non-skip mode, which is a collective name of the modes of encoding the prediction error.

In further classification approach, motion compensation modes are included that divide the block to be encoded into smaller blocks to perform the motion compensation (the modes are referred to as a 16x16 block size mode, a 16×8 block size mode, an 8×16 block size mode, an 8x8 block size mode, etc., on the basis of divided block sizes).

«Second Embodiment»

Fig. 16 is a block diagram of a configuration of a moving image decoder of a second embodiment of the present invention. The decoder includes a variable-length code decoding portion 1600, an inverse quantizing portion 1603, an inverse transforming portion 1604, a frame memory 1605, a prediction block generating portion 1606, an adding portion 1611, and a prediction method candidate generating portion 1620.

The decoder of the embodiment is a decoder that adds a prediction image of a block to be decoded generated by using a plurality of reference images and a difference value of the block to be decoded to decode the block to be decoded and is capable of decoding the encoded data encoded by the encoder of the first embodiment, for example. When encoded data is input to the decoder, the variable-length code decoding portion 1600 decodes the quantized transform coefficient, the reference mode flag, and the motion information. The motion information is information necessary for generating the reference block, includes only the motion vector if the reference frame used for generating the reference block is not selected from a plurality of candidates, and includes the motion vector and the relative index that is information for identifying the reference frame if the reference frame used for generating the reference block is selected from a plurality of candidates.

The quantized transform coefficient is decoded through the inverse quantizing portion 1603 and the inverse transforming portion 1604 to reproduce the prediction error, which is output to the adding portion 1611. The reference mode flag and the motion information are output to the prediction block generating portion 1606. The prediction block generating portion 1606 generates a prediction block from decoded frames stored in the frame memory 1605, the reference mode flag, and the motion information, and the prediction block is output to the adding portion 1611. The adding portion 1611 decodes the block from a sum of the prediction error and the prediction block. The decoded block is output to the outside of the decoder on one hand and is stored in the frame memory 1605 on the other hand.

The reference mode flag may be decoded as a block type along with another piece of information of the block to be decoded (e.g., a flag for switching the intra-picture prediction and the inter-picture prediction or a flag indicative of whether prediction error information is included). If the block to be decoded has a plurality of motion compensation modes, the reference mode flag may be decoded along with the motion compensation mode.

The prediction block generating portion 1606 drives a motion compensating portion 1661 included therein to extract the reference blocks by using the reference mode flag and the motion information input from the variable-length code decoding portion 1600. The extraction of the reference blocks is performed by identifying the number of the reference blocks to be extracted with the reference mode flag (one block if the reference mode flag does not indicate the use of the multi-reference image prediction or predetermined N blocks if the reference mode flag indicates the use of the multi-reference image prediction), by selecting the reference frames identified by the relative index if the relative index exists as the motion information, and by extracting, from the selected reference frames, the reference blocks at the positions indicated by the motion vector of the motion information.

In the case of other than the multi-reference image prediction (in the case of forward prediction or backward prediction), the extracted reference block is directly output as a prediction block to the adding portion 1611.
In the case of the multi-reference image prediction, when all the reference blocks are extracted by the motion compensating portion 1661, the reference block difference level DIFF calculated in the same way as the first embodiment is output to the prediction method candidate generating portion 1620.

The prediction method candidate generating portion 1620 determines and outputs a set of selectable prediction methods and the number thereof (prediction set number) to the variable-length code decoding portion 1600 based on predetermined information related to the block to be decoded (the reference block difference level DIFF in this embodiment).

The variable-length code decoding portion 1600 drives a prediction block predicting portion 1662 included therein to generate the prediction block from a plurality of the reference blocks and the prediction block is output to the adding portion 1611.

The prediction block predicting portion 1662 uses the method of Eq. 1 as in the case of the first embodiment as the method of generating the prediction block from a plurality of the reference block. That is,

$$\text{prediction block} = (\text{reference block } 1) \times W1 + (\text{reference block } 2) \times W2.$$

For the parameters (linear prediction coefficients (W1, W2)) used at this point, the parameters of Fig. 2 are used as in the case of the first embodiment.

The prediction methods output from the variable-length code decoding portion 1600 may be parameters (the linear prediction coefficients in this case) indicative of the prediction methods or may be an index indicative of the prediction methods. For example, if the index indicative of the prediction methods is 2, the linear prediction coefficients are acquired as (3/8, 5/8) by reference to Fig. 2 and, therefore, the prediction block may be acquired as follows:

$$\text{prediction block} = (\text{reference block } 1) \times 3/8 + (\text{reference block } 2) \times 5/8.$$

The method of determining a set of selectable prediction methods and a prediction set number in the prediction method candidate generating portion 1620 will be described. The case of determining a set of selectable prediction methods and a prediction set number in accordance with Figs. 3 and 12 will hereinafter be described.

If the reference block difference level DIFF is equal to or greater than 300, a plurality of selectable prediction methods exist, and a determination is made such that the prediction set 1 (the indexes 0, 3, and 4) or the prediction set 2 (the indexes 0, 1, 2, 3, and 4) is used as the prediction method (a set of selectable prediction methods and a prediction set number) in accordance with the reference block difference level DIFF regardless of whether the relationship of Fig. 3 or 12 is satisfied.

If the reference block difference level DIFF is less than 300 and one selectable prediction method exists, the index 0 is used as the prediction method in the case of Fig. 3 and the prediction method prediction value is used that is the prediction value of the prediction method in the case of Fig. 12.

For the convenience of description, in this embodiment, the prediction method (the index 0 of Fig. 3 or the prediction method prediction value of Fig. 12) in the case of one selectable prediction method is determined within the variable-length code decoding portion 1600. The prediction method in the case of one selectable prediction method is decided when the variable-length code decoding portion 1600 decodes the prediction method instead of being decided by the prediction method candidate generating portion 1620. This is because the prediction method prediction value is determined in the decoding of the prediction method in the case of using Fig. 12 and the decoder is more easily configured by directly using the determined prediction method predicting value. Of course, in the case of using Fig. 3, the prediction method may easily be decided by the prediction method candidate generating portion 1620 and, in the case of using Fig. 12, a means of predicting the prediction method may be included within the prediction method candidate generating portion 1620 to fix the prediction method by deciding the prediction method prediction value in the case of one prediction method.

The procedures of decoding the prediction method in the variable-length code decoding portion 1600 will hereinafter be described. The variable-length code decoding portion 1600 determines whether decoding the prediction method by decoding the encoded data or obtaining the prediction method without decoding the encoded data depending on the input number M of selectable prediction methods.

If the number M of selectable prediction methods is zero (meaning that the multi-reference image prediction is not performed), the encoded data is not decoded and the prediction method is not decoded. If the number M of selectable prediction methods is one, it is not necessary to decode the prediction method information from the encoded data since the prediction method is fixed. Therefore, the encoded data is not decoded and the selectable prediction method (the index 0 of Fig. 3 or the prediction method prediction value of Fig. 12) is directly determined as the prediction method. If the number M of selectable prediction methods is two or more, the prediction method is decoded by decoding the encoded data. The decoding is performed by decoding the code number from the encoded data and transforming the obtained code number into the prediction method. If the number of selectable prediction methods is M, a value from 0 to M-1 is decoded as the code number.

Fig. 17 is a diagram of an example of a method for transforming the code number into the prediction method. As depicted in Fig. 17, the transform from the code number to the prediction method is performed in a different method for each prediction set number determined by the prediction method candidate generating portion 1620.

For example, if the prediction set number is the prediction set 1 and the code number is 1, the prediction method is decoded as the index 3 in accordance with Fig. 17. Although the decoded code number is also 1, if the prediction set number is the prediction set 2, the prediction method is decoded as the index 1 in accordance with Fig. 17.

Fig. 17 is a diagram of another example of a method for transforming the code number into the prediction method. As depicted in Fig. 18, the code number may directly be transformed into parameters (linear prediction coefficients in this case) indicative of the prediction method.

Details of the decoding method of the prediction method will then be described as methods (a decoding method A and a decoding method B) corresponding to the two methods (the encoding method A and the encoding method B) described in the first embodiment. The decoding method in the case of determining a set of selectable prediction methods in accordance with Fig. 3 will be described as the decoding method A and the decoding method in the case of determining a set of selectable prediction methods in accordance with Fig. 12 will be described as the decoding method B.

<Decoding Method B>

Fig. 19 is a diagram of an example of the internal configuration of the variable-length code decoding portion 1600. The variable-length code decoding portion 1600 of the decoding method A includes a code number decoding portion 1980, a code number/prediction method transforming portion 1986, a default value retaining portion 1987, and a switch 1988.

In the decoding method of the prediction method in this embodiment, the decoding method is changed depending on the number M of selectable prediction methods. The switch-over is performed by the switch 1988.

If the number M of selectable prediction methods is one (in the case of the prediction set 0), the switch 1988 is shifted to the prediction method output by the default value retaining portion 1987. The default value retaining portion 1987 retains the prediction method used when the number M of selectable prediction methods is one (zero is retained in this embodiment).

If the number M of selectable prediction methods is two or more (in the case of the prediction set 0), the switch 1988 is shifted to the prediction method output by the code number/prediction method transforming portion 1986. The code number acquired by the code number decoding portion 1980 by decoding the encoded data in accordance with Fig. 6 is transformed into the prediction method by the code number/prediction method transforming portion 1986 in accordance with Fig. 17, for example.

For example, if the prediction set number is the prediction set 1 (M=3) and the code is 11, the code number is decoded as 2 from Fig. 6. If the code number is 2, the prediction method is decoded as the index 4 from Fig. 17.

The prediction method is stored in the default value retaining portion 1987 when the number M of selectable prediction method is one because this embodiment is configured such that the variable-length code decoding portion 1600 determines the prediction method instead of the prediction method candidate generating portion 1620 when the number M of selectable prediction method is one, as described above.

<Decoding Method B>

Fig. 20 is a diagram of another example of the internal configuration of the variable-length code decoding portion 1600. The variable-length code decoding portion 1600 of the decoding method B includes a code number decoding portion 2080, a prediction method/code number transforming portion 2081, a prediction method predicting portion 2083, a prediction method storing portion 2084, a code number/prediction method transforming portion 2086, and a switch 2088. The prediction method predicting portion 2083 predicts the prediction method.

In the decoding method of the prediction method in this embodiment, the decoding method is changed depending on the number M of selectable prediction methods. The switch-over is performed by the switch 2088.

If the number M of selectable prediction methods is zero or one (the prediction set 0), the switch 2088 is shifted to select, as the prediction method, the prediction method prediction value of the block to be decoded (the prediction method of the block immediately before in this case) output by the prediction method predicting portion 2083.

Contrary, if the number M of selectable prediction methods is two or more, the switch 1988 is shifted to select the prediction method decoded from the encoded data output by the code number/prediction method transforming portion 2086.

The prediction method selected by the switch 2088 is output to the outside of the variable-length code decoding portion 1600, i.e., to the prediction block generating portion 1606 on one hand.

The prediction method selected by the switch 2088 is stored in the prediction method storing portion 2084 as the prediction method of the block to be decoded on the other hand. The block to be decoded in the case of not performing the multi-reference image prediction has no prediction method related to the multi-reference image prediction. However, in this embodiment, the block to be decoded not having the prediction method is also given the prediction method prediction value of the block to be decoded output by the prediction method predicting portion 2083 as a tentative prediction method and the prediction method is retained.

The prediction method predicting portion 2083 determines the prediction method prediction value from the prediction method of the decoded block stored in the prediction method storing portion 2084. The determined prediction method prediction value is branched into two and on one hand, is output to the prediction method/code number transforming portion 2081 and used when the prediction method is decoded from encoded data. On the other hand, the prediction method prediction value is output to the switch 2088 and used as the tentative prediction method of the block to be decoded not having the prediction method as described above.

The prediction method predicting portion 2083 predicts a prediction method (index) by reference to prediction methods of the surrounding blocks stored in the prediction method storing portion 2084. As described in the first embodiment (the encoding method B), one method for calculating the prediction method prediction value is to define the prediction method of the block immediately before as the prediction method prediction value. One of other methods is to define the medium value (median) of the indexes indicative of the prediction methods of the left block, the upper block, and the upper right block as the prediction method prediction value. In another method, it is conceivable to define the minimum value (or the maximum value) of the indexes indicative of the prediction methods of the left block and the upper block as the prediction method prediction value. The prediction method prediction value may be determined in other methods.

The acquired prediction method prediction value is used when the prediction method is decoded from encoded data. In this case, the prediction method prediction value is transformed by the prediction method/code number transforming portion 2081 into a code number prediction value in accordance with Fig. 4 used in the description of the first embodiment. The prediction method prediction value is used as the prediction method to define the code number transformed in accordance with Fig. 4 as the code number prediction value. The acquired code number predicting value is output to the code number decoding portion 2080. For example, if the prediction set number is prediction set 2 and the prediction method prediction value (index) is 4, the code number prediction value is output as 4 in accordance with Fig. 4.

The code number decoding portion 2080 decodes the code number from the encoded data by using the code number prediction value as follows. The code number decoding portion 2080 decodes one bit indicative of whether the prediction is right or wrong (the prediction right/wrong code). If the prediction right/wrong code is one, this means that the prediction is right and the code number prediction value is output as the code number. Conversely, if the prediction right/wrong code is zero, which means that the prediction is wrong and a residual code is further decoded depending on the number M of selectable prediction methods. In this case, the following K bits are decoded as the residual code. The bit count k is expressed by using the number M of selectable prediction methods as follows:

$$2^k \leq M-1 < 2^{k-1}.$$

From the value (the prediction error value) acquired by decoding the residual code subsequent to the prediction right/wrong code, the code number is decoded and output to the code number/prediction method transforming portion 2086 as follows:

code number = prediction error value (prediction error value < code number prediction value)

prediction error value +1 (prediction error value ≥ code number prediction value).

For example, in the case of the prediction set number of the prediction set 2, the code number prediction value of 2, and the code of the prediction error value of 10 in binary notation, the code number is as follows. First, the prediction error value is 2 when the code (10) is decoded. Because of the prediction error value ≥ the code number prediction value in this case, the code number is 2+1=3.

The code number decoded by the code number decoding portion 2080 is output to the code number/prediction method transforming portion 2086 and transformed from the code number into the prediction method (index) in accordance with Fig. 17, for example, and the prediction method in the case of decoding the prediction method is obtained.

As above, the switch 2088 selects either the decoded prediction method or the prediction method prediction value predicted by the prediction method predicting portion 2083 to decide the prediction method.
The sets of selectable prediction methods depicted in Fig. 3 or 12 may adaptively be switched slice by slice or frame by frame by decoding in a slice header or frame header before decoding the block to be decoded.

<Description of Procedures of Moving Image Decoding>

Fig. 21 is a flowchart of procedures of the moving image decoding according to the present invention. Fig. 21 depicts procedures of decoding one block to be encoded and, if a frame to be encoded is made up of a plurality of blocks, the procedures are repeated by the number of the blocks.
First, the motion information of the reference blocks is decoded from the input encoded data to extract the reference blocks (step S20). The motion information includes the motion vector and the relative index. If the motion information of the block to be decoded is not encoded and the encoding is performed in the motion compensation mode calculating the motion information through prediction (direct mode), the motion information is determined through prediction without decoding the encoded data.
In the prediction method of generating the prediction block from the plurality of the extracted reference blocks, candidates of selectable prediction methods are generated based on predetermined information related to the block to be encoded (the reference block difference level DIFF) (step S21). The number M of the prediction method candidates may be changed or the contents of the prediction methods (linear prediction coefficients in the case of the linear prediction) may be changed based on the predetermined information.
It is then determined whether the number of the prediction method candidates (the number of selectable prediction methods) is two or more (step S22).
If the number of the prediction method candidates is two or more (in the case of YES), the prediction methods are decoded by decoding the input encoded data (step S23) and the procedure goes to step S25.
If the number of the prediction method candidates is one or less (in the case of NO at step S22), the prediction method is determined in accordance with the selectable prediction method (step S24) and the procedure goes to step S25.
At step S25, the prediction block is generated from the reference blocks in accordance with the prediction method decoded at step S23 or the prediction method determined at step S24.
The prediction error is decoded from the input encoded data (step S26). The quantized transform coefficient is decoded by decoding a variable-length code; the transform coefficient is decoded by the inverse quantization; and the prediction error is reproduced by the inverse transform such as inverse DCT transform. The prediction error is not decoded if the motion compensation mode not encoding the prediction error (skip mode) is used.
A moving image is reproduced from a sum of the generated prediction block and the decoded prediction error (step S27).
The above procedures enable the decoding of one block to be decoded. The order of the decoding of the motion information of the reference blocks described in step S20, the decoding of the prediction methods described in step S23, and the decoding of the prediction error described in step S26 may be different from Fig. 21.
However, if the information generated from the reference blocks (the reference block difference level DIFF) is used as the predetermined information used for generating the prediction method candidates as in this embodiment, the decoding of the motion information of the prediction blocks must be performed before the decoding of the prediction methods. Similarly, if the information generated from the prediction error (e.g., a sum of absolute values of prediction error) is used as the predetermined information, the decoding of the prediction error must be performed before the decoding of the prediction methods.
Another method of predicting the prediction method in the prediction method predicting portion 2083 will be described. As in the case of the first embodiment, the method of the following description utilizes a temporal distance between a frame to which a block to be decoded (the block to be encoded in the description of the first embodiment) belongs and a frame to which a reference block belongs.
Fig. 10 is a diagram for explaining the operation of the prediction method predicting portion 2083 in the case of utilizing a temporal distance. The details of the method of obtaining the prediction method prediction value based on the temporal distance are the same as those in the first embodiment and will not be described (however, the block to be encoded, the encoded block, the frame memory 105, the prediction method predicting portion 883, and the prediction method storing portion 884 are replaced with the block to be decoded, the decoded block, the frame memory 1605, the prediction method predicting portion 2083, and the prediction method storing portion 2084, respectively, in this description). By predicting the prediction method in the case of performing the multi-reference image prediction based on the temporal distance between the block to be decoded and the reference block, the moving image decoder of the embodiment may decode encoded data in great efficiency.
As described above, at the time of decoding, the moving image decoder of the embodiment uses the reference block difference level DIFF of the block to be decoded to determine the information related to the selectable prediction methods, decodes the prediction methods in accordance with the determined information and the information related to the prediction methods in the encoded data, generates the prediction block from a plurality of reference blocks in accordance with the decoded prediction methods, and decodes the block based on the generated prediction block. Therefore, the decoding may be performed for the encoded data having a code amount reduced as in the case of the encoder of the first embodiment (i.e., the encoded data having a code amount for encoding the prediction methods reduced by reducing the number of selectable prediction methods when the reference block difference level DIFF of the block to be encoded is small). In other words, a code amount of the encoded data decodable in the decoder may be reduced. Since the number of costs to be calculated is reduced when the optimum prediction block is selected if the number of selectable prediction methods is reduced, a calculation amount may be reduced in association with the encoding of the encoded data decodable in the decoder.

The moving image decoder of the embodiment includes a linear prediction coefficient having W1:W2 away from 1:1 in the set of selectable prediction methods (to use a set of prediction methods having a larger spread as a whole) if the reference block difference level DIFF is small and includes a linear prediction coefficient having W1:W2 closer to 1:1 in the set of selectable prediction methods (to use a set of prediction methods having a smaller spread as a whole) if the reference block difference level DIFF is large. Therefore, the moving image decoder of the embodiment may decode the data encoded in great efficiency by determining a set of selectable prediction methods in the same way as the moving image encoder of the first embodiment. Since the same encoding efficiency may be achieved using fewer selectable prediction methods if a set of selectable prediction methods is determined as above, a calculation amount may be reduced in association with the encoding of the encoded data decodable in the decoder.

«Third Embodiment»

Fig. 22 is a block diagram of a configuration of a moving image encoder of a third embodiment of the present invention. The encoder includes a transforming portion 2201, a quantizing portion 2202, an inverse quantizing portion 2203, an inverse transforming portion 2204, a frame memory 2205, a prediction block candidate generating portion 2206, a prediction block selecting portion 2207, a variable-length encoding portion 2208, a subtracting portion 2210, an adding portion 2211, a prediction method candidate generating portion 2220, and a quantization coefficient setting portion 2230.

When a block to be encoded is input to the encoder, the quantization coefficient setting portion 2230 determines and outputs a quantization coefficient QP used for the encoding of the block to be encoded based on an encoded data amount output from the variable-length encoding portion 2208 to the quantizing portion 2202, the inverse quantizing portion 2203, and the prediction method candidate generating portion 2220. The prediction block candidate generating portion 2206 uses the encoded frames stored in the frame memory 2205 to generate prediction block candidates. The prediction block selecting portion 2207 selects the optimum block (prediction block) from the prediction block candidates.

The selected prediction block is input to the subtracting portion 2210 to calculate a difference (prediction error) between the block to be encoded and the prediction block. The calculated prediction error is subjected to the transform such as DCT transform by the transforming portion 2201 and the acquired transform coefficient is quantized by the quantizing portion 2202 to generate a quantized transform coefficient. The quantized transform coefficient is branched into two and is encoded by the variable-length encoding portion 2208 on one hand.

The quantized transform coefficient goes through the inverse quantizing portion 2203 and the inverse transforming portion 2204 for reproducing the prediction error on the other hand. The reproduced prediction error is added to the prediction block by the adding portion 2211 to generate a locally decoded block. The locally decoded block is output to and stored as an encoded frame in the frame memory 2205. The stored encoded frame is used as a reference when a subsequent frame or subsequent block to be encoded of the current frame is encoded.

The prediction block candidate generating portion 2206 includes a motion searching portion not depicted therein. The motion searching portion extracts reference blocks similar to the block to be encoded from the frames stored in the frame memory 2205. In this case, a plurality of (N) reference blocks (referred to as a reference block 1, a reference block 2, ..., a reference block N) are extracted.

The prediction method candidate generating portion 2220 determines a set of selectable prediction methods and a prediction set number based on predetermined information related to the block to be encoded (the quantization coefficient QP in this embodiment) and outputs them to the prediction block candidate generating portion 2206.

The prediction block candidate generating portion 2206 generates a prediction block candidate from a plurality of (N) reference blocks in accordance with the determined set of selectable prediction methods. Although one method of generating the prediction block candidate from a plurality of the reference blocks is to generate the prediction block candidate from the product-sum operation of the reference blocks and the linear prediction coefficients (linear prediction), the prediction block candidate may be generated from a plurality of the reference blocks in a method other than the linear prediction.

In this embodiment, the method of Eq. 1 is used as the method of generating the prediction block candidate from a plurality of the reference blocks in the prediction block candidate generating portion 2206 as in the case of the first embodiment. That is,

prediction block candidate = (reference block 1)×W1+(reference block 2)×W2.

The parameters (linear prediction coefficients) used in the method is those depicted in Fig. 2 as in the case of the first embodiment.

If the linear prediction coefficients (W1, W2) of (4/8, 4/8), (6/8, 2/8), and (2/8, 6/8) or the indexes 0, 3, and 4 are input as a set of selectable prediction methods, the prediction block candidate generating portion 2206 generates the prediction block candidates as follows:

prediction block candidate 1 = (reference block 1);

prediction block candidate 2 = (reference block 2);

prediction block candidate 3 = (reference block 1)×4/8+(reference block 2)×4/8;

prediction block candidate 4 = (reference block 1)×6/8+(reference block 2)×2/8; and

prediction block candidate 5 = (reference block 1)×2/8+(reference block 2)×6/8.

As in the case of the first embodiment, instead of making an exception for the prediction block candidates predicted from only one reference block (the prediction block candidate 1 and the reference block candidate 2 in this case), the prediction block candidates may be generated by preparing a prediction method of making a prediction from only one reference block such as the linear prediction coefficients (W1, W2) of (8/8, 0/8) and (0/8, 8/8).

The generated prediction block candidates, the information necessary for generating the prediction block candidates (motion information and prediction methods), and the information necessary for encoding the prediction methods (prediction set number) are output to the prediction block selecting portion 2207.

Fig. 23 is a diagram of an example of a method for determining a set of selectable prediction methods and a prediction set number from the quantization coefficient QP. The prediction method candidate generating portion 2220 determines a set of selectable prediction methods and the number thereof (prediction set number) based on predetermined information related to the block to be encoded (the quantization coefficient QP in this embodiment) and outputs them to the prediction block candidate generating portion 2206.

Fig. 23 indicates that one of the following three sets of prediction methods (a prediction set 0, a prediction set 3, and a prediction set 2) is selected depending on the quantization coefficient QP:

the prediction set number 1: the selectable prediction methods (indexes) are 0, 3, and 4;
the prediction set number 3: the selectable prediction methods (indexes) are 0, 1, and 2; and
the prediction set 2: the selectable prediction methods (indexes) are 0, 1, 2, 3, and 4.

The number M of selectable prediction methods may be changed depending on a set of prediction methods and is 3, 3, or 5 in Fig. 23.

Although the code amount reduction effect by increasing the number of selectable prediction methods (adaptively switching many prediction block candidates) is relatively small when the quantization coefficient QP is large, the code amount of the prediction methods is accordingly increased when the number of selectable prediction method is increased. Therefore, as depicted in the example of Fig. 23, if the quantization coefficient QP is large, the number of the prediction methods may be reduced to improve the encoding efficiency and reduce the calculation amount at the same time.

Since the linear prediction coefficients having W1:W2 away from 1:1 (a set of prediction methods having a larger spread) are often preferred for the prediction block candidate generation method when the quantization coefficient QP is large and the linear prediction coefficients having W1:W2 close to 1:1 (a set of prediction methods having a smaller spread) are often preferred for the prediction block candidate generation method when the quantization coefficient QP is small, it is preferred to change the contents (linear prediction coefficients) of the set of selectable prediction method depending on the quantization coefficient QP even if the number of the selectable prediction methods is the same.

The above nature is understandable from rate-distortion characteristics by referring to the equation of RD cost.

RD cost = SSD of locally decoded block and block to be encoded $+\lambda\times$(code amount of prediction error + code amount of encoding parameter)

Since the value of $\lambda$ is increased as the quantization coefficient QP becomes larger in the rate-distortion characteristics, the effect of a code amount in increased in this equation. Therefore, if the SSD reduction effect by changing the prediction methods is the same, it is preferred to reduce the number of selectable prediction coefficients and to reduce a code amount of the prediction methods. Conversely, if the equal number of prediction coefficients is used, it is necessary to use the prediction methods having a greater SSD reduction effect. Since the set of prediction methods having a smaller spread has a limited SSD reduction effect, it is preferred to use the set of prediction methods having a larger spread.

As depicted in Fig. 23, if the quantization coefficient QP is large (QP>32), a set of selectable prediction methods (indexes) may be 0, 3, and 4, that is, the linear prediction coefficients may be (4/8, 4/8), (6/8, 2/8), and (2/8, 6/8) to prepare candidates away from 1:1 such as (6/8, 2/8) and (2/8, 6/8) (to prepare a set of prediction methods having a larger spread as a whole), and if the quantization coefficient QP is smaller ($16<QP\leq32$), a set of selectable prediction methods (indexes) may be 0, 1, and 2, that is, the linear prediction coefficients may be (4/8, 4/8), (5/8, 3/8), and (3/8, 5/8) to prepare candidates close to 1:1 such as (5/8, 3/8) and (3/8, 5/8) (to prepare a set of prediction methods having a smaller spread as a whole).

The sets of selectable prediction methods depicted in Fig. 23 may adaptively be switched slice by slice or frame by frame by decoding in a slice header or frame header.

The prediction block selecting portion 2207 selects the prediction block having the smallest cost from a plurality of prediction block candidates generated by the prediction block candidate generating portion 2206. SAD, SSD, RD cost, M cost, etc. , are used as the cost as described in the first embodiment. At the time of selection, a reference mode flag is determined as a flag indicative of what reference block is used. The prediction block selecting portion 2207 outputs to the variable-length encoding portion 2208 the information necessary for generating the selected prediction block (the reference mode flag, the motion information, and the prediction method when the reference mode flag indicates the use of the multi-reference image prediction) and outputs the prediction set number to the variable-length encoding portion 2208 as the information for encoding the prediction method in the case of the multi-reference image prediction.

The variable-length encoding portion 2208 encodes the quantization coefficient input from the quantization coefficient setting portion 2230, the quantized transform coefficient input from the quantizing portion 2202, the reference mode flag and the motion information input from the prediction block selecting portion 2207, and, if the reference mode flag indicates the use of the multi-reference image prediction, the motion information. The reference mode flag may be encoded as a block type along with another piece of information of the block to be encoded or may be encoded along with the motion compensation modes if the block to be encoded has a plurality of motion compensation modes, as in the case of the first embodiment.

The variable-length encoding portion 2208 transforms the prediction method into a code number in accordance with the prediction set number and then encodes the code number. Although the details of the encoding are the same as those in the first embodiment and will not be described, the encoding of the prediction method is performed if the number of prediction method candidates is two or more and the encoding of the prediction method is not performed if the number of prediction method candidates is one or less.

If the encoder of the third embodiment is used, a set of selectable prediction methods related to the generation of the prediction block candidates of the block may be changed depending on the quantization coefficient QP of the block to be encoded. Therefore, if the quantization coefficient QP is large, the number of selectable prediction methods may be reduced to reduce a code amount for encoding the prediction methods and a calculation amount for the encoding may be reduced at the same time.

By including linear prediction coefficients having W1:W2 away from 1:1 in the set of selectable prediction methods (to use a set of prediction methods having a larger spread as a whole) if the quantization coefficient QP is large and by including more linear prediction coefficients having W1:W2 closer to 1:1 in the set of selectable prediction methods (to use a set of prediction methods having a smaller spread as a whole) if the quantization coefficient QP is small, the encoding efficiency may be improved if the equal number of linear prediction coefficient candidates are used. Since the same encoding efficiency may be achieved using fewer selectable prediction methods if a set of selectable prediction methods is determined in this way, a calculation amount for the encoding may be reduced.

«Fourth Embodiment»

Fig. 24 is a block diagram of a configuration of a moving image decoder of a fourth embodiment of the present invention. The decoder includes a variable-length code decoding portion 2400, an inverse quantizing portion 2403, an inverse transforming portion 2404, a frame memory 2405, a prediction block generating portion 2406, an adding portion 2411, and a prediction method candidate generating portion 2420.

The decoder of the embodiment is capable of decoding the encoded data encoded by the encoder of the third embodiment, for example. When encoded data is input to the decoder, the variable-length code decoding portion 2400 decodes the quantization coefficient QP, the reference mode flag, the motion information (the motion vector, and the relative index if the reference frame used for generating the reference block is selected from a plurality of candidates), and the quantized transform coefficient. The quantization coefficient QP is output to the inverse quantizing portion 2403 and the prediction method candidate generating portion 2420; the reference mode flag and the motion information are output to the prediction block generating portion 2406; and the quantized transform coefficient is output to the inverse quantizing portion 2403. The reference mode flag may be decoded as a block type along with another piece of information of the block to be decoded as in the case of the second embodiment or may be decoded along with the motion compensation mode if the block to be decoded has a plurality of motion compensation modes.

The quantized transform coefficient is decoded through the inverse quantizing portion 2403 and the inverse transforming portion 2404 to reproduce the prediction error, which is output to the adding portion 2411. The prediction block generating portion 2406 generates a prediction block from decoded frames stored in the frame memory 2405, the reference mode flag, and the motion information, and the prediction block is output to the adding portion 2411. The adding portion 2411 decodes the block from a sum of the prediction error and the prediction block. The decoded block is output to the outside of the decoder on one hand and is stored in the frame memory 2405 on the other hand.

The prediction block generating portion 2406 drives a motion compensating portion 2461 included therein to use the reference mode flag and the motion information input from the variable-length code decoding portion 2400 to select the reference frame indicated by the relative index if the relative index exists in the motion information and to extract, from the selected reference frames, the reference blocks at the positions indicated by the motion vector of the motion information. If the reference mode flag does not indicate the use of the multi-reference image prediction, only one reference block is extracted. If the reference mode flag indicates the use of the multi-reference image prediction, a plurality of the reference blocks are extracted.

In the case of other than the multi-reference image prediction (in the case of forward prediction or backward prediction), the extracted reference block is directly output as a prediction block to the adding portion 2411.
In the case of the multi-reference image prediction, the extracted plurality of reference blocks are output to the prediction block predicting portion 2462 included within the prediction block generating portion 2406, which generates and outputs the prediction block to the adding portion 2411.
The linear prediction of Eq. 1 is used as the method of generating the prediction block from a plurality of the reference blocks in the prediction block candidate generating portion 2462 as in the case of the first embodiment (a prediction method other than the linear prediction may be used).

The prediction method candidate generating portion 2420 determines a set of selectable prediction methods and the number thereof (prediction set number) based on predetermined information related to the block to be decoded (the quantization coefficient QP in this embodiment) and outputs them to the variable-length code decoding portion 2400. The prediction method candidate generating portion 2420 determines the set of selectable prediction methods and the number thereof in accordance with Fig. 23.

The variable-length code decoding portion 2400 decodes the prediction methods in accordance with the set of selectable prediction methods and the prediction set number. In the decoding of the prediction methods, the code number is decoded and the code number is then transformed into the prediction methods depending on the prediction set number. The details of the decoding are the same as those in the second embodiment and will not be described.

The decoded prediction methods are output to the prediction block generating portion 2406. The prediction methods may be parameters (the linear prediction coefficients in this case) indicative of the prediction methods or may be an index indicative of the prediction methods. The prediction block generating portion 2406 generates the prediction block in accordance with the prediction methods.

The relationship of the sets of selectable prediction methods, the prediction set numbers, and the quantization coefficients depicted in Fig. 23 may adaptively be switched slice by slice or frame by frame since the encoded data may be decoded for each slice header or frame header.

As described above, the moving image decoder of the embodiment uses the quantization coefficient QP of the block to be decoded to determine the information related to the selectable prediction methods, decodes the prediction methods in accordance with the determined information and the information related to the prediction methods in the encoded data, generates the prediction block from a plurality of reference blocks in accordance with the decoded prediction methods, and decodes the block based on the generated prediction block. Therefore, the decoding may be performed for the encoded data having a code amount reduced as in the case of the encoder of the third embodiment (i.e., the encoded data having a code amount for encoding the prediction methods reduced by changing the set of selectable prediction methods related to the generation of the prediction block of the block depending on the quantization coefficient QP of the block to be encoded to reduce the number of selectable prediction methods when the quantization coefficient QP is large). In other words, a code amount of the encoded data decodable in the decoder may be reduced. Since the number of costs to be calculated is reduced when the optimum prediction block is selected if the number of selectable prediction methods is reduced, a calculation amount may be reduced in association with the encoding of the encoded data decodable in the decoder.

The moving image decoder of the embodiment includes a linear prediction coefficient having W1:W2 away from 1:1 in the set of selectable prediction methods (to use a set of prediction methods having a larger spread as a whole) if the quantization coefficient QP is large and includes a linear prediction coefficient having W1:W2 closer to 1:1 in the set of selectable prediction methods (to use a set of prediction methods having a smaller spread as a whole) if the quantization coefficient QP is small. Therefore, the moving image decoder of the embodiment may decode the data which is encoded in high efficiency by determining a set of selectable prediction methods in the same way as the moving image encoder of the third embodiment. Since the same encoding efficiency may be achieved using fewer selectable prediction methods if a set of selectable prediction methods is determined as above, a calculation amount may be reduced in association with the encoding of the encoded data decodable in the decoder.

«Fifth Embodiment»

Fig. 25 is a block diagram of a configuration of a moving image encoder of a fifth embodiment of the present invention. The encoder includes a transforming portion 2501, a quantizing portion 2502, an inverse quantizing portion 2503, an inverse transforming portion 2504, a frame memory 2505, a prediction block candidate generating portion 2506, a prediction block selecting portion 2507, a variable-length encoding portion 2508, a subtracting portion 2510, an adding portion 2511, and a prediction method candidate generating portion 2520.

When a block to be encoded is input to the encoder, the prediction block candidate generating portion 2506 uses the encoded frames stored in the frame memory 2505 to generate prediction block candidates. The prediction block selecting portion 2507 selects the prediction block from the prediction block candidates.

The selected prediction block is input to the subtracting portion 2510 to calculate a difference (prediction error) between the block to be encoded and the prediction block. The calculated prediction error is subjected to the transform such as DCT transform by the transforming portion 2501 and the acquired transform coefficient is quantized by the quantizing portion 2502 to generate a quantized transform coefficient. The quantized transform coefficient is branched into two and is encoded by the variable-length encoding portion 2508 on one hand.

The quantized transform coefficient goes through the inverse quantizing portion 2503 and the inverse transforming portion 2504 for reproducing the prediction error on the other hand. The reproduced prediction error is added to the prediction block by the adding portion 2511 to generate a locally decoded block. The locally decoded block is output to and stored as an encoded frame in the frame memory 2505. The stored encoded frame is used as a reference when a subsequent frame or subsequent block to be encoded of the current frame is encoded.

The prediction block candidate generating portion 2506 includes a motion searching portion not depicted therein. The motion searching portion extracts reference blocks similar to the block to be encoded from the frames stored in the frame memory 2505. The motion searching portion of the fifth embodiment uses a plurality of motion compensation modes to extract blocks similar to the block to be encoded. Although an example of using two modes, i.e., a first motion compensation mode and a second motion compensation mode as the motion compensation modes will be described in this embodiment, more motion compensation modes may be used. For example, it is contemplated that the motion prediction modes include a skip mode, a direct mode, a 16×16 prediction mode, an 8×8 prediction mode, and a 4x4 prediction mode.

It is preferable for the first motion compensation mode to use a mode of reducing code amounts of the encoding parameter and the prediction residual error among others with a method including omission (e.g., a direct mode not encoding the motion information, a skip mode not encoding the motion information and the prediction residual error, a mode encoding only hint information of the prediction method of the motion information instead of encoding the motion information itself, a mode of using motion information with accuracy reduced, a mode with a code amount reduced by such as a switch-over to a dedicated variable-length encoding, etc.). The second motion compensation mode is a motion compensation mode other than the first motion compensation mode. The omitted information is compensated by prediction from already encoded information (already decoded information in the case of the decoder), etc.

For example, if the direct mode and the non-direct mode are used as the motion compensation modes, the first motion compensation mode is the direct mode and the second motion compensation mode is the non-direct mode. If the skip mode and the non-skip mode are used as the motion compensation modes, the first motion compensation mode is the skip mode and the second motion compensation mode is the non-skip mode. If the skip mode, the direct mode, and modes other than the skip and direct modes are used as the motion compensation modes, the first motion compensation modes are the skip mode and the direct mode and the second motion compensation modes are the modes other than the skip and direct modes.

However, the classification of the first motion compensation mode and the second motion compensation mode is not limited to the classification of whether a mode reduces code amounts of the encoding parameter and the prediction residual error among others and may be, for example, a classification for motion compensation modes of dividing the block to be encoded into smaller blocks to perform the motion compensation (a 16x16 block size mode, a 16×8 block size mode, an 8x16 block size mode, and an 8×8 block size mode).

The motion searching portion extracts a plurality of reference blocks for each motion compensation mode. It is assumed that N blocks for the first motion compensation mode and N blocks for the second motion compensation mode are extracted. The extracted reference blocks are referred to as follows:

a first motion compensation mode reference block 1 (DREF 1);
a first motion compensation mode reference block 2 (DREF 2);
a first motion compensation mode reference block N (DREF N);
a second motion compensation mode reference block 1 (NDREF 1);
a second motion compensation mode reference block 2 (NDREF 2);
a second motion compensation mode reference block N (NDREF N).

The prediction block candidate generating portion 2506 outputs the motion compensation modes to the prediction method candidate generating portion 2520. The first motion compensation mode and the second motion compensation mode are sequentially output in this case.

The prediction method candidate generating portion 2520 determines a set of selectable prediction methods and a prediction set number based on predetermined information related to the block to be encoded (the motion compensation mode in this embodiment) and outputs them to the prediction block candidate generating portion 2506. Two types of motion prediction modes, i.e., the first motion compensation mode and the second motion compensation mode are sequentially input in this case. The set of selectable prediction methods and the prediction set number of the first motion compensation mode and the set of selectable prediction methods and the prediction set number of the second motion compensation mode are then determined and output.

The prediction block candidate generating portion 2506 generates a prediction block candidate from a plurality of (N) reference blocks in accordance with the determined set of selectable prediction methods for each motion prediction mode. Although one method of generating the prediction block candidate from a plurality of the reference blocks is to generate the prediction block candidate from the product-sum operation of the reference blocks and the linear prediction coefficients (linear prediction), the prediction block candidate may be generated from a plurality of the reference blocks in a method other than the linear prediction.

MD types of prediction methods are determined as a set of selectable prediction methods for the case that the motion compensation mode is the first motion compensation mode. The linear prediction coefficients for the respective prediction methods are expressed as follows:

[Formula 7]

$$WP_1^d \sim WP_{md}^d$$

where

[Formula 8]

$$WP_k^d=(W_k^d1,\ W_k^d1,\ldots,\ W_k^dN).$$

MND types of prediction methods are determined for the case that the motion compensation mode is the second motion compensation mode. The linear prediction coefficients for the respective prediction methods are expressed as follows:

[Formula 9]

$$WP_1^{nd} \sim WP_{mnd}^{nd}$$

where

[Formula 10]

$$WP_k^{nd}=(W_k^{nd}1,\ W_k^{nd}2,\ldots,\ W_k^{nd}N).$$

The following MD+N+MND prediction block candidates are then generated:

[Formula 11]

a prediction block candidate 1 = WeightedFunc(DREF1,..., DREFN, $WP_1^d$),

a prediction block candidate 2 = WeightedFunc(DREF1,..., DREFN, $WP_2^d$),

...

a prediction block candidate MD = WeightedFunc(DREF1,...,

DREFN, $WP_{md}^{d}$),

a prediction block candidate MD+1 = NDREF1,

a prediction block candidate MD+2 = NDREF2,

...

a prediction block candidate MD+N = NDREFN,

a prediction block candidate MD+N+1 = WeightedFunc(NDREF1,..., NDREFN, $WP_1^{nd}$),

a prediction block candidate MD+N+2 = WeightedFunc(NDREF1,..., NDREFN, $WP_2^{nd}$),

...

a prediction block candidate MD+N+MND = WeightedFunc(NDREF1,..., NDREFN, $WP_{mnd}^{nd}$).

WeightedFunc(REF1, ..., REFN, WP) is the following function of generating a prediction block candidate from reference blocks REF1 to REFN and linear prediction coefficients WP (=(W1, W2, ..., WN)):

$$\text{WeightedFunc}(\text{REF1},\ldots,\text{REFN},\text{WP}) = (\text{W1}\times\text{REF1})+(\text{W2}\times\text{REF2})+\ldots+(\text{WN}\times\text{REFN}).$$

Without making an exception of the prediction block candidates predicted from only one reference block (the prediction block candidate MD+1, the prediction block candidate MD+2, ..., the prediction block candidate MD+N in this case), the prediction block candidates may be generated as Equation 14 by preparing a prediction method of making a prediction from only one reference block such as the linear prediction coefficients (W1, W2, ..., WN) of (8/8, 0/8, ..., 0/8) and (0/8, 8/8, ..., 8/8) for the linear prediction coefficients expressed by the following Equation 12 to prepare a total of MND+N linear prediction coefficients as Equation 13.

[Formula 12]

$$WP_1^{nd} \sim WP_N^{nd}$$

[Formula 13]

$$WP_1^{nd} \sim WP_{mnd+N}^{nd}$$

[Formula 14]

$$\text{a prediction block candidate } 1 = \text{WeightedFunc}(DREF1, \ldots, DREFN, WP_1^{d}),$$

$$\text{a prediction block candidate } 2 = \text{WeightedFunc}(DREF1, \ldots, DREFN, WP_2^{d}),$$

...

$$\text{a prediction block candidate } MD = \text{WeightedFunc}(DREF1, \ldots, DREFN, WP_{md}^{d}),$$

$$\text{a prediction block candidate } MD+1 = \text{WeightedFunc}(NDREF1, \ldots, NDREFN, WP_1^{nd}),$$

$$\text{a prediction block candidate } MD+2 = \text{WeightedFunc}(NDREF1, \ldots, NDREFN, WP_2^{nd}),$$

...

$$\text{a prediction block candidate } MD+N+MND = \text{WeightedFunc}(NDREF1, \ldots, NDREFN, WP_{mnd+N}^{nd})$$

In this embodiment, description will be made for the case that the number of reference block is N=2 and the method of Eq. 1 is used as the method of generating the prediction block candidate from a plurality of the reference blocks as in the case of the first embodiment. That is,

$$\text{prediction block candidate} = (\text{reference block } 1) \times W1 + (\text{reference block } 2) \times W2.$$

The parameters (linear prediction coefficients) used in the method is those depicted in Fig. 2 as in the case of the first embodiment.

Description will be made on the case that the linear prediction coefficients (W1, W2) of (4/8, 4/8), (6/8, 2/8), and (2/8, 6/8) or the indexes 0, 3, and 4 are input as a set of selectable prediction methods for the first motion compensation mode of the motion compensation mode and that the linear prediction coefficients (W1, W2) of (4/8, 4/8), (5/8, 3/8), and (3/8, 5/8) or the indexes 0, 1, and 2 are input as a set of selectable prediction methods for the second motion compensation mode of the motion compensation mode.

The prediction block candidate generating portion 2506 generates the prediction block candidates as follows. The following equation is defined as Eq. 2:

$$\text{prediction block candidate } 1 = (DREF1) \times 4/8 + (DREF2) \times 4/8;$$

$$\text{prediction block candidate 2} = (DREF1)\times 6/8+(DREF2)\times 2/8;$$

$$\text{prediction block candidate 3} = (DREF1)\times 2/8+(DREF2)\times 6/8;$$

$$\text{prediction block candidate 4} = (NDREF1);$$

$$\text{prediction block candidate 5} = (NDREF2);$$

$$\text{prediction block candidate 6} = (NDREF1)\times 4/8+(NDREF2)\times 4/8;$$

$$\text{prediction block candidate 7} = (NDREF1)\times 5/8+(NDREF2)\times 3/8;$$

and

$$\text{prediction block candidate 8} = (NDREF1)\times 3/8+(NDREF2)\times 5/8.$$

The generated prediction block candidates, the information necessary for generating the prediction blocks (the motion compensation mode, the motion information, and the prediction methods), and the information necessary for encoding the prediction methods (the prediction set number) are output to the prediction block selecting portion 2507. The motion information includes the motion vector and the relative index.

Fig. 26 is a diagram of an example of a method for determining a set of selectable prediction methods and a prediction set number from the motion compensation mode. Fig. 26 indicates that one of the following two sets of prediction methods (a prediction set 1 and a prediction set 3) is selected depending on the motion compensation mode:

the prediction set 1: the selectable prediction methods (indexes) are 0, 3, and 4; and
the prediction set 3: the selectable prediction methods (indexes) are 0, 1, and 2.

The prediction method candidate generating portion 2520 determines a set of selectable prediction methods and the number thereof (a prediction set number) in accordance with Fig. 26 based on predetermined information related to the block to be encoded (the motion compensation mode in this embodiment) and outputs them to the prediction block candidate generating portion 2506.

It is experimentally known that the linear prediction coefficients having W1:W2 away from 1:1 (a set of prediction methods having a larger spread) are often preferred for the prediction block candidate generation method when the motion compensation mode is the first motion compensation mode and that the linear prediction coefficients having W1:W2 close to 1:1 (a set of prediction methods having a smaller spread) are often preferred for the prediction block candidate generation method when the motion compensation mode is the second motion compensation mode. Therefore, even if the number of the selectable prediction methods is the same, it is preferred to change the contents (linear prediction coefficients) of the set of selectable prediction method depending on the motion compensation mode.

As depicted in Fig. 26, if the motion prediction mode is the first motion compensation mode, a set of selectable prediction methods (indexes) may be 0, 3, and 4, that is, the linear prediction coefficients may be (4/8, 4/8), (6/8, 2/8), and (2/8, 6/8) to prepare candidates away from 1:1 such as (6/8, 2/8) and (2/8, 6/8) (to prepare a set of prediction methods having a larger spread as a whole), and if the motion prediction mode is the second motion compensation mode, a set of selectable prediction methods (indexes) may be 0, 1, and 2, that is, the linear prediction coefficients may be (4/8, 4/8), (5/8, 3/8), and (3/8, 5/8) to prepare candidates close to 1:1 such as (5/8, 3/8) and (3/8, 5/8) (to prepare a set of prediction methods having a smaller spread as a whole).

Fig. 27 is a diagram of another example of a method for determining a set of selectable prediction methods and a prediction set number from the motion compensation mode. As depicted in Fig. 27, it is also preferred to change the number of selectable prediction methods depending on whether the motion prediction mode is the first motion compensation mode or the second motion compensation mode. Since the effect of improving the encoding efficiency by allocating a code amount to the linear prediction coefficient is limited in the first motion compensation mode in this case, it is preferred to reduce the number of selectable prediction methods as compared to the second compensation mode.

If the motion compensation mode includes a plurality of modes, it is preferred to vary the number of prediction method candidates and vary the spread of prediction of the prediction method as above.

The relationship of the sets of selectable prediction methods, the prediction set numbers, and the motion compensation mode depicted in Figs. 26 and 27 may adaptively be switched slice by slice or frame by frame by encoding in a slice header or frame header.

The prediction block selecting portion 2507 selects the block (prediction block) having the smallest cost from a plurality of the prediction block candidates generated by the prediction block candidate generating portion 2506. SAD, SSD, RD cost, M cost, etc. , are used for the calculation of the cost as described in the first embodiment. A reference mode flag is determined as a flag indicative of what reference block is used. The prediction block selecting portion 2507 outputs to the variable-length encoding portion 2508 the information necessary for generating the selected prediction block (the motion compensation mode, the reference mode flag, the motion information, and the prediction method when the reference mode flag indicates the use of the multi-reference image prediction) and the prediction set number as the information for encoding the prediction method. The prediction set number is output only in the case of the multi-reference image prediction and is not output in other cases.

The variable-length encoding portion 2508 encodes the motion compensation mode, the reference mode flag, the motion information, and the prediction method input from the prediction block selecting portion 2507 in addition to the quantized transform coefficient. However, if the motion compensation mode is the first motion compensation mode, the encoding of the reference mode flag and the motion information is skipped. If the reference frame used in the case of generating the reference block 1 and the reference block 2 is limited to the frame indicated by the relative index=0, it is not necessary to identify the reference frame and the encoding of the relative index is skipped. The reference mode flag may be encoded as a block type along with another piece of information of the block to be encoded or may be encoded along with the motion compensation modes if the block to be encoded has a plurality of motion compensation modes, as in the case of the first embodiment.

In the encoding method of the prediction method performed by the variable-length encoding portion 2508, the prediction method is transformed into a code number in accordance with the prediction set number and then the code number is encoded. Although the details of the encoding are the same as those in the first embodiment and will not be described, the encoding of the prediction method is performed if the number of prediction method candidates is two or more and the encoding of the prediction method is not performed if the number of prediction method candidates is one or less.

If the encoder of the fifth embodiment is used, a set of selectable prediction methods related to the generation of the prediction block candidates of the block may be changed depending on the motion compensation mode of the block to be encoded. Therefore, if the motion compensation mode is the first motion compensation mode, the number of selectable prediction methods may be reduced to reduce a code amount for encoding the prediction methods and a calculation amount for the encoding may be reduced at the same time.

By including linear prediction coefficients having W1:W2 away from 1:1 in the set of selectable prediction methods (to use a set of prediction methods having a larger spread as a whole) if the motion compensation mode is the first motion compensation mode and by including more linear prediction coefficients having W1:W2 closer to 1:1 in the set of selectable prediction methods (to use a set of prediction methods having a smaller spread as a whole) if the motion compensation mode is the second motion compensation mode, the encoding efficiency may be improved if the equal number of linear prediction coefficient candidates are used. Since the same encoding efficiency may be achieved using fewer selectable prediction methods if a set of selectable prediction methods is determined in this way, a calculation amount for the encoding may be reduced.

The above discussion also applies to the case of using more than two motion compensation modes. In this case, the number of prediction methods and a set of prediction methods may be changed for each of a plurality of the motion compensation modes or it is also preferred to classify a plurality of the motion compensation modes into several groups to change the number of prediction methods and a set of prediction methods for each group. For example, if the skip mode, the direct mode, the 16x16 prediction mode, the 8×8 prediction mode, and the 4×4 prediction mode are used as the motion prediction modes, the modes are classified into two groups depending on whether a mode reduces the code amounts of the encoding parameter and the prediction residual error by omission, etc., and the number of prediction methods is reduced and/or a set of prediction methods having a larger spread is used in the case of the group of the skip mode and the direct mode, which are modes of reducing the code amounts of the encoding parameter and the prediction residual error by omission, etc., (the group of the fist motion compensation modes). It is preferred to increase the number of prediction methods and/or use a set of prediction methods having a smaller spread in the case of the other group (the 16×16 prediction mode, the 8×8 prediction mode, and the 4x4 prediction mode).

«Sixth Embodiment»

Fig. 28 is a block diagram of a configuration of a moving image decoder of a sixth embodiment of the present invention. The decoder incldues a variable-length code decoding portion 2800, an inverse quantizing portion 2803, an inverse transforming portion 2804, a frame memory 2805, a prediction block generating portion 2806, an adding portion 2811, and a prediction method candidate generating portion 2820.

The decoder of the embodiment is capable of decoding the encoded data predictively encoded by using a plurality of motion compensation modes as in the case of the moving image encoder of the fifth embodiment, for example. Although an example of using two modes, i.e., the first motion compensation mode and the second motion compensation mode as a plurality of the motion compensation modes will be described in this embodiment, more motion compensation modes may be used.

When encoded data is input to the decoder, the variable-length code decoding portion 2800 decodes the quantized transform coefficient, the motion compensation modes, the reference mode flag, and the motion information (the motion vector, and the relative index if the relative index exists). The motion compensation mode is output to the prediction method candidate generating portion 2820 and the prediction block generating portion 2806; the reference mode flag and the motion information are output to the prediction block generating portion 2806; and the quantized transform coefficient is output to the inverse quantizing portion 2803. The reference mode flag may be decoded as a block type along with another piece of information of the block to be decoded as in the case of the second embodiment. The reference mode flag may be decoded along with the motion compensation mode.

The quantized transform coefficient is decoded through the inverse quantizing portion 2803 and the inverse transforming portion 2804 into the prediction error, which is output to the adding portion 2811. The prediction block generating portion 2806 generates a prediction block from decoded frames stored in the frame memory 2805, the motion compensation mode, the reference mode flag, and the motion information, and the prediction block is output to the adding portion 2811. The adding portion 2811 decodes the block from a sum of the prediction error and the prediction block. The decoded block is output to the outside of the decoder on one hand and is stored in the frame memory 2805 on the other hand.

The prediction block generating portion 2806 drives a motion compensating portion 2861 included therein to uses the motion compensation mode, the reference mode flag, and the motion information input from the variable-length code decoding portion 2800 to select the reference frame indicated by the relative index if the relative index exists in the motion information and to extract, from the selected reference frames, the images (reference blocks) at the positions indicated by the motion vector of the motion information. Filtering and the like may be performed at the time of the extraction.

If the reference mode flag does not indicate the use of the multi-reference image prediction, this is the case of using the forward prediction or backward prediction and only one reference block is extracted. If the reference mode flag indicates the use of the multi-reference image prediction, this is the case of the multi-reference image prediction and a plurality of the reference blocks are extracted. The selection of the prediction image candidate not using the multi-reference image prediction may not be represented by the reference mode flag and may be represented by preparing a candidate of a prediction method directly using only a certain reference block and selecting the prediction method.

In the case of other than the multi-reference image prediction (in the case of forward prediction or backward prediction), the reference block extracted in accordance with the motion compensation mode is directly output as a prediction block to the adding portion 2811.

In the case of the multi-reference image prediction, the extracted plurality of reference blocks are output to the prediction block predicting portion 2862 included within the prediction block generating portion 2806, which generates and outputs the prediction block to the adding portion 2811.

Eq. 2 above is used as a method of generating the prediction block from a plurality of reference blocks in the prediction block predicting portion 2862 as in the case of the fifth embodiment.

The prediction method candidate generating portion 2820 determines a set of selectable prediction methods and the number thereof (prediction set number) based on predetermined information related to the block to be decoded (the motion compensation mode in this embodiment) and outputs them to the variable-length code decoding portion 2800. The set of selectable prediction methods and the prediction set number are determined in accordance with Fig. 26. As described in the fifth embodiment, a set of selectable prediction methods and a prediction set number may be determined from the motion compensation mode in accordance with Fig. 27 instead of Fig. 26.

The variable-length code decoding portion 2800 decodes the prediction methods in accordance with the set of selectable prediction methods and the prediction set number. In the decoding of the prediction methods, the code number is decoded and the code number is then transformed into the prediction methods depending on the prediction set number. The details of the decoding are the same as those in the second embodiment and will not be described.

The decoded prediction methods are output to the prediction block generating portion 2806. The prediction methods may be parameters (the linear prediction coefficients) indicative of the prediction methods or may be an index indicative of the prediction methods. The prediction block generating portion 2806 generates the prediction block in accordance with the prediction methods.

The sets of selectable prediction methods depicted in Figs. 26 and 27 may adaptively be switched slice by slice or frame by frame by decoding in a slice header or frame header before decoding the block to be decoded.

As described above, the moving image decoder of the embodiment uses the motion compensation mode of the block to be decoded to determine the information related to the selectable prediction methods, decodes the prediction methods in accordance with the determined information and the information related to the prediction methods in the encoded data, generates the prediction block from a plurality of reference blocks in accordance with the decoded prediction methods, and decodes the block based on the generated prediction block. Therefore, the decoding may be performed for the encoded data having a code amount reduced as in the case of the encoder of the fifth embodiment (i.e., the encoded data having a code amount for encoding the prediction methods reduced by changing the set of selectable prediction methods related to the generation of the prediction block of the block depending on the motion compensation mode of the block to be encoded to reduce the number of selectable prediction methods when the motion prediction mode is the first compensation mode (e.g., the direct mode or the skip mode)). In other words, a code amount of the encoded data decodable in the decoder may be reduced. Since the number of costs to be calculated is reduced when the optimum prediction block is selected if the number of selectable prediction methods is reduced, a calculation amount may be reduced in association with the encoding of the encoded data decodable in the decoder.

The moving image decoder of the embodiment includes a linear prediction coefficient having W1:W2 away from 1:1 in the set of selectable prediction methods (to use a set of prediction methods having a larger spread as a whole) if the motion compensation mode is the first motion compensation mode (e.g., the direct mode or the skip mode) and includes a linear prediction coefficient having W1:W2 closer to 1:1 in the set of selectable prediction methods (to use a set of prediction methods having a smaller spread as a whole) if the motion compensation mode is other than the first motion compensation mode. Therefore, the moving image decoder of the embodiment may decode the data encoded in great efficiency by determining a set of selectable prediction methods in the same way as in the moving image encoder of the fifth embodiment. Since the same encoding efficiency may be achieved with fewer selectable prediction methods if a set of selectable prediction methods is determined as above, a calculation amount may be reduced in association with the encoding of the encoded data decodable in the decoder.

For example, if the skip mode, the direct mode, the 16x16 prediction mode, the 8x8 prediction mode, and the 4x4 prediction mode are used as the motion prediction modes, the modes are classified into two groups depending on whether a mode reduces the code amounts of the encoding parameter and the prediction residual error by omission, etc. , and the number of prediction methods is reduced and/or a set of prediction methods having a larger spread is used in the case of the group of the skip mode and the direct mode, which are modes of reducing the code amounts of the encoding parameter and the prediction residual error by omission, etc. , (the group of the fist motion compensation modes). It is preferred to increase the number of prediction methods and/or use a set of prediction methods having a smaller spread in the case of the other group (the 16x16 prediction mode, the 8x8 prediction mode, and the 4x4 prediction mode).

«Seventh Embodiment»

Fig. 29 is a block diagram of a configuration of a moving image encoder of a seventh embodiment of the present invention. The encoder includes a transforming portion 2901, a quantizing portion 2902, an inverse quantizing portion 2903, an inverse transforming portion 2904, a frame memory 2905, a prediction block candidate generating portion 2906, a prediction block selecting portion 2907, a variable-length encoding portion 2908, a subtracting portion 2910, an adding portion 2911, a prediction method candidate generating portion 2920, and a quantization coefficient setting portion 2930.

When a block to be encoded is input to the encoder, the quantization coefficient setting portion 2930 determines a quantization coefficient QP used for the encoding of the block to be encoded based on an encoded data amount output from the variable-length encoding portion 2908, and outputs it to the quantizing portion 2902, the inverse quantizing portion 2903 and the prediction method candidate generating portion 2920. The prediction block candidate generating portion 2906 uses the encoded frames stored in the frame memory 2905 to generate prediction block candidates. The prediction block selecting portion 2907 selects the prediction block from the prediction block candidates.

The selected prediction block is input to the subtracting portion 2910 to calculate a difference (prediction error) between the block to be encoded and the prediction block. The calculated prediction error is subjected to the transform such as DCT transform by the transforming portion 2901 and the acquired transform coefficient is quantized by the quantizing portion 2902 to generate a quantized transform coefficient. The quantized transform coefficient is branched into two and is encoded by the variable-length encoding portion 2908 on one hand.

The quantized transform coefficient goes through the inverse quantizing portion 2903 and the inverse transforming portion 2904 for reproducing the prediction error on the other hand. The reproduced prediction error is added to the prediction block by the adding portion 2911 to generate a locally decoded block. The locally decoded block is output to the frame memory 2905 and stored as an encoded frame. The stored encoded frame is used as a reference when a subsequent frame or subsequent block to be encoded of the current frame is encoded.

The prediction block candidate generating portion 2906 includes a motion searching portion not depicted therein. The motion searching portion extracts reference blocks similar to the block to be encoded from the frames stored in the frame memory 2905. In this case, a plurality of motion compensation modes are used to extract blocks similar to the block to be encoded. In this embodiment, two modes, i.e., the first motion compensation mode and the second motion compensation mode are used as the motion compensation modes. It should be noted that the first motion compensation mode and the second motion compensation mode have been described in the fifth embodiment. Of course, more than two motion compensation modes may exist.

The prediction block candidate generating portion 2906 outputs the motion compensation modes and the reference block difference level DIFF for each motion compensation mode to the prediction method candidate generating portion 2920. The calculation method of the reference block difference level DIFF is the same as that described in the first embodiment.

The prediction method candidate generating portion 2920 determines a set of selectable prediction methods and a prediction set number based on predetermined information related to the block to be encoded (the motion compensation mode, the reference block difference level DIFF, and the quantization coefficient QP in this embodiment) and outputs them to the prediction block candidate generating portion 2906. In this case, a set of selectable prediction methods and a prediction set number for the first compensation mode and a set of selectable prediction methods and a prediction set number for the second compensation mode are determined and output.

Fig. 30 is a diagram of an example of a method for determining a set of selectable prediction methods and a prediction set number from the motion compensation mode, the quantization coefficient QP, and the reference block difference level DIFF. Fig. 30 indicates that one of three prediction set numbers is selected depending on the motion compensation mode, the quantization coefficient QP, and the reference block difference level DIFF as follows:

a prediction set 0: the selectable prediction method (index) is the prediction method prediction value;
a prediction set 1: the selectable prediction methods (indexes) are 0, 3, and 4; and
a prediction set 3: the selectable prediction methods (indexes) are 0, 1, and 2.

The features of the determining method in accordance with Fig. 30 are as follows.
When the motion compensation mode is the first motion compensation mode and the reference block difference level DIFF is less than a predetermined value, one selectable prediction method is defined (the prediction set 0) to reduce a code amount of the prediction method. The predetermined value is changed such that the value increases as the quantization coefficient QP becomes larger.
Although the number of the prediction methods is three in other cases when the motion compensation mode is the first motion compensation mode, the contents thereof are varied depending on the quantization coefficient QP. When the quantization coefficient QP is large, the linear prediction coefficients having W1:W2 away from 1:1 (a set of prediction methods having a larger spread, namely the prediction set 1) are used to improve the encoding efficient.
In the case other than above (when the motion compensation mode is the second motion compensation mode), the number of prediction methods is three.

Figs. 31 to 34 are diagrams of other examples of the method of determining a set of selectable prediction methods and a prediction set number from the motion compensation mode, the quantization coefficient QP, and the reference block difference level DIFF.

The features of the determining method in accordance with Fig. 31 are as follows.
When the motion compensation mode is the first motion compensation mode, the relationship of the quantization coefficient QP and the reference block difference level DIFF with the prediction set number is the same as that of Fig. 30.
When the motion compensation mode is the second motion compensation mode, if the reference block difference level DIFF is less than a predetermined threshold value, one selectable prediction method is defined (the prediction set 0) to reduce a code amount of the prediction method as in the case of the first motion compensation mode. However, in the case of the second motion compensation mode, the predetermined threshold value changed depending on the quantization coefficient QP is different from the value in the case of the first motion compensation amount.
In the case other than above (when the motion compensation mode is the second motion compensation mode and the reference block difference level DIFF is equal to or greater than the predetermined threshold value), the number of prediction methods is three regardless of the quantization coefficient QP.

The features of the determining method in accordance with Fig. 32 are as follows.
When the reference block difference level DIFF is smaller than a predetermined threshold, one selectable prediction method is defined (the prediction set 0) to reduce a code amount of the prediction method regardless of the motion compensation mode (as is the case with Fig. 31).
Although the number of the prediction methods is three in other cases, the contents of the three methods are varied depending on the motion compensation mode. When the motion compensation mode is the first motion compensation mode, the linear prediction coefficients having W1:W2 away from 1:1 (a set of prediction methods having a larger spread, namely the prediction set 1) are used to improve the encoding efficient.

The features of the determining method in accordance with Fig. 33 are as follows.
When the motion compensation mode is the first motion compensation mode and the reference block difference level DIFF is less than a predetermined value, one selectable prediction method is defined (the prediction set 0) to reduce a code amount of the prediction method (as is the case with Fig. 30).
Although the number of the prediction methods is three in other cases, the contents of the three methods are varied depending on the quantization coefficient QP. When the quantization coefficient QP is large, the linear prediction coefficients having W1:W2 away from 1:1 (a set of prediction methods having a larger spread, namely the prediction set 1) are used to improve the encoding efficient.

The features of the determining method in accordance with Fig. 34 are as follows.
When the motion compensation mode is the first motion compensation mode and the reference block difference level DIFF is equal to or less than a predetermined value, one selectable prediction method is defined (the prediction set 0) to reduce a code amount of the prediction method (as is the case with Fig. 30).
Although the number of the prediction methods is three for the first motion compensation mode in other cases, the contents of the three methods are varied depending on the quantization coefficient QP. When the quantization coefficient QP is large, the linear prediction coefficients having W1:W2 away from 1:1 (a set of prediction methods having a larger spread, namely the prediction set 1) are used to improve the encoding efficient.
Although the number of the prediction methods is three in the cases other than above (in the case of the second motion compensation mode), the contents of the three methods are varied depending on the reference block difference level DIFF. When the reference block difference level DIFF is small, the linear prediction coefficients having W1:W2 away from 1:1 (a set of prediction methods having a larger spread, namely the prediction set 1) are used to improve the encoding efficient.

If the motion compensation mode, the quantization coefficient QP, and the reference block difference level DIFF are classified into O, P, and Q classes, respectively, a total of O×p×Q classes exist as a whole. The classes of Figs. 30 to 34 are typical classes in the case of O=2, P=2, and Q=2. Even when the classes of Figs. 30 to 34 are used, a preferable classification is dependent on an encoding method of the prediction methods (Huffman codes, arithmetic codes, and encoding methods of the first compensation mode), etc., and, therefore, the optimum classification must empirically be determined.

The relationship of the sets of selectable prediction methods, the prediction set numbers, and the motion compensation modes depicted in Figs. 30 to 34 may adaptively be switched on the basis of a slice or frame by encoding in a slice header or frame header.

The prediction block candidate generating portion 2906 generates a prediction block candidate from a plurality of (N) reference blocks in accordance with the set of selectable prediction methods determined for each motion prediction mode. The generated prediction block candidates, the information necessary for generating the reference blocks (motion compensation mode, motion information, and prediction methods), and the information necessary for encoding the prediction methods (prediction set number) are output to the prediction block selecting portion 2907. This operation is the same as that in the fifth embodiment and will not be described.

The prediction block selecting portion 2907 selects a block having the smallest cost (the prediction block) from a plurality of the prediction block candidates generated by the prediction block candidate generating portion 2906. To calculate the cost, SAD, SSD, RD cost, M cost, etc., are used as described in the first embodiment. A flag (reference mode flag) is determined to indicate whether the multi-reference image prediction is used. The prediction block selecting portion 2907 outputs to the variable-length encoding portion 2908 the information necessary for generating the prediction block (the motion compensation mode, the reference mode flag, the motion information, and the prediction method when the reference mode flag indicates the use of the multi-reference image prediction), and the prediction set number as the information for encoding the prediction method. The prediction set number is output only in the case of the multi-reference image prediction and is not output in other cases.

The variable-length encoding portion 2908 encodes the quantization coefficient QP input from the quantization coefficient setting portion 2 930, the motion compensation mode input from the prediction block selecting portion 2907, the reference mode flag, the motion information, and the prediction method in addition to the quantized transform coefficient. However, if the motion compensation mode is the first motion compensation mode, the encoding of the information omitted in the mode (the reference mode flag and the motion information in the case of the direct mode and the skip mode) is skipped. If the reference frame used in the case of generating the reference block 1 and the reference block 2 is limited to the frame indicated by the relative index=0, it is not necessary to identify the reference frame and the encoding of the relative index is skipped. The reference mode flag may be encoded as a block type along with another piece of information of the block to be encoded or may be encoded along with the motion compensation modes if the block to be encoded has a plurality of motion compensation modes, as in the case of the first embodiment.

In the encoding method of the prediction method performed by the variable-length encoding portion 2908, the prediction method is transformed into a code number in accordance with the prediction set number and then the code number is encoded. Although the details of the encoding are the same as those in the first embodiment and will not be described, the encoding of the prediction method is performed if the number of prediction method candidates is two or more and the encoding of the prediction method is not performed if the number of prediction method candidates is one or less.

If the encoder of the seventh embodiment is used, a set of selectable prediction methods related to the generation of the prediction block candidates of the block may be changed depending on the motion compensation mode, the reference block difference level DIFF, and the quantization coefficient QP of the block to be encoded. Therefore, if the reference block difference level DIFF is equal to or less than (less than) a predetermined value and/or the quantization coefficient QP is greater than (equal to or greater than) another predetermined value and/or the motion compensation mode is the first motion compensation mode (or a group of the first motion compensation mode), a code amount for encoding the prediction methods and a calculation amount for the encoding may be reduced at the same time by reducing the number of selectable prediction methods as compared to other cases.

The contents of the optimum set of prediction methods may be used depending on a combination of the motion compensation mode, the reference block difference level DIFF, and the quantization coefficient QP. For example, if the reference block difference level DIFF is equal to or less than (less than) a predetermined value and/or the quantization coefficient QP is greater than (equal to or greater than) another predetermined value and/or the motion compensation mode is the first motion compensation mode (or a group of the first motion compensation mode), the encoding efficiency is improved even when the same number of candidates of the linear prediction coefficients is used by increasing a spread of the set of the prediction methods as compared to other cases. Since the same encoding efficiency may be achieved using fewer selectable prediction methods if a set of selectable prediction methods is determined as above, a calculation amount for the encoding may be reduced.

«Eight Embodiment»

Fig. 35 is a block diagram of a configuration of a moving image decoder of an eighth embodiment of the present invention. The decoder includes a variable-length code decoding portion 3500, an inverse quantizing portion 3503, an inverse transforming portion 3504, a frame memory 3505, a prediction block generating portion 3506, an adding portion 3511, and a prediction method candidate generating portion 3520.

The decoder of the embodiment is capable of decoding the encoded data encoded by the encoder of the seventh embodiment, for example. When encoded data is input to the decoder, the variable-length code decoding portion 3500 decodes the quantization coefficient QP, the motion compensation mode, the reference mode flag, the motion information (the motion vector, and the relative index if the relative index exists), and the quantized transform coefficient. The quantization coefficient QP is output to the inverse quantizing portion 3503 and the prediction method candidate generating portion 3520; the motion compensation modes is output to the prediction method candidate generating portion 3520 and the prediction block generating portion 3506; the reference mode flag and the motion information are output to the prediction block generating portion 3506; and the quantized transform coefficient is output to the inverse quantizing portion 3503. The reference mode flag may be decoded as a block type along with another piece of information of the block to be decoded as in the case of the second embodiment or may be decoded along with the motion compensation mode.

The quantized transform coefficient is decoded through the inverse quantizing portion 3503 and the inverse transforming portion 3504 to reproduce the prediction error, which is output to the adding portion 3511. The prediction block generating portion 3506 generates a prediction block from decoded frames stored in the frame memory 3505, the motion compensation mode, the reference mode flag, and the motion information, and the prediction block is output to the adding portion 3511. The adding portion 3511 decodes the block from a sum of the prediction error and the prediction block. The decoded block is output to the outside of the decoder on one hand and is stored in the frame memory 3505 on the other hand.

The prediction block generating portion 3506, bye means of a motion compensating portion 3561 included therein, selects the reference frame indicated by the relative index if the relative index exists in the motion information by using the motion compensation mode, the reference mode flag, and the motion information input from the variable-length code decoding portion 3500 and extracts, from the selected reference frames, the images (the reference blocks) at the positions indicated by the motion vector of the motion information.

If the reference mode flag does not indicate the use of the multi-reference image prediction, this is the case of using the forward prediction or backward prediction and only one reference block is extracted. If the reference mode flag indicates the use of the multi-reference image prediction, a plurality of the reference blocks are extracted. The selection of the prediction image candidate not using the multi-reference image prediction may not be represented by the reference mode flag and may be represented by preparing a candidate of a prediction method directly using only a certain reference block and selecting the prediction method.

In the case of other than the multi-reference image prediction (in the case of forward prediction or backward prediction), the reference block extracted in accordance with the motion compensation mode is directly output as a prediction block to the adding portion 3511.

In the case of the multi-reference image prediction, the extracted plurality of reference blocks are output to the prediction block predicting portion 3562 included within the prediction block generating portion 3506, and the prediction block is generated and output to the adding portion 3511.

Eq. 2 above is used as a method of generating the prediction block from a plurality of reference blocks in the prediction block predicting portion 3562 as in the case of the seventh embodiment.

The prediction method candidate generating portion 3520 determines a set of selectable prediction methods and the number thereof (prediction set number) based on predetermined information related to the block to be decoded (the motion compensation mode, the reference block difference level DIFF, and the quantization coefficient QP in this embodiment) and outputs them to the variable-length code decoding portion 3500. Although the set of selectable prediction methods and the prediction set number are determined in accordance with any one of Figs. 30 to 34, other methods may also be available. The effects of using the determining methods of Figs. 30 to 34 are the same as described in the seventh embodiment and will not be described.

The variable-length code decoding portion 3500 decodes the prediction methods in accordance with the set of selectable prediction methods and the prediction set number. In the decoding of the prediction methods, the code number is decoded and the code number is then transformed into the prediction methods depending on the prediction set number. The details of the decoding are the same as those in the second embodiment and will not be described. The decoded prediction methods are output to the prediction block generating portion 3506.

The sets of selectable prediction methods depicted in Figs. 30 and 34 may adaptively be switched on the basis of a slice or frame by decoding in a slice header or frame header before decoding the block to be decoded.

As described above, the moving image decoder of the embodiment determines the information related to the selectable prediction methods by using the motion compensation mode, the reference block difference level DIFF, and/or the quantization coefficient QP of the block to be decoded, decodes the prediction methods in accordance with the determined information, generates the prediction block from a plurality of reference blocks in accordance with the decoded prediction methods, and decodes the block based on the generated prediction block. Therefore, the decoding may be performed for the encoded data having a code amount reduced as in the case of the encoder of the seventh embodiment (i.e., the encoded data having a code amount for encoding the prediction methods that is reduced in the case where the reference block difference level DIFF is equal to or less than (less than) a predetermined value and/or the quantization coefficient QP is greater than (equal to or greater than) another predetermined value and/or the motion compensation mode is the first motion compensation mode (or a group of the first motion compensation mode) by changing the set of selectable prediction methods related to the generation of the prediction block of the block depending on the combination of the motion compensation mode, the reference block difference level DIFF, and/or the quantization coefficient QP of the block to be encoded and by reducing the number of selectable prediction methods as compared to other cases. In other words, a code amount of the encoded data decodable in the decoder may be reduced. Since the number of costs to be calculated is reduced when the optimum prediction block is selected if the number of selectable prediction methods is reduced, a calculation amount may be reduced in association with the encoding of the encoded data decodable in the decoder.

The moving image decoder of the embodiment uses the optimum set of prediction methods depending on a combination of the motion compensation mode, the reference block difference level DIFF, and the quantization coefficient QP. Therefore, the moving image decoder of the embodiment may decode the data encoded in great efficiency by determining a set of selectable prediction methods in the same way as the moving image decoder of this embodiment determines as in the case of the moving image encoder of the seventh embodiment(e.g., the data that is encoded so as to improve the encoding efficiency even when the same number of candidates of the linear prediction coefficients is used in the cases where the reference block difference level DIFF is equal to or less than (less than) a predetermined value and/or the quantization coefficient QP is greater than (equal to or greater than) another predetermined value and/or the motion compensation mode is the first motion compensation mode (or a group of the first motion compensation mode) by increasing a spread of the set of the prediction methods as compared to other cases). Since the same encoding efficiency may be achieved with fewer selectable prediction methods if a set of selectable prediction methods is determined as above, a calculation amount may be reduced in association with the encoding of the encoded data decodable in the decoder.

INDUSTRIAL APPLICABILITY

The present invention is usable as a moving image encoder and a moving image decoder.

## Claims

**1.** A moving image decoder that decodes a block to be decoded by adding a difference value of the block to be decoded to a prediction image of the block to be decoded generated by using a plurality of reference images, comprising:

a prediction method candidate generating portion; a prediction image generating portion; and a variable-length code decoding portion,
the prediction method candidate generating portion generating candidates of a prediction method defining a method of generating the prediction image by using a plurality of reference images e based on predetermined information related to the block to be decoded,
the variable-length code decoding portion decoding the encoded data to identify the prediction method from the candidates of the prediction method generated by the prediction method candidate generating portion if the number of the candidates of the prediction method is two or more,
the prediction image generating portion generating the prediction image based on the prediction method decoded by the variable-length code decoding portion.

**2.** The moving image decoder of claim 1, wherein the predetermined information includes any one of a difference level between a plurality of reference images, a quantization coefficient, and a motion compensation mode or a combination of a difference level between a plurality of reference images, a quantization coefficient, and a motion compensation mode.

**3.** The moving image decoder of claim 2, wherein if the difference level between the plurality of reference images is smaller than a predetermined value, the number of the candidates of the prediction method is reduced and/or a spread of the prediction of the candidates of the prediction method is increased as compared to the case that the difference level between the reference images is greater than the predetermined value.

**4.** The moving image decoder of claim 2, wherein if the quantization coefficient is greater than a predetermined value, the number of the candidates of the prediction method is reduced and/or a spread of the prediction of the candidates of the prediction method is increased as compared to the case that the quantization coefficient is smaller than the predetermined value.

**5.** The moving image decoder of claim 2, wherein the motion compensation mode includes a plurality of modes and wherein the number of the candidates of the prediction method and/or a spread of the prediction of the candidates of the prediction method for the modes are different depending on the nature of the modes.

**6.** The moving image decoder of claim 3, wherein the predetermined value for judging the difference level between the reference images is made larger as the quantization coefficient becomes larger.

**7.** The moving image decoder of claim 1, comprising a prediction method predicting portion that predicts a prediction method of the block to be decoded, wherein the prediction method predicting portion calculates a prediction value of the prediction method of the block to be decoded by using a prediction method determined based on a temporal distance between a frame to which the block to be decoded belongs to and a frame to which a reference block belongs to.

**8.** A moving image encoder that performs inter-picture predictive encoding to encode a difference value from a block to be encoded by generating a prediction image of the block to be encoded by using a plurality of reference images extracted from an encoded frame, comprising:

a prediction method candidate generating portion; a prediction image generating portion; and a variable-length encoding portion,
the prediction method candidate generating portion generating candidates of a prediction method defining a method of generating the prediction image by using a plurality of reference images based on predetermined information related to the block to be encoded,
the prediction image generating portion generating the prediction image of the block to be encoded based on the candidates of the prediction method generated by the prediction method candidate generating portion by using the plurality of the reference images,
the variable-length encoding portion encoding the prediction method used for generating the prediction image when the inter-picture predictive encoding is performed by using the prediction image generated by the prediction image generating portion if the number of the candidates of the prediction method generated by the prediction method candidate generating portion is two or more.

FIG. 1

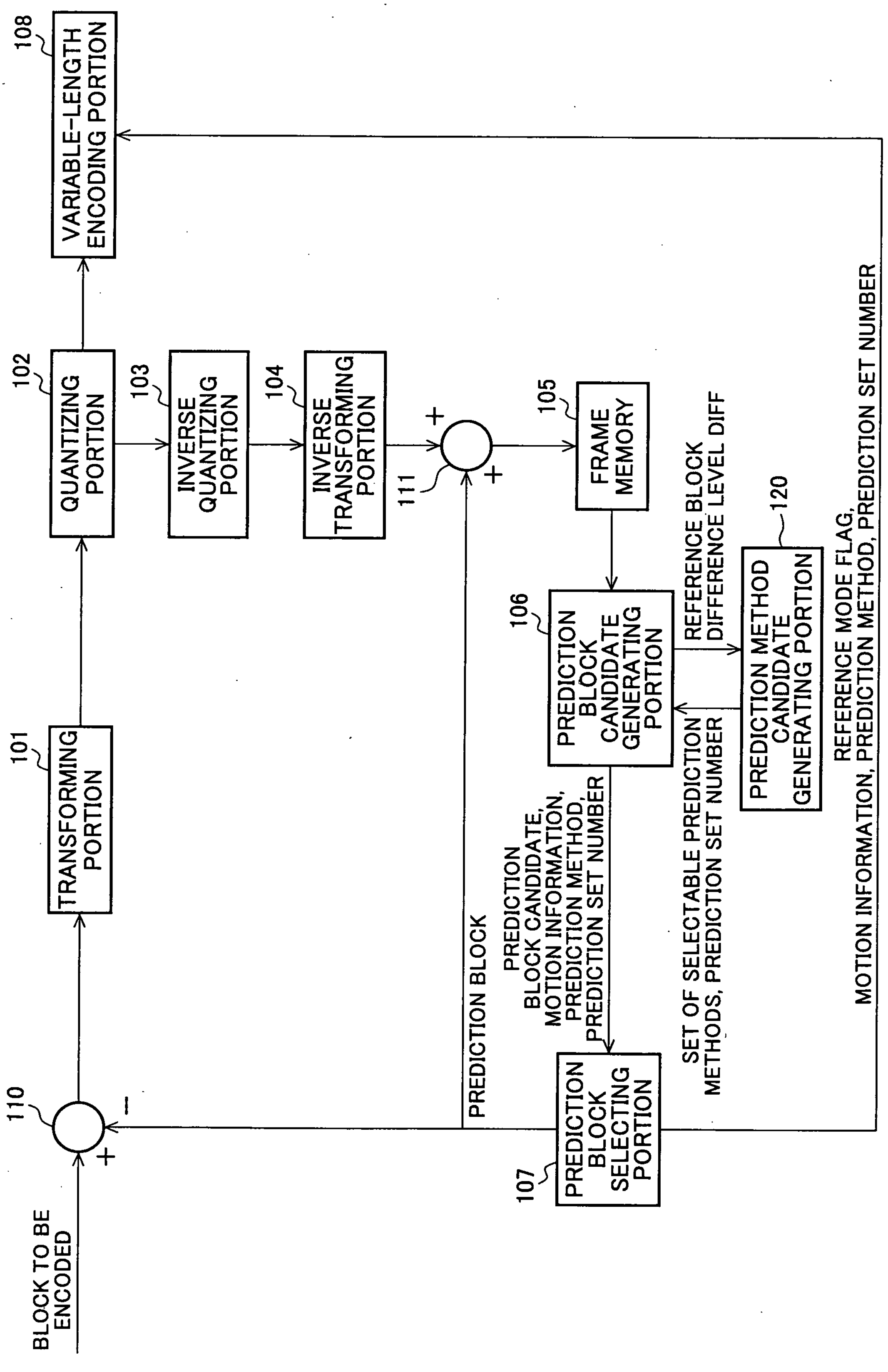
BLOCK TO BE ENCODED
110
TRANSFORMING PORTION
101
QUANTIZING PORTION
102
VARIABLE-LENGTH ENCODING PORTION
108
INVERSE QUANTIZING PORTION
103
INVERSE TRANSFORMING PORTION
104
111
FRAME MEMORY
105
PREDICTION BLOCK CANDIDATE GENERATING PORTION
106
REFERENCE BLOCK DIFFERENCE LEVEL DIFF
PREDICTION METHOD CANDIDATE GENERATING PORTION
120
SET OF SELECTABLE PREDICTION METHODS, PREDICTION SET NUMBER
PREDICTION BLOCK CANDIDATE, MOTION INFORMATION, PREDICTION METHOD, PREDICTION SET NUMBER
PREDICTION BLOCK
PREDICTION BLOCK SELECTING PORTION
107
REFERENCE MODE FLAG, MOTION INFORMATION, PREDICTION METHOD, PREDICTION SET NUMBER

FIG. 2

| PREDICTION METHOD | | INDEX |
|---|---|---|
| W1 | W2 | |
| 4/8 | 4/8 | 0 |
| 5/8 | 3/8 | 1 |
| 3/8 | 5/8 | 2 |
| 6/8 | 2/8 | 3 |
| 2/8 | 6/8 | 4 |

FIG. 3

| SET OF SELECTABLE PREDICTION METHODS (INDICATED BY INDEX) | PREDICTION SET NUMBER | REFERENCE BLOCK DIFFERENCE LEVEL DIFF |
|---|---|---|
| 0 | PREDICTION SET 0 | DIFF<300 |
| 0、3、4 | PREDICTION SET 1 | 300≦DIFF<1000 |
| 0、1、2、3、4 | PREDICTION SET 2 | DIFF≧1000 |

FIG. 4

| | PREDICTION SET 1 | PREDICTION SET 2 | PREDICTION SET 3 |
|---|---|---|---|
| INDEX | CODE NUMBER | CODE NUMBER | CODE NUMBER |
| 0 | 0 | 0 | 0 |
| 1 | 1* | 1 | 1 |
| 2 | 2* | 2 | 2 |
| 3 | 1 | 3 | 1* |
| 4 | 2 | 4 | 2* |

# FIG. 5

| | PREDICTION SET 1 | PREDICTION SET 2 | PREDICTION SET 3 |
|---|---|---|---|
| PREDICTION METHOD (W1、W2) | CODE NUMBER | CODE NUMBER | CODE NUMBER |
| (4／8、4／8) | 0 | 0 | 0 |
| (5／8、3／8) | 1* | 1 | 1 |
| (3／8、5／8) | 2* | 2 | 2 |
| (6／8、2／8) | 1 | 3 | 1* |
| (2／8、6／8) | 2 | 4 | 2* |

# FIG. 6

| | 4≦NUMBER OF SELECTABLE PREDICTION METHODS≦5 | 2≦NUMBER OF SELECTABLE PREDICTION METHODS≦3 |
|---|---|---|
| CODE NUMBER | CODE | CODE |
| 0 | 0 | 0 |
| 1 | 100 | 10 |
| 2 | 101 | 11 |
| 3 | 110 | — |
| 4 | 111 | — |

FIG. 7

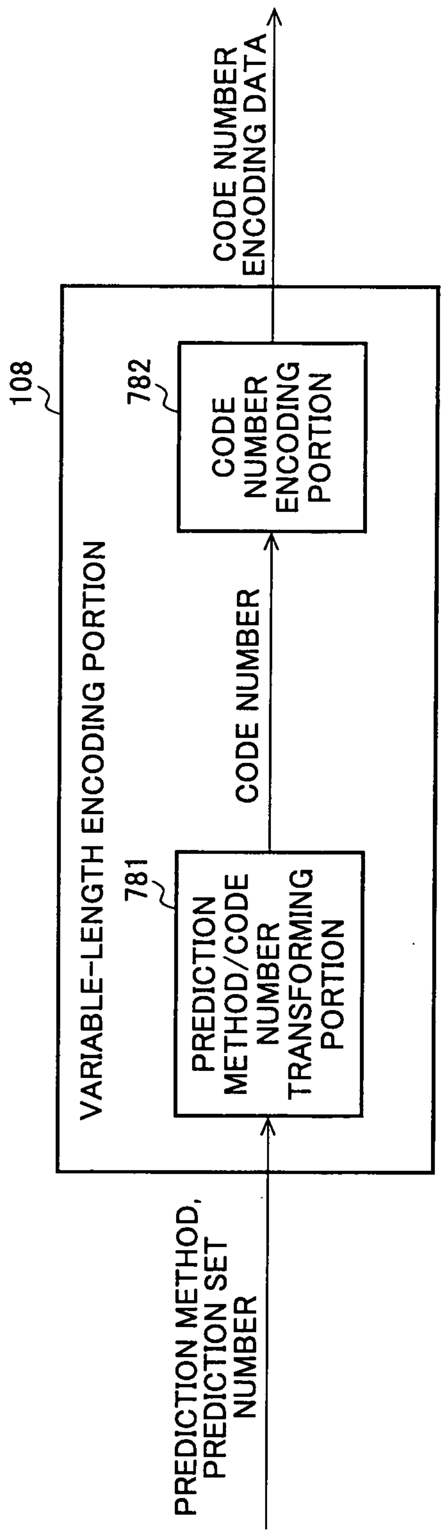
108
VARIABLE-LENGTH ENCODING PORTION
781
PREDICTION METHOD/CODE NUMBER TRANSFORMING PORTION
782
CODE NUMBER ENCODING PORTION
PREDICTION METHOD, PREDICTION SET NUMBER
CODE NUMBER
CODE NUMBER ENCODING DATA

FIG. 8

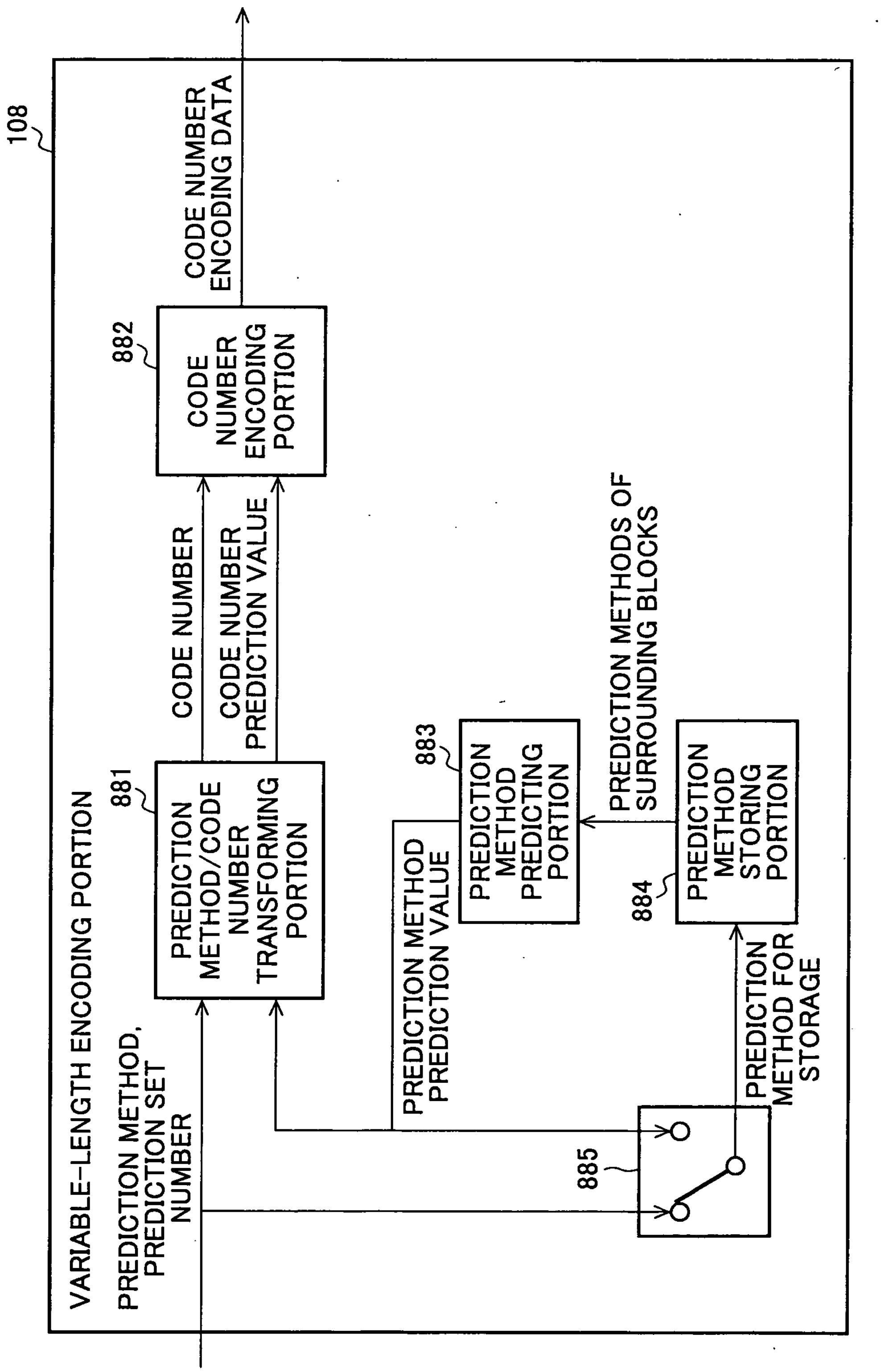
108
VARIABLE-LENGTH ENCODING PORTION
PREDICTION METHOD, PREDICTION SET NUMBER
881
PREDICTION METHOD/CODE NUMBER TRANSFORMING PORTION
CODE NUMBER
CODE NUMBER PREDICTION VALUE
882
CODE NUMBER ENCODING PORTION
CODE NUMBER ENCODING DATA
PREDICTION METHOD PREDICTION VALUE
883
PREDICTION METHOD PREDICTING PORTION
PREDICTION METHODS OF SURROUNDING BLOCKS
884
PREDICTION METHOD STORING PORTION
PREDICTION METHOD FOR STORAGE
885

FIG. 9

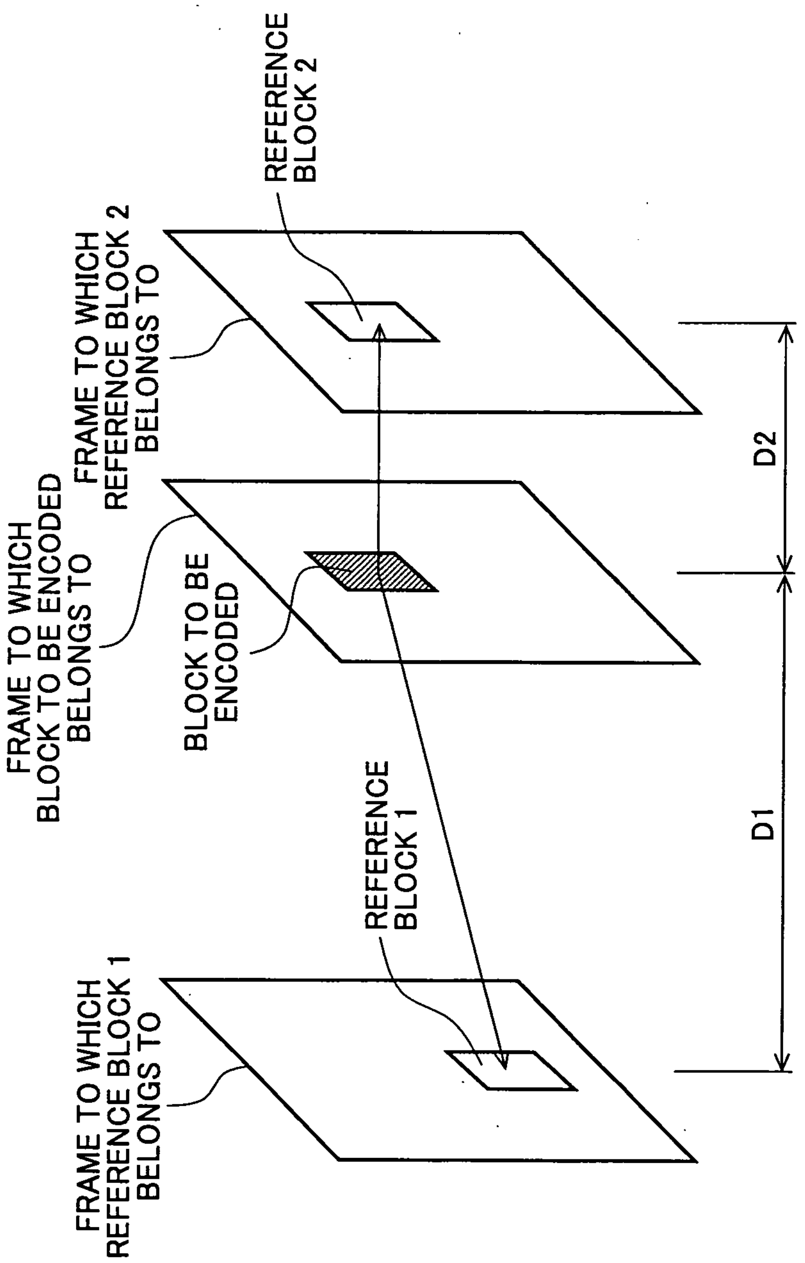

FRAME TO WHICH REFERENCE BLOCK 1 BELONGS TO
REFERENCE BLOCK 1
FRAME TO WHICH BLOCK TO BE ENCODED BELONGS TO
BLOCK TO BE ENCODED
FRAME TO WHICH REFERENCE BLOCK 2 BELONGS TO
REFERENCE BLOCK 2
D1
D2

FIG. 10

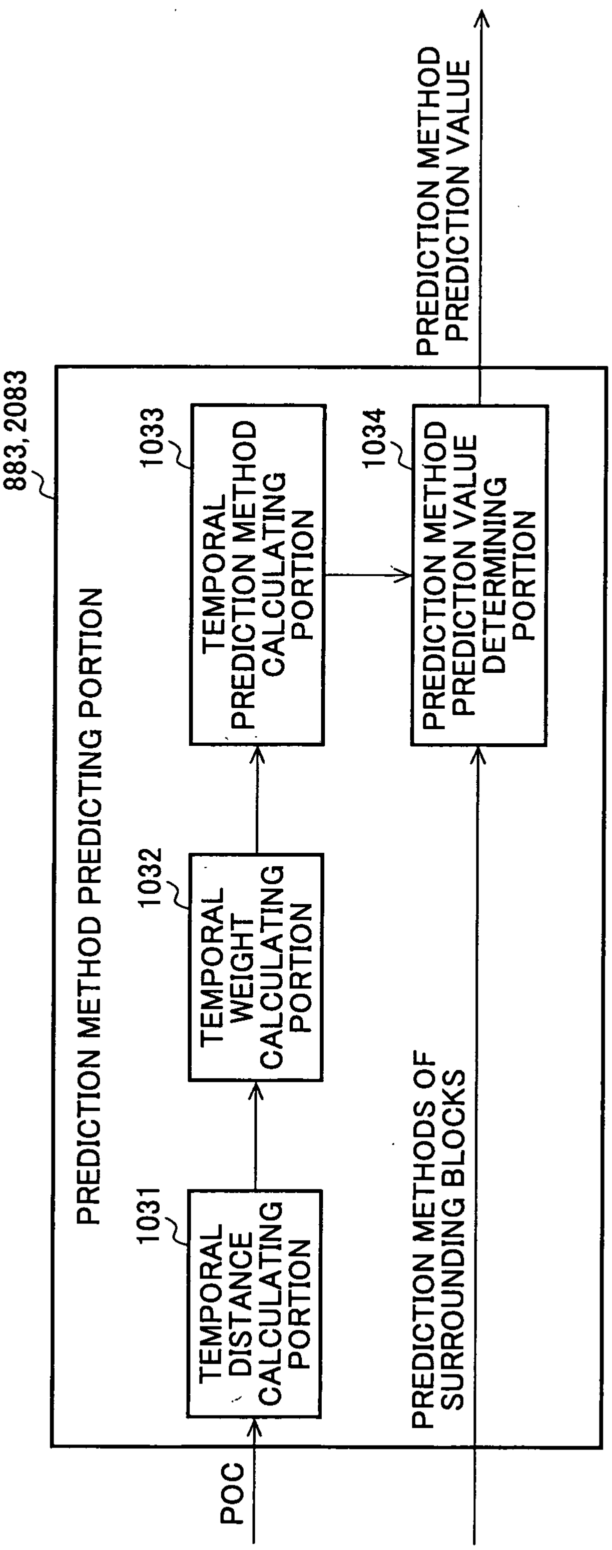
883, 2083
PREDICTION METHOD PREDICTING PORTION
POC
1031
TEMPORAL DISTANCE CALCULATING PORTION
1032
TEMPORAL WEIGHT CALCULATING PORTION
1033
TEMPORAL PREDICTION METHOD CALCULATING PORTION
1034
PREDICTION METHOD PREDICTION VALUE DETERMINING PORTION
PREDICTION METHODS OF SURROUNDING BLOCKS
PREDICTION METHOD PREDICTION VALUE

FIG. 11

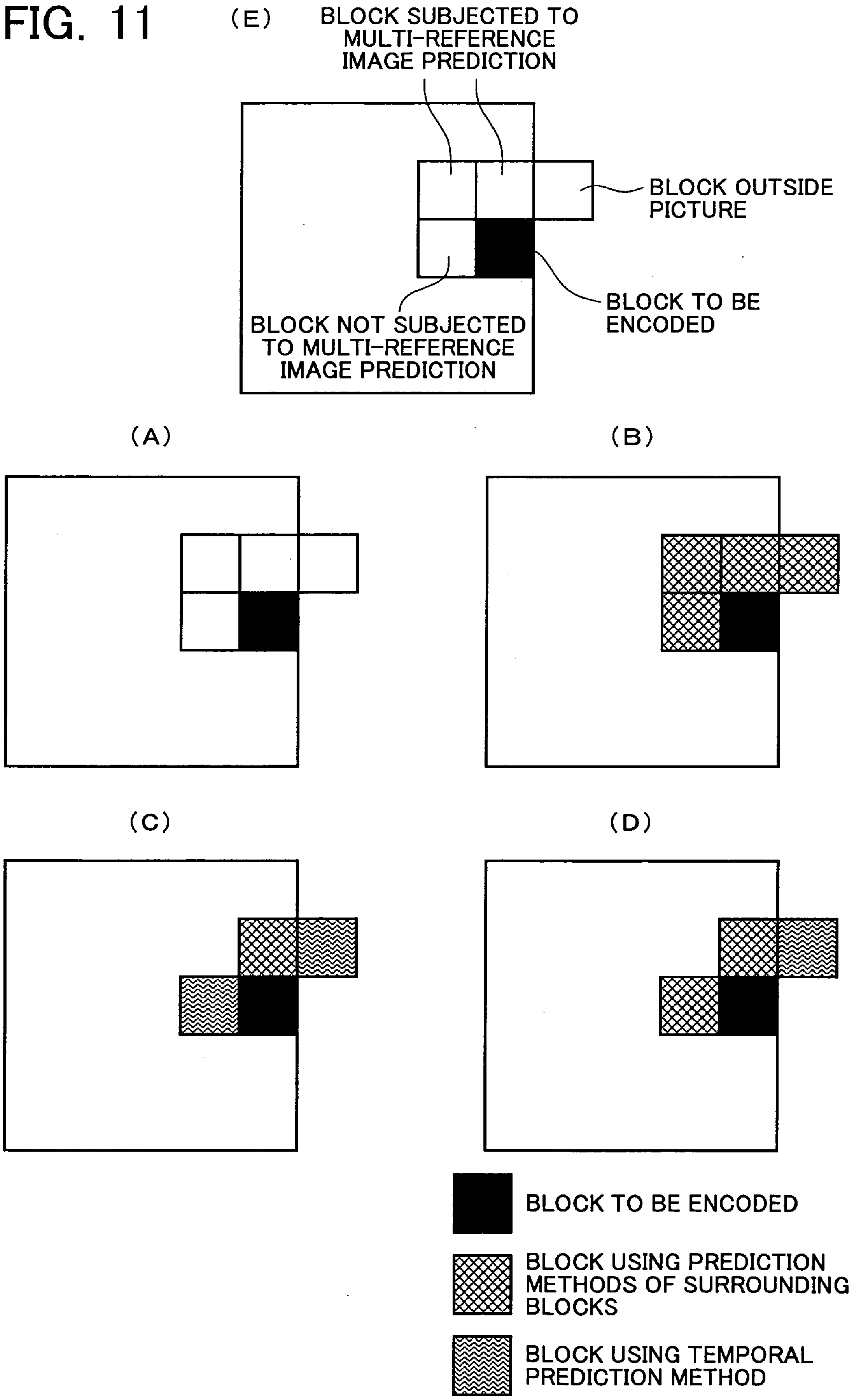
(E)
BLOCK SUBJECTED TO MULTI-REFERENCE IMAGE PREDICTION
BLOCK OUTSIDE PICTURE
BLOCK TO BE ENCODED
BLOCK NOT SUBJECTED TO MULTI-REFERENCE IMAGE PREDICTION
(A)
(B)
(C)
(D)
BLOCK TO BE ENCODED
BLOCK USING PREDICTION METHODS OF SURROUNDING BLOCKS
BLOCK USING TEMPORAL PREDICTION METHOD

FIG. 12

| SET OF SELECTABLE PREDICTION METHODS (INDICATED BY INDEX) | PREDICTION SET NUMBER | REFERENCE BLOCK DIFFERENCE LEVEL DIFF |
|---|---|---|
| PREDICTION METHOD PREDICTION VALUE (ONE OF 0、1、2、3、4AND 4) | PREDICTION SET 0 | DIFF＜300 |
| 0、3、4 | PREDICTION SET 1 | 300≦DIFF＜1000 |
| 0、1、2、3、4 | PREDICTION SET 2 | DIFF≧1000 |

FIG. 13

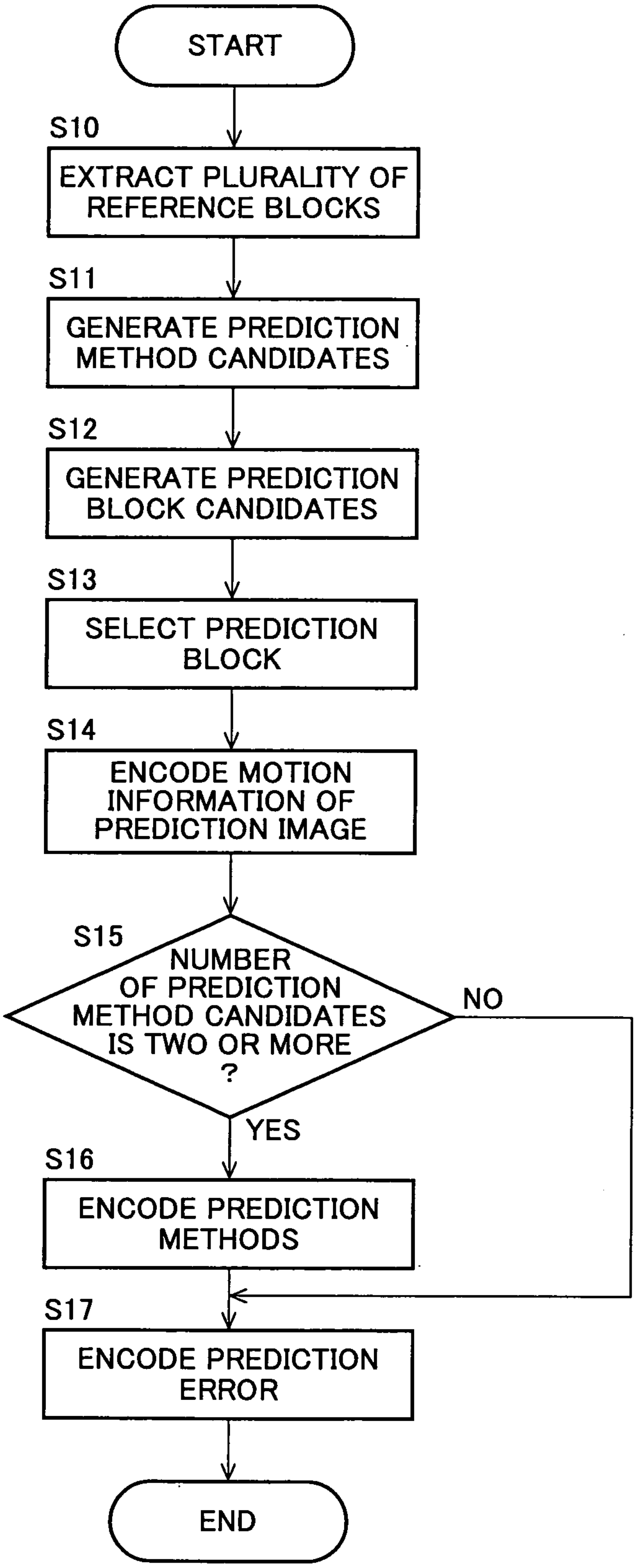
START
S10
EXTRACT PLURALITY OF REFERENCE BLOCKS
S11
GENERATE PREDICTION METHOD CANDIDATES
S12
GENERATE PREDICTION BLOCK CANDIDATES
S13
SELECT PREDICTION BLOCK
S14
ENCODE MOTION INFORMATION OF PREDICTION IMAGE
S15
NUMBER OF PREDICTION METHOD CANDIDATES IS TWO OR MORE ?
NO
YES
S16
ENCODE PREDICTION METHODS
S17
ENCODE PREDICTION ERROR
END

FIG. 14

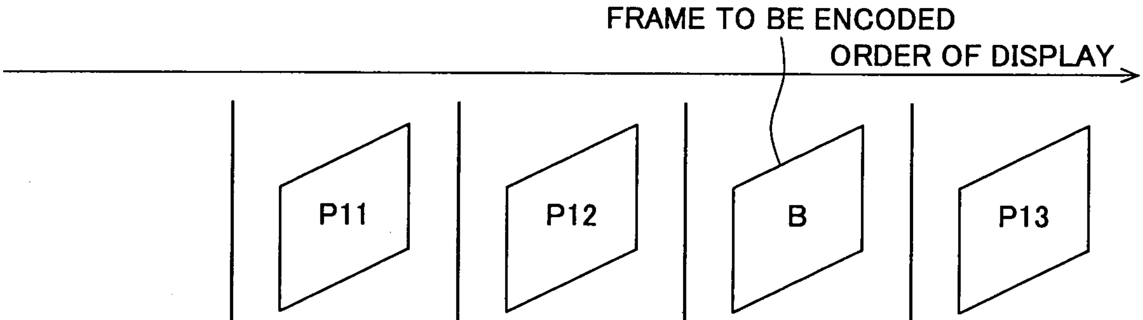


| | | | | |
|---|---|---|---|---|
| FRAME NUMBER | 11 | 12 | | 13 |
| FIRST RELATIVE INDEX (RDIX1) | 1 | 0 | | 2 |
| SECOND RELATIVE INDEX (RDIX2) | 2 | 1 | | 0 |

# FIG. 15

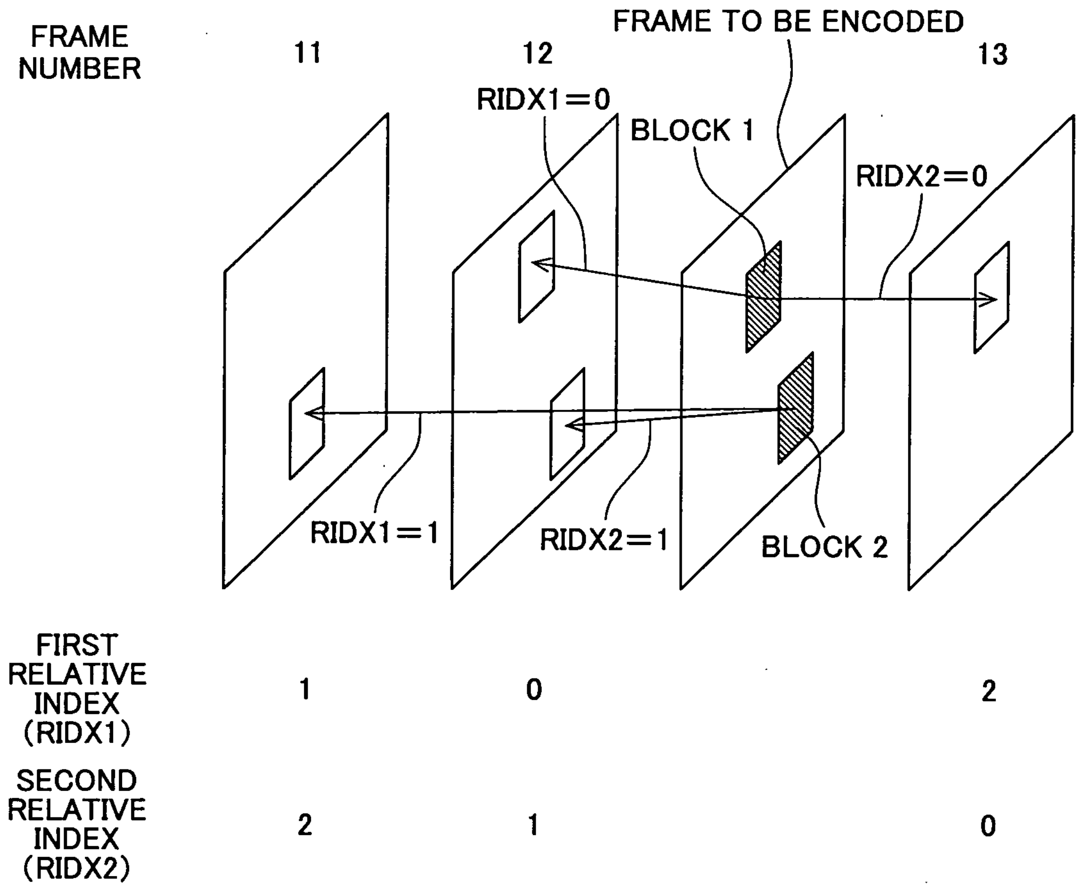
FRAME NUMBER
11
12
FRAME TO BE ENCODED
13
RIDX1=0
BLOCK 1
RIDX2=0
RIDX1=1
RIDX2=1
BLOCK 2
FIRST RELATIVE INDEX (RIDX1)
1
0
2
SECOND RELATIVE INDEX (RIDX2)
2
1
0

FIG. 16

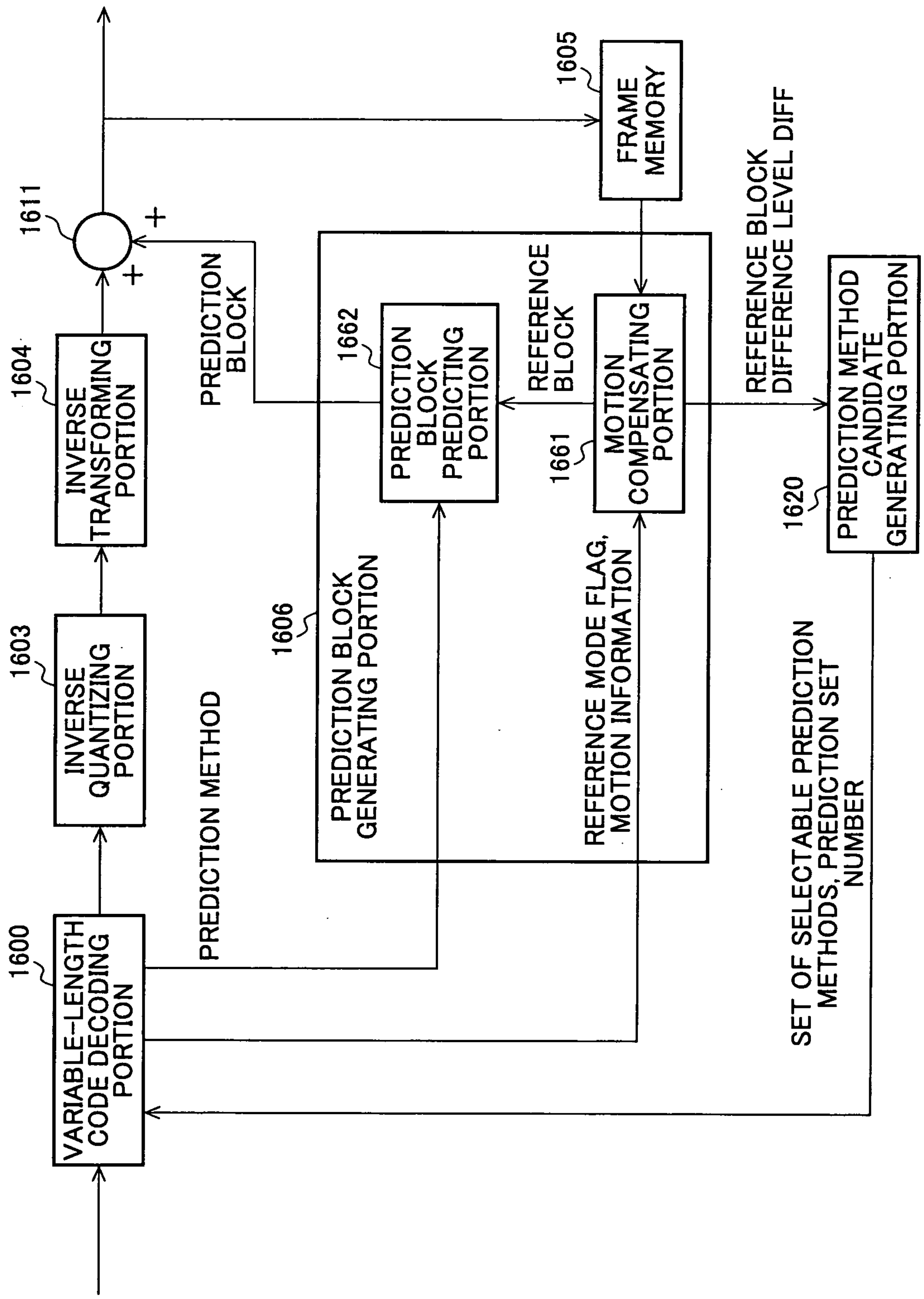
1600
VARIABLE-LENGTH CODE DECODING PORTION
1603
INVERSE QUANTIZING PORTION
1604
INVERSE TRANSFORMING PORTION
1611
+
+
1605
FRAME MEMORY
PREDICTION BLOCK
PREDICTION METHOD
1606
PREDICTION BLOCK GENERATING PORTION
1662
PREDICTION BLOCK PREDICTING PORTION
REFERENCE BLOCK
1661
MOTION COMPENSATING PORTION
REFERENCE MODE FLAG, MOTION INFORMATION
REFERENCE BLOCK DIFFERENCE LEVEL DIFF
1620
PREDICTION METHOD CANDIDATE GENERATING PORTION
SET OF SELECTABLE PREDICTION METHODS, PREDICTION SET NUMBER

# FIG. 17

| | PREDICTION SET 1 | PREDICTION SET 2 | PREDICTION SET 3 |
|---|---|---|---|
| PREDICTION METHOD (INDICATED BY INDEX) | CODE NUMBER | CODE NUMBER | CODE NUMBER |
| 0 | 0 | 0 | 0 |
| 1 | – | 1 | 1 |
| 2 | – | 2 | 2 |
| 3 | 1 | 3 | – |
| 4 | 2 | 4 | – |

# FIG. 18

| | PREDICTION SET 1 | PREDICTION SET 2 | PREDICTION SET 3 |
|---|---|---|---|
| PREDICTION METHOD (W1、W2) | CODE NUMBER | CODE NUMBER | CODE NUMBER |
| (4／8、4／8) | 0 | 0 | 0 |
| (5／8、3／8) | – | 1 | 1 |
| (3／8、5／8) | – | 2 | 2 |
| (6／8、2／8) | 1 | 3 | – |
| (2／8、6／8) | 2 | 4 | – |

FIG. 19

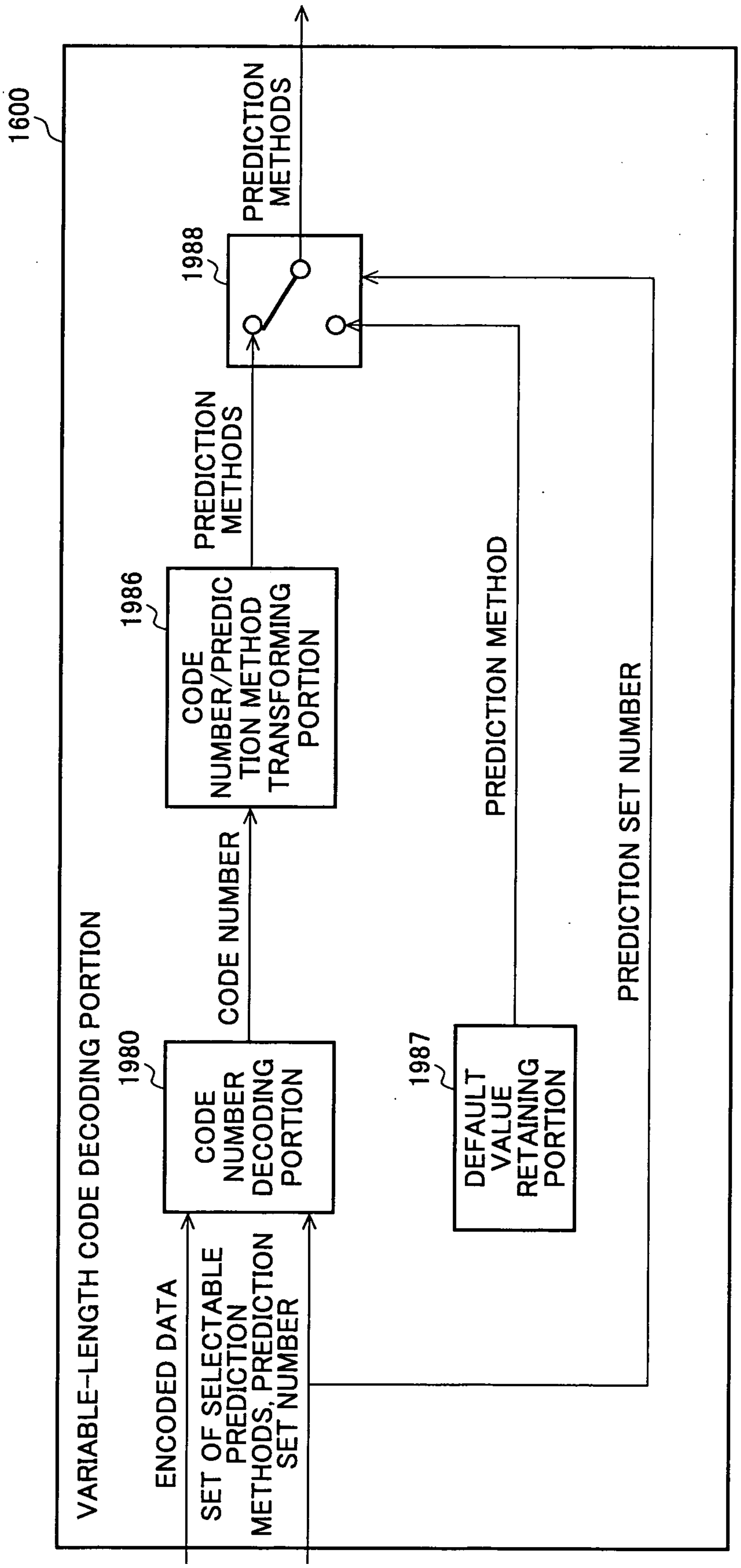
1600
VARIABLE-LENGTH CODE DECODING PORTION
ENCODED DATA
SET OF SELECTABLE PREDICTION METHODS, PREDICTION SET NUMBER
1980
CODE NUMBER DECODING PORTION
CODE NUMBER
1986
CODE NUMBER/PREDICTION METHOD TRANSFORMING PORTION
PREDICTION METHODS
1988
PREDICTION METHODS
1987
DEFAULT VALUE RETAINING PORTION
PREDICTION METHOD
PREDICTION SET NUMBER

FIG. 20

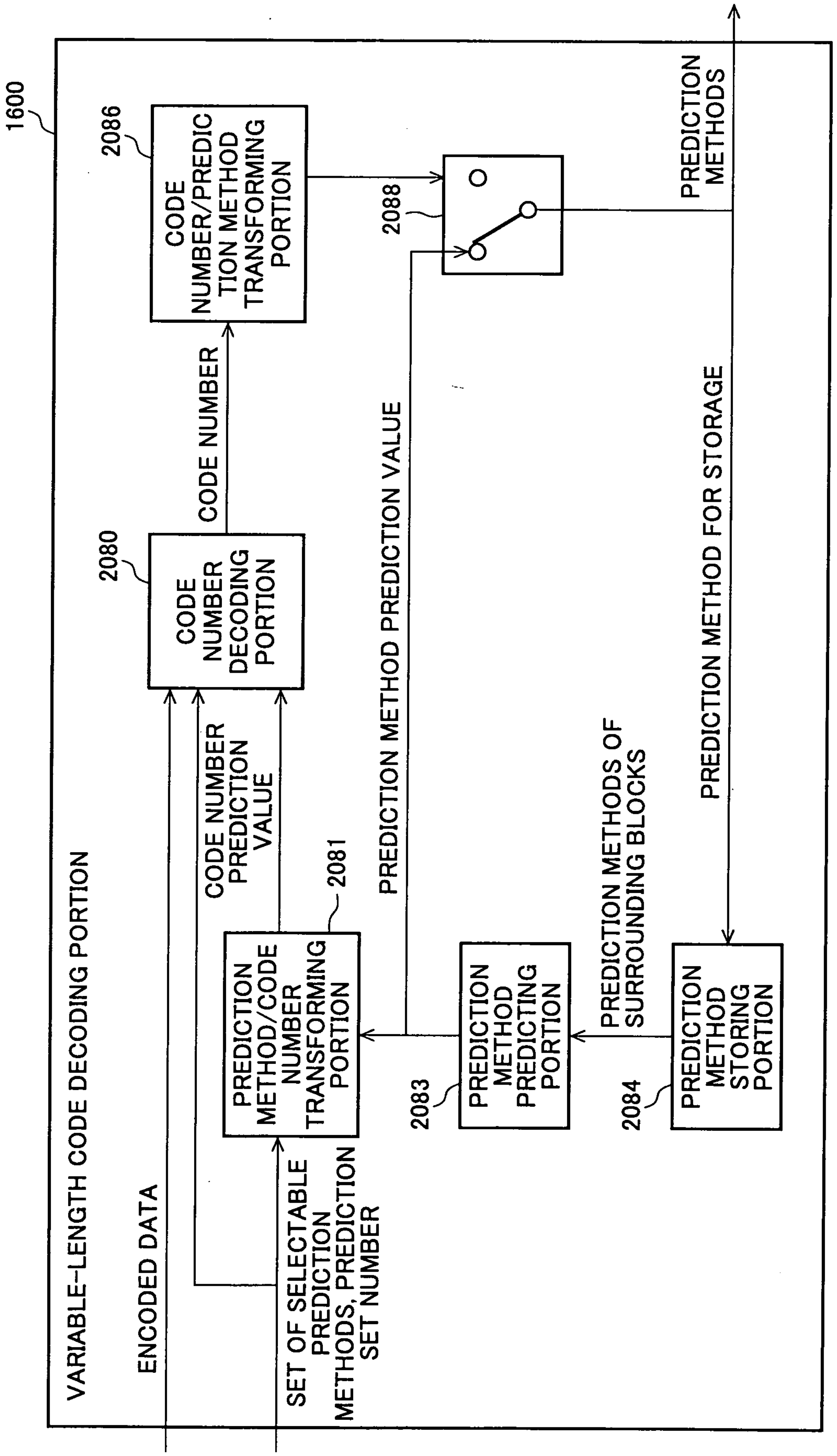
1600
VARIABLE-LENGTH CODE DECODING PORTION
ENCODED DATA
SET OF SELECTABLE PREDICTION METHODS, PREDICTION SET NUMBER
2080
CODE NUMBER DECODING PORTION
CODE NUMBER
2086
CODE NUMBER/PREDICTION METHOD TRANSFORMING PORTION
CODE NUMBER PREDICTION VALUE
2081
PREDICTION METHOD/CODE NUMBER TRANSFORMING PORTION
PREDICTION METHOD PREDICTION VALUE
2088
PREDICTION METHODS
2083
PREDICTION METHOD PREDICTING PORTION
PREDICTION METHODS OF SURROUNDING BLOCKS
2084
PREDICTION METHOD STORING PORTION
PREDICTION METHOD FOR STORAGE

FIG. 21

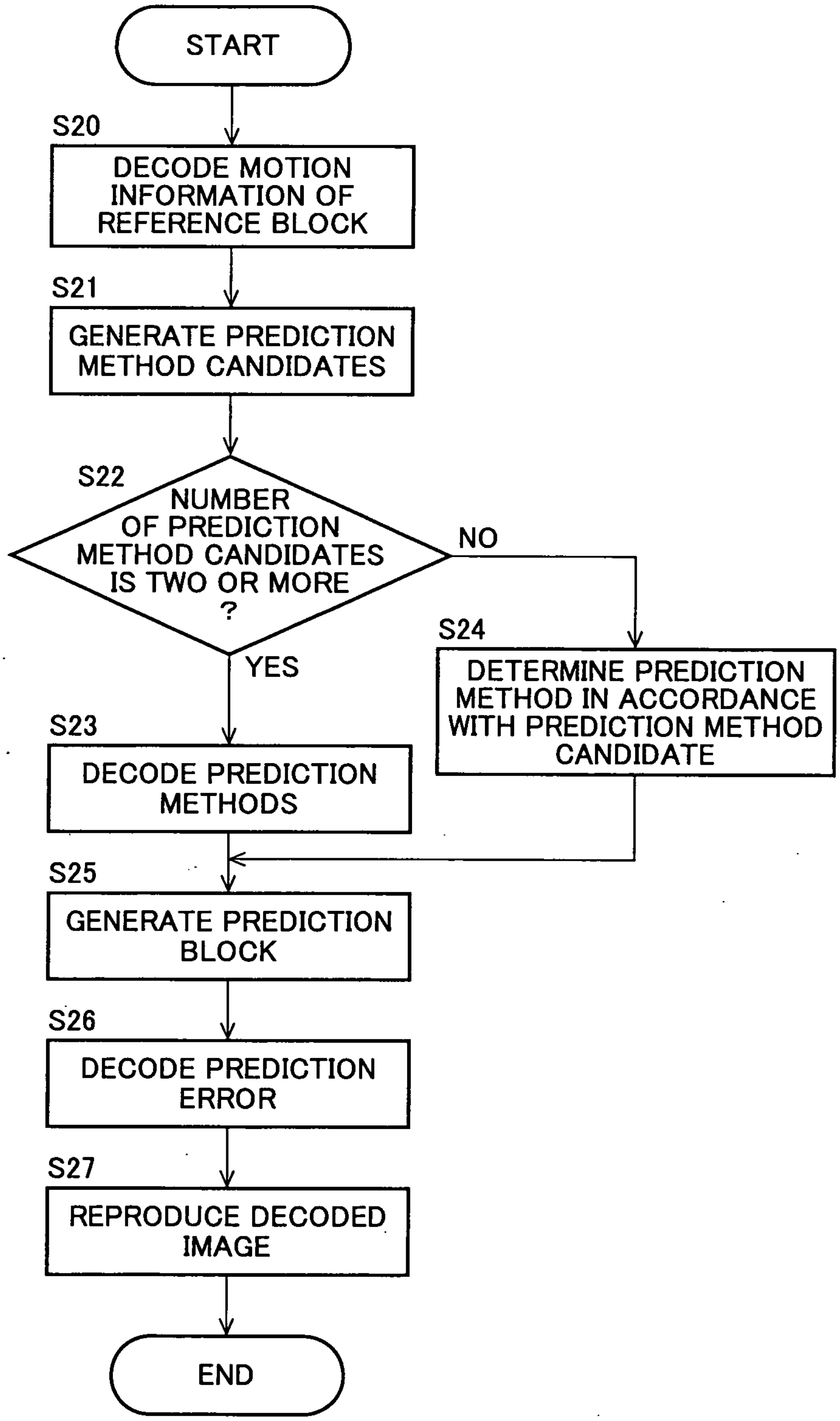
START
S20
DECODE MOTION INFORMATION OF REFERENCE BLOCK
S21
GENERATE PREDICTION METHOD CANDIDATES
S22
NUMBER OF PREDICTION METHOD CANDIDATES IS TWO OR MORE ?
NO
YES
S24
DETERMINE PREDICTION METHOD IN ACCORDANCE WITH PREDICTION METHOD CANDIDATE
S23
DECODE PREDICTION METHODS
S25
GENERATE PREDICTION BLOCK
S26
DECODE PREDICTION ERROR
S27
REPRODUCE DECODED IMAGE
END

FIG. 22

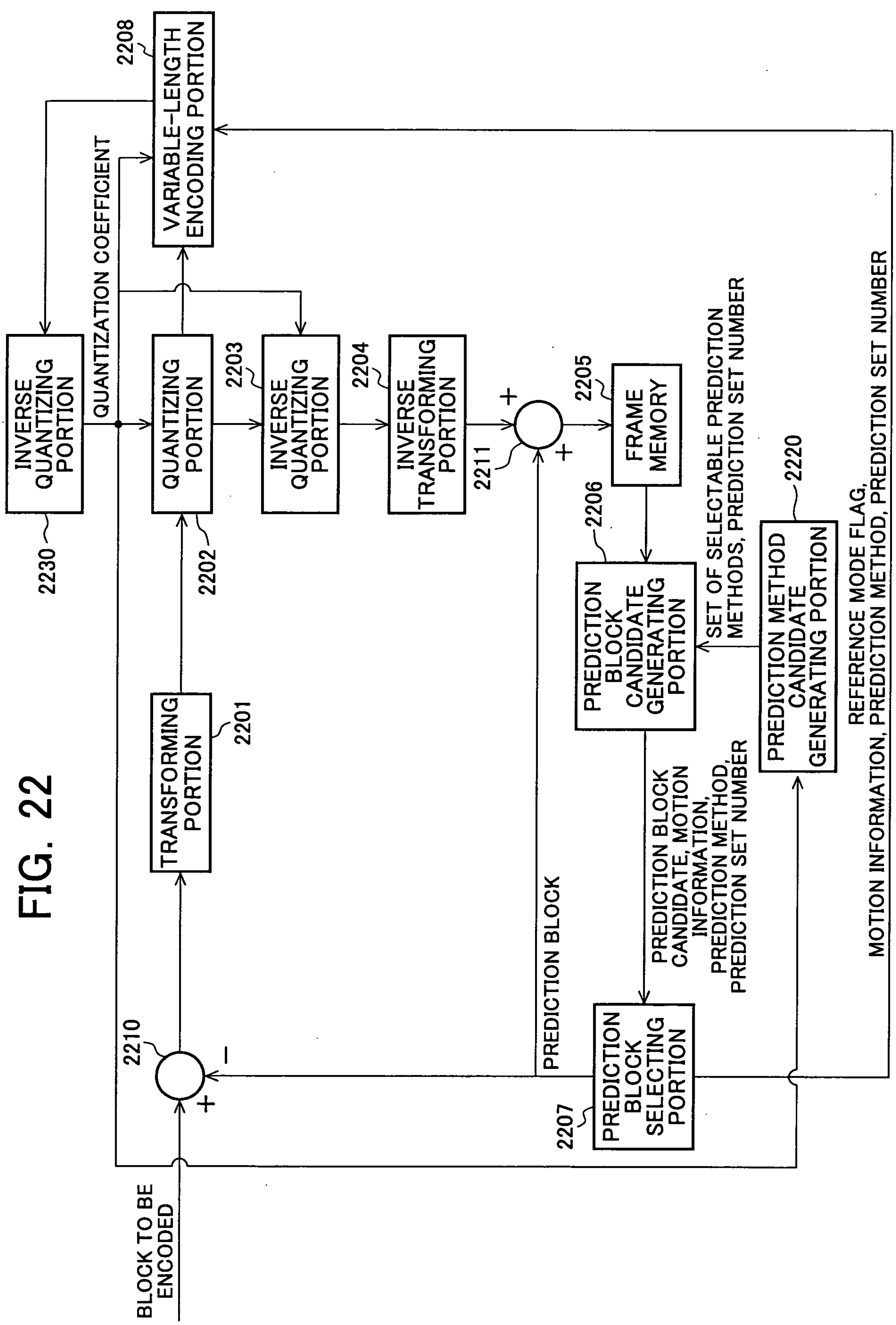
BLOCK TO BE ENCODED
2210
TRANSFORMING PORTION
2201
QUANTIZING PORTION
2202
INVERSE QUANTIZING PORTION
2230
QUANTIZATION COEFFICIENT
VARIABLE-LENGTH ENCODING PORTION
2208
INVERSE QUANTIZING PORTION
2203
INVERSE TRANSFORMING PORTION
2204
2211
FRAME MEMORY
2205
PREDICTION BLOCK CANDIDATE GENERATING PORTION
2206
SET OF SELECTABLE PREDICTION METHODS, PREDICTION SET NUMBER
PREDICTION METHOD CANDIDATE GENERATING PORTION
2220
PREDICTION BLOCK CANDIDATE, MOTION INFORMATION, PREDICTION METHOD, PREDICTION SET NUMBER
PREDICTION BLOCK
PREDICTION BLOCK SELECTING PORTION
2207
REFERENCE MODE FLAG, MOTION INFORMATION, PREDICTION METHOD, PREDICTION SET NUMBER

FIG. 23

| SET OF SELECTABLE PREDICTION METHODS (INDICATED BY INDEX) | PREDICTION SET NUMBER | QUANTIZATION COEFFICIENT(QP) |
|---|---|---|
| 0、3、4 | PREDICTION SET 1 | QP>32 |
| 0、1、2 | PREDICTION SET 3 | 16<QP≦32 |
| 0、1、2、3、4 | PREDICTION SET 2 | QP≦16 |

FIG. 24

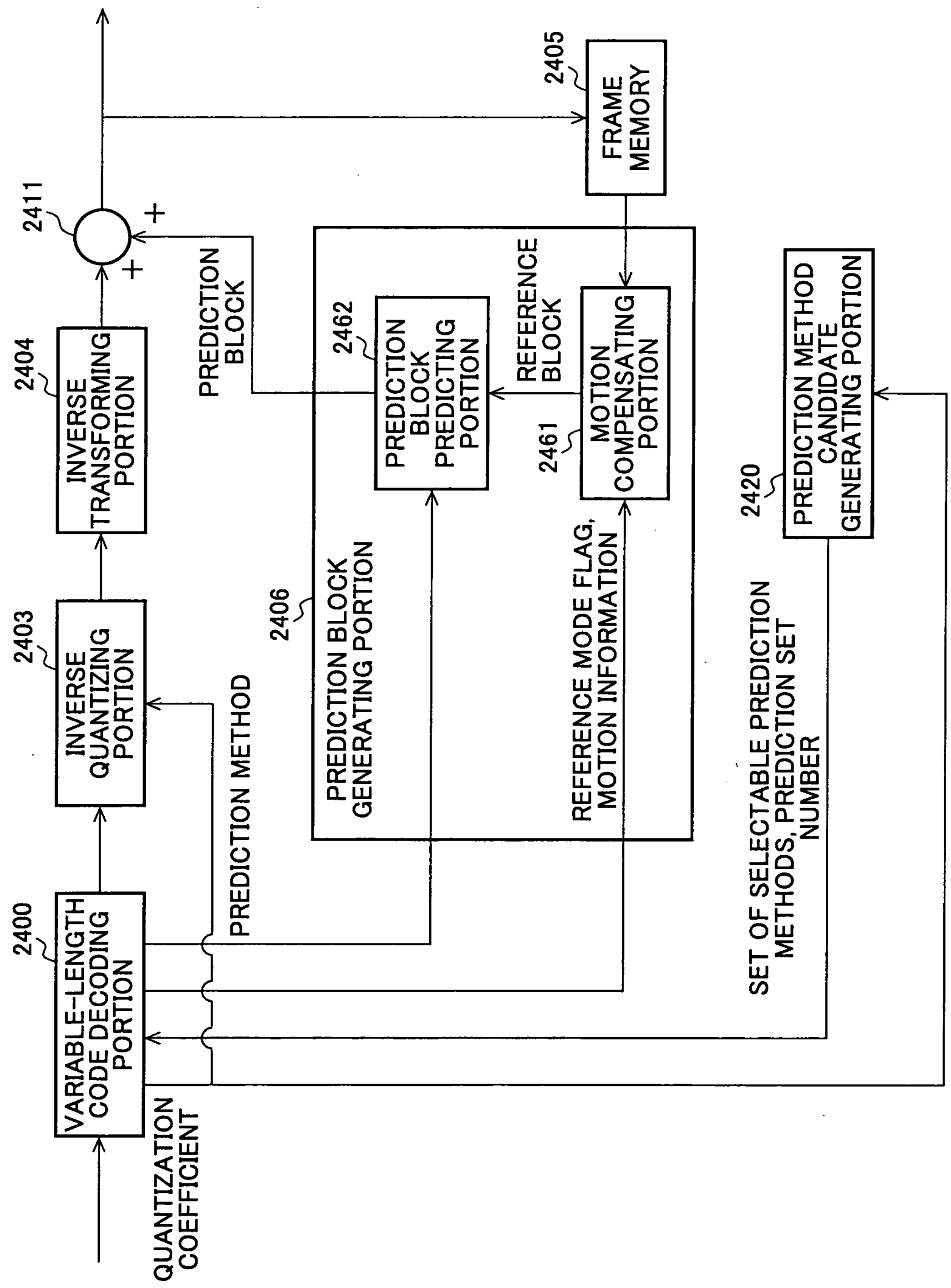

QUANTIZATION COEFFICIENT
2400
VARIABLE-LENGTH CODE DECODING PORTION
2403
INVERSE QUANTIZING PORTION
2404
INVERSE TRANSFORMING PORTION
2411
+
+
2405
FRAME MEMORY
PREDICTION METHOD
PREDICTION BLOCK
2406
PREDICTION BLOCK GENERATING PORTION
2462
PREDICTION BLOCK PREDICTING PORTION
REFERENCE BLOCK
2461
MOTION COMPENSATING PORTION
REFERENCE MODE FLAG, MOTION INFORMATION
2420
PREDICTION METHOD CANDIDATE GENERATING PORTION
SET OF SELECTABLE PREDICTION METHODS, PREDICTION SET NUMBER

FIG. 25

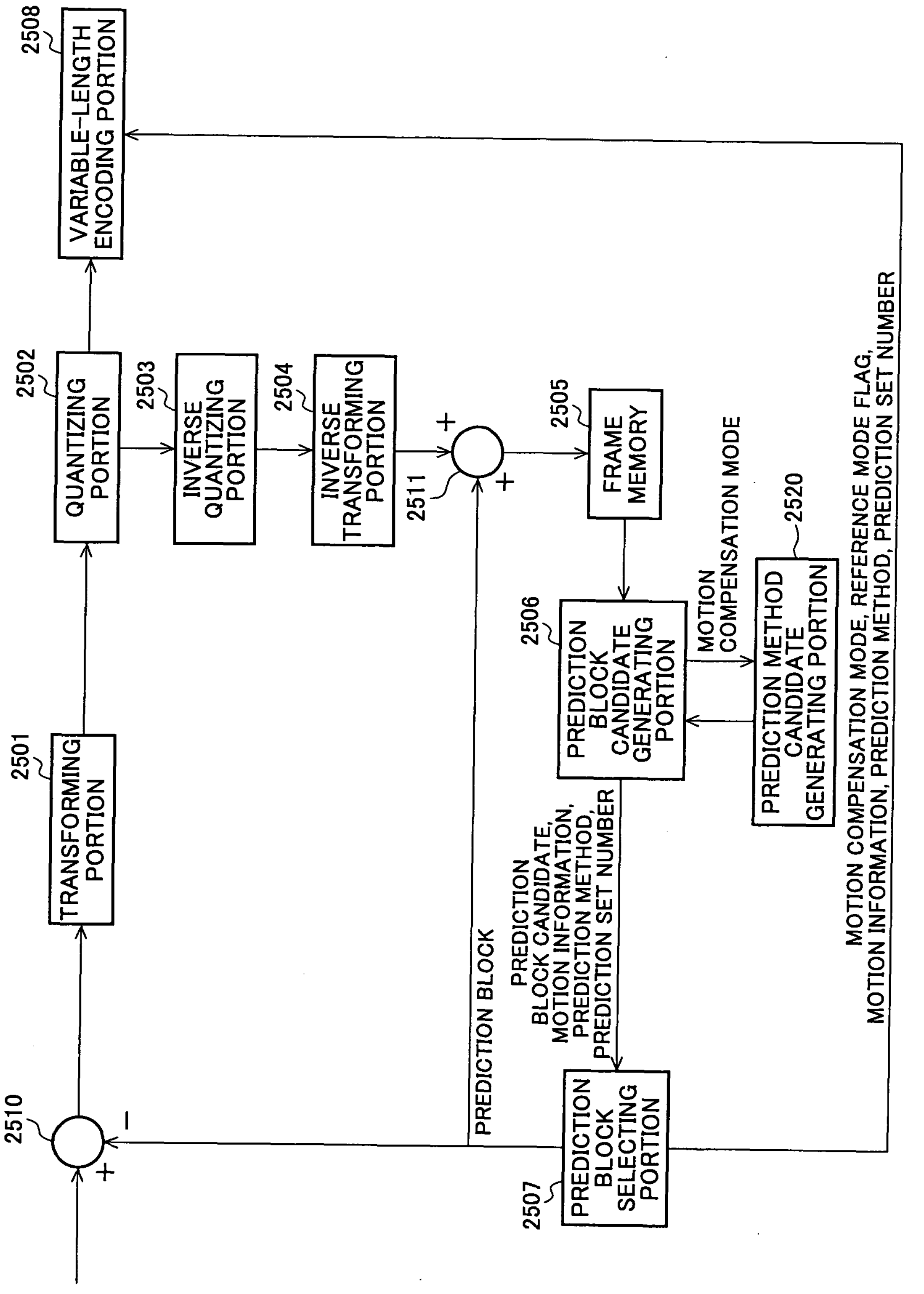
2501
TRANSFORMING PORTION
2502
QUANTIZING PORTION
2503
INVERSE QUANTIZING PORTION
2504
INVERSE TRANSFORMING PORTION
2505
FRAME MEMORY
2506
PREDICTION BLOCK CANDIDATE GENERATING PORTION
2507
PREDICTION BLOCK SELECTING PORTION
2508
VARIABLE-LENGTH ENCODING PORTION
2510
2511
2520
PREDICTION METHOD CANDIDATE GENERATING PORTION
MOTION COMPENSATION MODE
PREDICTION BLOCK
PREDICTION BLOCK CANDIDATE, MOTION INFORMATION, PREDICTION METHOD, PREDICTION SET NUMBER
MOTION COMPENSATION MODE, REFERENCE MODE FLAG, MOTION INFORMATION, PREDICTION METHOD, PREDICTION SET NUMBER
+
-
+
+

FIG. 26

| SET OF SELECTABLE PREDICTION METHODS (INDICATED BY INDEX) | PREDICTION SET NUMBER | MOTION COMPENSATION MODE |
|---|---|---|
| 0、3、4 | PREDICTION SET 1 | FIRST MOTION COMPENSATION MODE |
| 0、1、2 | PREDICTION SET 3 | SECOND MOTION COMPENSATION MODE |

FIG. 27

| SET OF SELECTABLE PREDICTION METHODS (INDICATED BY INDEX) | PREDICTION SET NUMBER | MOTION COMPENSATION MODE |
|---|---|---|
| 0、3、4 | PREDICTION SET 1 | FIRST MOTION COMPENSATION MODE |
| 0、1、2、3、4 | PREDICTION SET 2 | SECOND MOTION COMPENSATION MODE |

FIG. 28

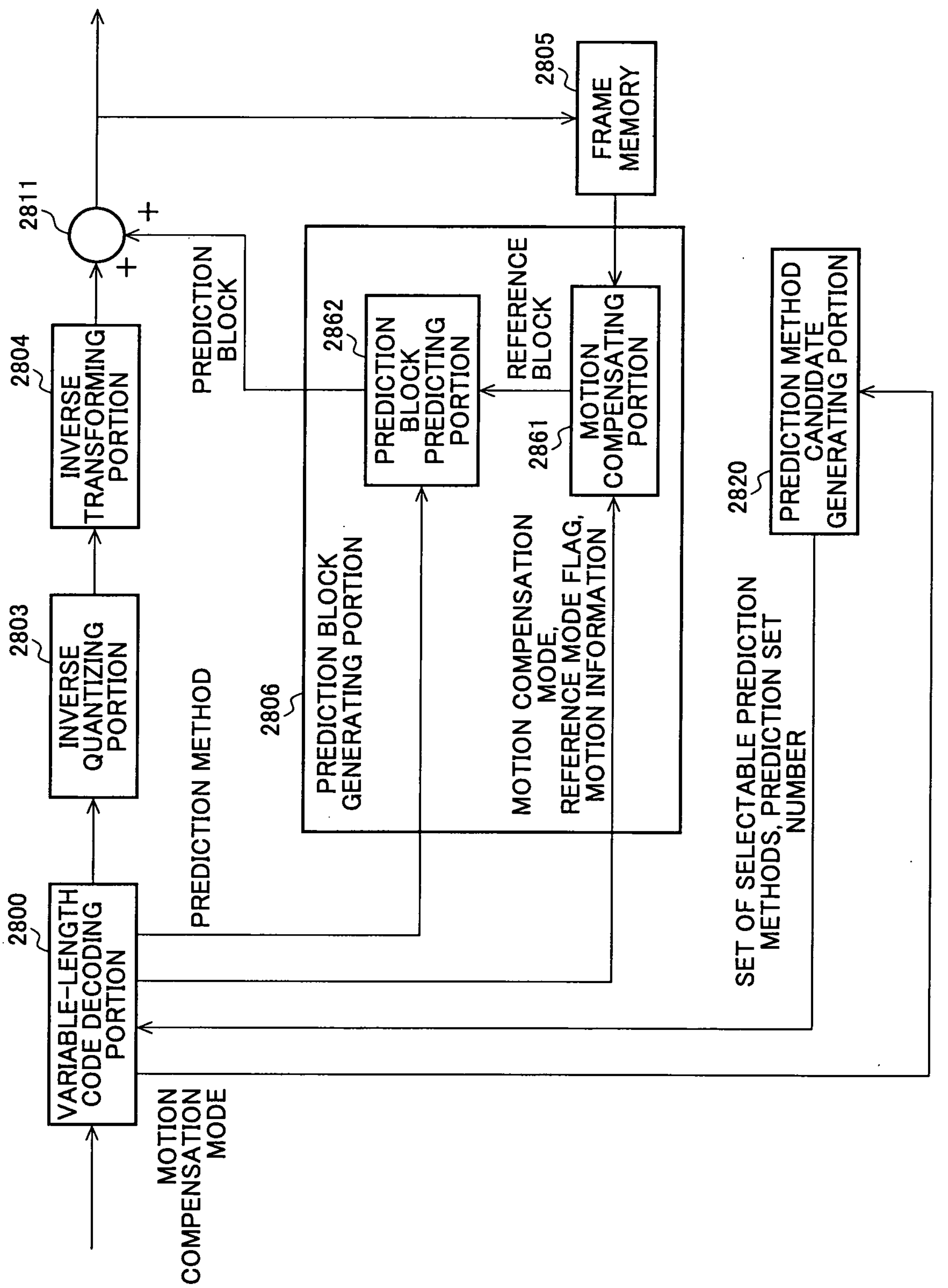
2800
VARIABLE-LENGTH CODE DECODING PORTION
MOTION COMPENSATION MODE
2803
INVERSE QUANTIZING PORTION
2804
INVERSE TRANSFORMING PORTION
2811
+
+
PREDICTION BLOCK
PREDICTION METHOD
2806
PREDICTION BLOCK GENERATING PORTION
2862
PREDICTION BLOCK PREDICTING PORTION
REFERENCE BLOCK
2861
MOTION COMPENSATING PORTION
MOTION COMPENSATION MODE, REFERENCE MODE FLAG, MOTION INFORMATION
2805
FRAME MEMORY
2820
PREDICTION METHOD CANDIDATE GENERATING PORTION
SET OF SELECTABLE PREDICTION METHODS, PREDICTION SET NUMBER

FIG. 29

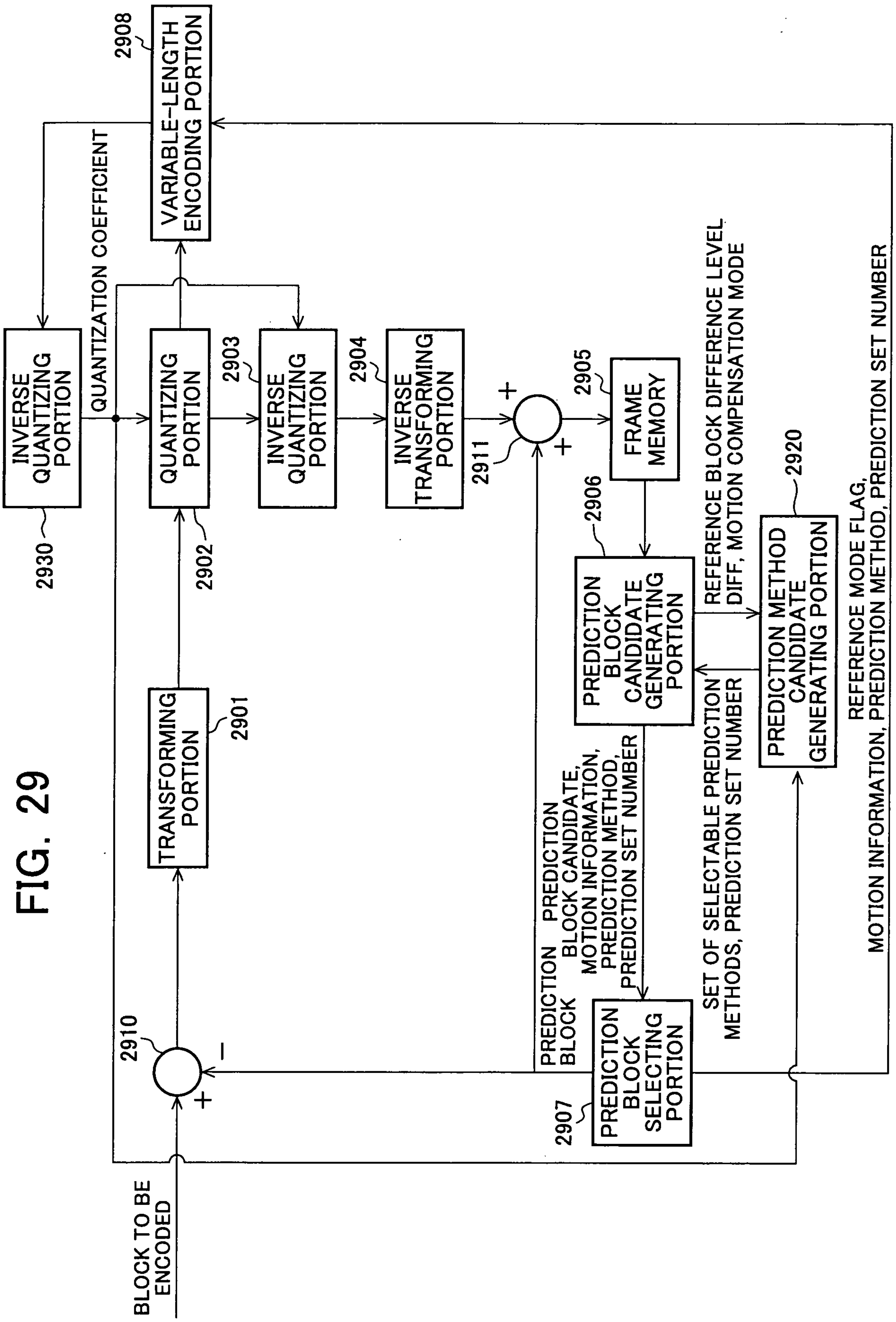
BLOCK TO BE ENCODED
2910
+
-
2901
TRANSFORMING PORTION
2902
QUANTIZING PORTION
2930
INVERSE QUANTIZING PORTION
QUANTIZATION COEFFICIENT
2908
VARIABLE-LENGTH ENCODING PORTION
2903
INVERSE QUANTIZING PORTION
2904
INVERSE TRANSFORMING PORTION
2911
+
+
2905
FRAME MEMORY
2906
PREDICTION BLOCK CANDIDATE GENERATING PORTION
REFERENCE BLOCK DIFFERENCE LEVEL DIFF, MOTION COMPENSATION MODE
2920
PREDICTION METHOD CANDIDATE GENERATING PORTION
SET OF SELECTABLE PREDICTION METHODS, PREDICTION SET NUMBER
PREDICTION BLOCK CANDIDATE, MOTION INFORMATION, PREDICTION METHOD, PREDICTION SET NUMBER
PREDICTION BLOCK
2907
PREDICTION BLOCK SELECTING PORTION
REFERENCE MODE FLAG, MOTION INFORMATION, PREDICTION METHOD, PREDICTION SET NUMBER

# FIG. 30

| SET OF SELECTABLE PREDICTION METHODS (INDICATED BY INDEX) | PREDICTION SET NUMBER | MOTION PREDICTION MODE | QUANTIZATION COEFFICIENT (QP) | REFERENCE BLOCK DIFFERENCE LEVEL DIFF |
|---|---|---|---|---|
| PREDICTION METHOD PREDICTION VALUE | PREDICTION SET 0 | FIRST MOTION COMPENSATION MODE | QP<30 | DIFF<300 |
| | | | QP≧30 | DIFF<500 |
| 0、1、2 | PREDICTION SET 3 | | QP<30 | DIFF≧300 |
| 0、3、4 | PREDICTION SET 1 | | QP≧30 | DIFF≧500 |
| 0、1、2 | PREDICTION SET 3 | SECOND MOTION COMPENSATION MODE | ALL QP | ALL DIFF |

FIG. 31

| SET OF SELECTABLE PREDICTION METHODS (INDICATED BY INDEX) | PREDICTION SET NUMBER | MOTION PREDICTION MODE | QUANTIZATION COEFFICIENT (QP) | REFERENCE BLOCK DIFFERENCE LEVEL DIFF |
|---|---|---|---|---|
| PREDICTION METHOD PREDICTION VALUE | PREDICTION SET 0 | FIRST MOTION COMPENSATION MODE | QP<30 | DIFF<300 |
| | | | QP≧30 | DIFF<500 |
| 0、1、2 | PREDICTION SET 3 | | QP<30 | DIFF≧300 |
| 0、3、4 | PREDICTION SET 1 | | QP≧30 | DIFF≧500 |
| PREDICTION METHOD PREDICTION VALUE | PREDICTION SET 0 | SECOND MOTION COMPENSATION MODE | QP<30 | DIFF<200 |
| | | | QP≧30 | DIFF<400 |
| 0、1、2 | PREDICTION SET 3 | | QP<30 | DIFF≧200 |
| | | | QP≧30 | DIFF≧400 |

FIG. 32

| SET OF SELECTABLE PREDICTION METHODS (INDICATED BY INDEX) | PREDICTION SET NUMBER | MOTION PREDICTION MODE | QUANTIZATION COEFFICIENT (QP) | REFERENCE BLOCK DIFFERENCE LEVEL DIFF |
|---|---|---|---|---|
| PREDICTION METHOD PREDICTION VALUE | PREDICTION SET 0 | FIRST MOTION COMPENSATION MODE | QP<30 | DIFF<300 |
| | | | QP≧30 | DIFF<500 |
| 0、3、4 | PREDICTION SET 1 | | QP<30 | DIFF≧300 |
| | | | QP≧30 | DIFF≧500 |
| PREDICTION METHOD PREDICTION VALUE | PREDICTION SET 0 | SECOND MOTION COMPENSATION MODE | QP<30 | DIFF<200 |
| | | | QP≧30 | DIFF<400 |
| 0、1、2 | PREDICTION SET 3 | | QP<30 | DIFF≧200 |
| | | | QP≧30 | DIFF≧400 |

# FIG. 33

| SET OF SELECTABLE PREDICTION METHODS (INDICATED BY INDEX) | PREDICTION SET NUMBER | MOTION PREDICTION MODE | QUANTIZATION COEFFICIENT (QP) | REFERENCE BLOCK DIFFERENCE LEVEL DIFF |
|---|---|---|---|---|
| PREDICTION METHOD PREDICTION VALUE | PREDICTION SET 0 | FIRST MOTION COMPENSATION MODE | QP<30 | DIFF<300 |
| | | | QP≧30 | DIFF<500 |
| 0、1、2 | PREDICTION SET 3 | | QP<30 | DIFF≧300 |
| 0、3、4 | PREDICTION SET 1 | | QP≧30 | DIFF≧500 |
| 0、1、2 | PREDICTION SET 3 | SECOND MOTION COMPENSATION MODE | QP<30 | ALL DIFF |
| 0、3、4 | PREDICTION SET 1 | | QP≧30 | ALL DIFF |

# FIG. 34

| SET OF SELECTABLE PREDICTION METHODS (INDICATED BY INDEX) | PREDICTION SET NUMBER | MOTION PREDICTION MODE | QUANTIZATION COEFFICIENT (QP) | REFERENCE BLOCK DIFFERENCE LEVEL DIFF |
|---|---|---|---|---|
| PREDICTION METHOD PREDICTION VALUE | PREDICTION SET 0 | FIRST MOTION COMPENSATION MODE | QP＜30 | DIFF＜300 |
| | | | QP≧30 | DIFF＜500 |
| 0, 1, 2 | PREDICTION SET 3 | | QP＜30 | DIFF≧300 |
| 0, 3, 4 | PREDICTION SET 1 | | QP≧30 | DIFF≧500 |
| 0, 3, 4 | PREDICTION SET 1 | SECOND MOTION COMPENSATION MODE | ALL QP | DIFF＜500 |
| 0, 1, 2 | PREDICTION SET 3 | | ALL QP | DIFF≧500 |

FIG. 35

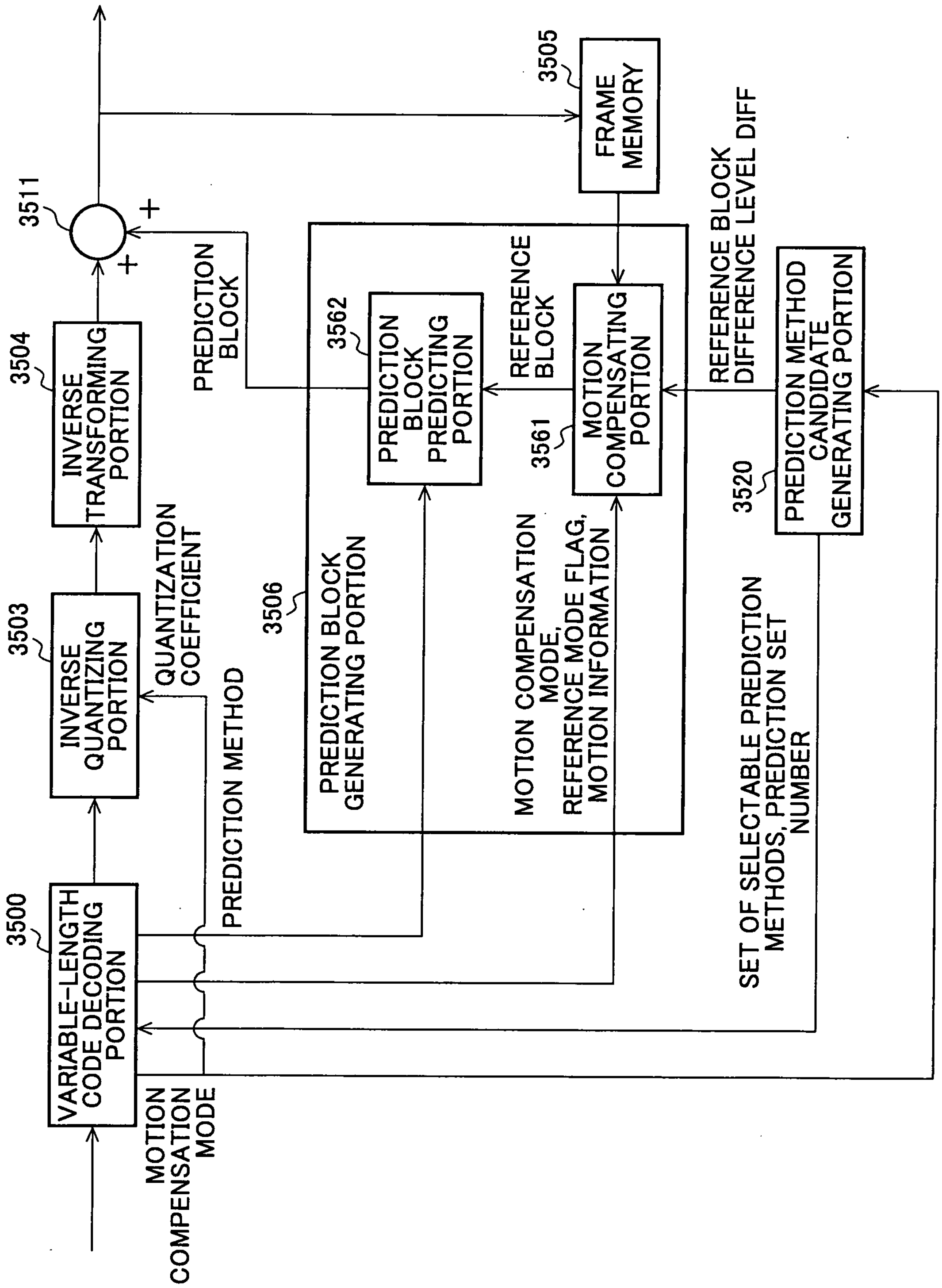
3500
VARIABLE-LENGTH CODE DECODING PORTION
3503
INVERSE QUANTIZING PORTION
3504
INVERSE TRANSFORMING PORTION
3511
+
+
3505
FRAME MEMORY
QUANTIZATION COEFFICIENT
PREDICTION METHOD
PREDICTION BLOCK
3506
PREDICTION BLOCK GENERATING PORTION
3562
PREDICTION BLOCK PREDICTING PORTION
REFERENCE BLOCK
3561
MOTION COMPENSATING PORTION
MOTION COMPENSATION MODE, REFERENCE MODE FLAG, MOTION INFORMATION
REFERENCE BLOCK DIFFERENCE LEVEL DIFF
3520
PREDICTION METHOD CANDIDATE GENERATING PORTION
SET OF SELECTABLE PREDICTION METHODS, PREDICTION SET NUMBER
MOTION COMPENSATION MODE

FIG. 36

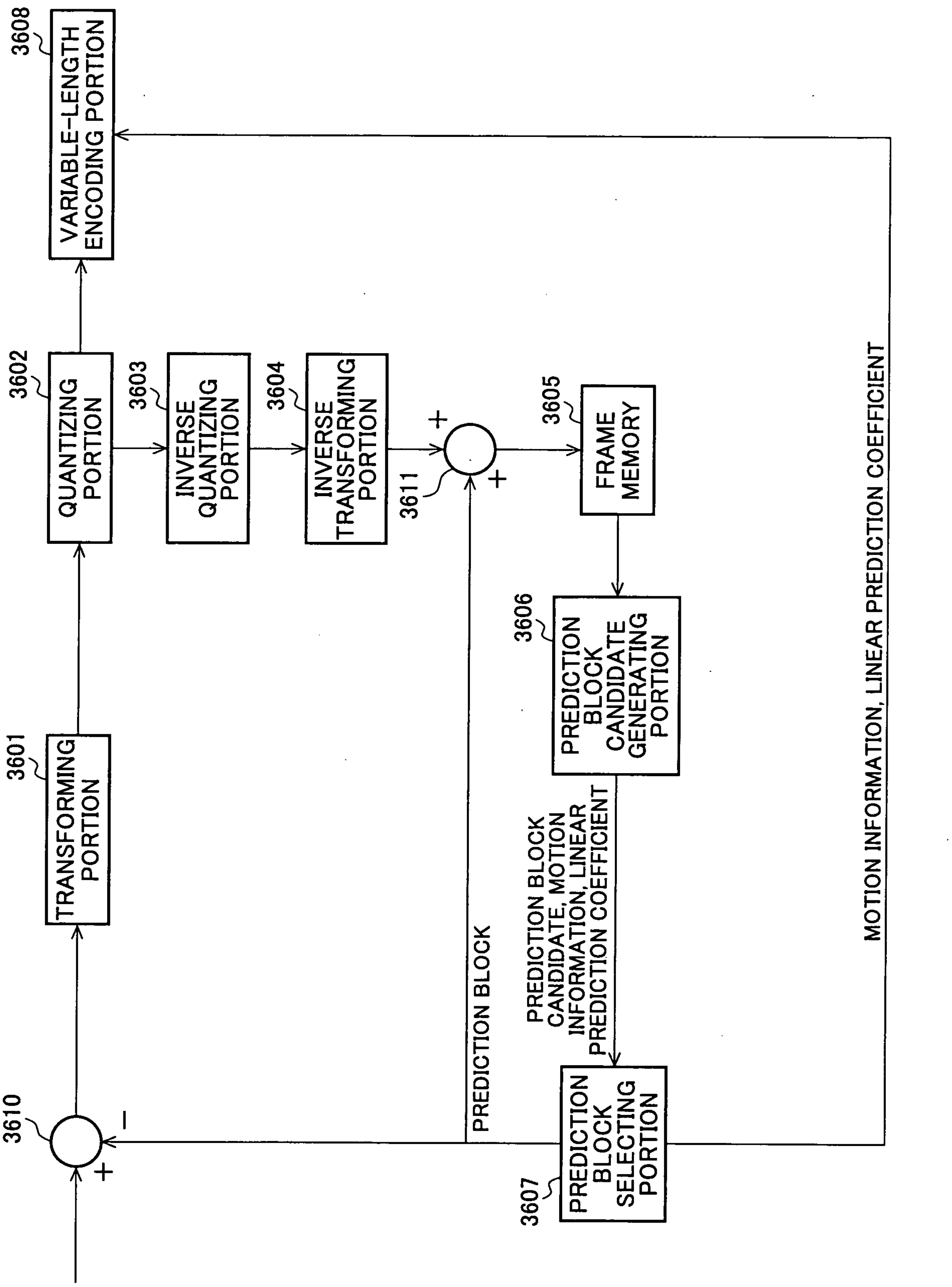
3601
TRANSFORMING PORTION
3602
QUANTIZING PORTION
3603
INVERSE QUANTIZING PORTION
3604
INVERSE TRANSFORMING PORTION
3605
FRAME MEMORY
3606
PREDICTION BLOCK CANDIDATE GENERATING PORTION
3607
PREDICTION BLOCK SELECTING PORTION
3608
VARIABLE-LENGTH ENCODING PORTION
3610
3611
+
-
+
+
PREDICTION BLOCK
PREDICTION BLOCK CANDIDATE, MOTION INFORMATION, LINEAR PREDICTION COEFFICIENT
MOTION INFORMATION, LINEAR PREDICTION COEFFICIENT

FIG. 37

| LINEAR PREDICTION COEFFICIENT | | INDEX INDICATIVE OF LINEAR PREDICTION COEFFICIENT |
|---|---|---|
| W1 | W2 | |
| 0.5 | 0.5 | 0 |
| 2 | −1 | 1 |

## INTERNATIONAL SEARCH REPORT

International application No.
PCT/JP2008/065639

A. CLASSIFICATION OF SUBJECT MATTER
*H04N7/32*(2006.01)i

According to International Patent Classification (IPC) or to both national classification and IPC

B. FIELDS SEARCHED

Minimum documentation searched (classification system followed by classification symbols)
H04N7/26-7/68

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2007-81518 A (Victor Company Of Japan, Ltd.), 29 March, 2007 (29.03.07), Full text; all drawings (Family: none) | 1-8 |
| A | JP 2004-7377 A (Toshiba Corp.), 08 January, 2004 (08.01.04), Full text; all drawings & US 2004/0141615 A1 & EP 1414245 A1 & WO 2003/088679 A1 | 1-8 |
| A | JP 2004-7379 A (Toshiba Corp.), 08 January, 2004 (08.01.04), Full text; all drawings & US 2003/0215014 A1 & EP 1467569 A1 & WO 2003/063502 A1 | 1-8 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 November, 2008 (25.11.08) | 02 December, 2008 (02.12.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004007379 A